(19) Europäisches Patentamt
European Patent Office
Office européen des brevets

(11) Veröffentlichungsnummer: **0 345 577 B1**

# (12) EUROPÄISCHE PATENTSCHRIFT

(45) Veröffentlichungstag der Patentschrift: **08.12.93**

(51) Int. Cl.$^5$: **C09B 62/503**, C09B 62/20

(21) Anmeldenummer: **89109605.9**

(22) Anmeldetag: **27.05.89**

## (54) Reaktivfarbstoffe.

(30) Priorität: **10.06.88 DE 3819752**

(43) Veröffentlichungstag der Anmeldung:
**13.12.89 Patentblatt 89/50**

(45) Bekanntmachung des Hinweises auf die Patenterteilung:
**08.12.93 Patentblatt 93/49**

(84) Benannte Vertragsstaaten:
**CH DE FR GB LI**

(56) Entgegenhaltungen:
**EP-A- 0 084 314**
**EP-A- 0 128 340**
**EP-A- 0 192 067**
**EP-A- 0 203 505**

(73) Patentinhaber: **BAYER AG**

**D-51368 Leverkusen(DE)**

(72) Erfinder: **Jäger, Horst, Dr.**
**Carl Rumpff-Strasse 37**
**D-5090 Leverkusen 1(DE)**
Erfinder: **Stöhr, Frank-Michael, Dr.**
**Am Thelen Siefen 10**
**D-5068 Odenthal(DE)**
Erfinder: **Schündehütte, Karl Heinz, Prof.Dr.**
**Klief 75**
**D-5090 Leverkusen 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Aus EP-A 128 340, EP-A 192 067 und EP-A 84 314 sind bereits primäre Disazoreaktivfarbstoffe bekannt. Primäre Disazoreaktivfarbstoffe werden erhalten durch Reaktion von zwei Äquivalenten Diazokomponente mit einem bifunktionellen Kupplungspartner oder bei der Kombination einer Bisdiazoverbindung mit zwei Äquivalente einer Kupplungskomponente hergestellt. Dabei können als monofunktionelles Reagens entweder zwei Äquivalente einer Verbindung oder in stufenweisem Einsatz je ein Äquivalent von zwei verschiedenen Partnern eingesetzt werden.

Die sekundären Disazofarbstoffe entstehen aus einer Azoverbindung, die noch eine diazotierbare Aminogruppe trägt. Durch Diazotierung und Umsatz mit einer weiteren Kupplungskomponente entsteht ein Disazofarbstoff.

Gegenstand der vorliegenden Erfindung sind Reaktivfarbstoffe der Formel

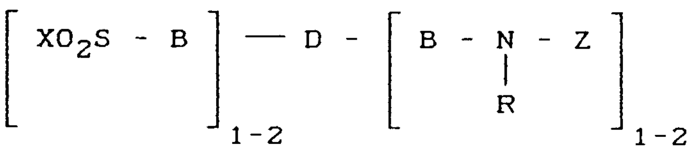

(1)

worin

D = Rest eines Farbstoffes der metallfreien Monoazo-, metallhaltigen Monoazo-, Anthrachinon-, Formazan- und Dioxazin-Reihe,

X = $CH=CH_2$ oder $CH_2CH_2$-Y, worin

Y = alkalisch eliminierbarer Rest, z. B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3$ $^+A^-$,

B = direkte Bindung oder Brückenglied an ein Ring C-Atom eines aromatisch-carbocyclischen oder an ein Ring C-Atom oder N-Atom eines aromatisch-heterocyclischen Ringes in D

R = H oder gegebenenfalls substituiertes $C_1$-$C_4$-Alkyl

Z = faserreaktiver Rest der Formel

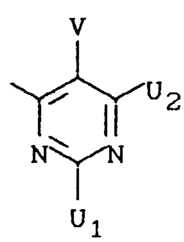

(2)

worin

V = H, Cl oder Br

$U_1$, $U_2$ = H, Cl, F mit der Maßgabe, daß $U_1$ verschieden von $U_2$ ist und einer der Reste für F steht.

Die Erfindung betrifft weiterhin metallfreie sekundäre Disazofarbstoffe der Formel (1)

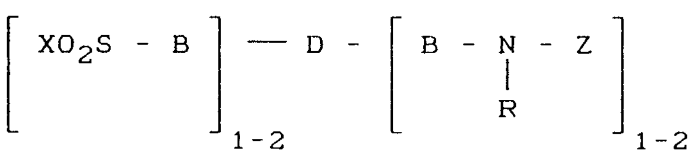

(1)

worin

X, Y, B, R und Z die oben angegebene Bedeutung haben,

dadurch gekennzeichnet, daß sie den folgenden Formeln 31 bis 35 entsprechen

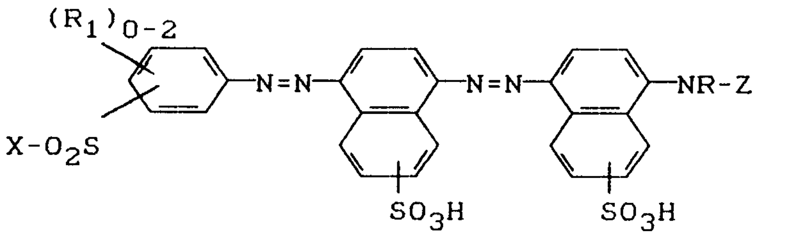

(31)

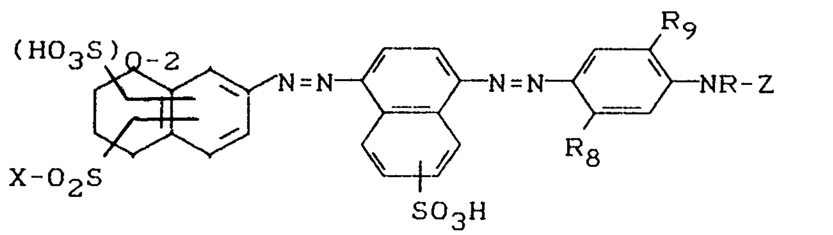

(32)

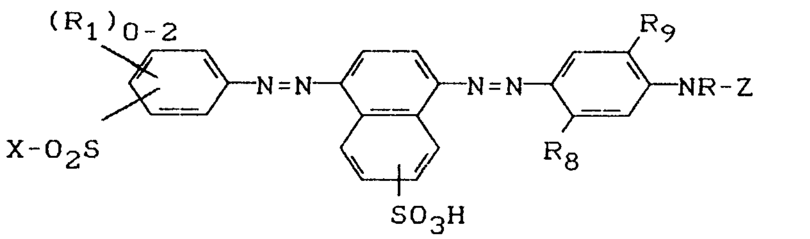

(33)

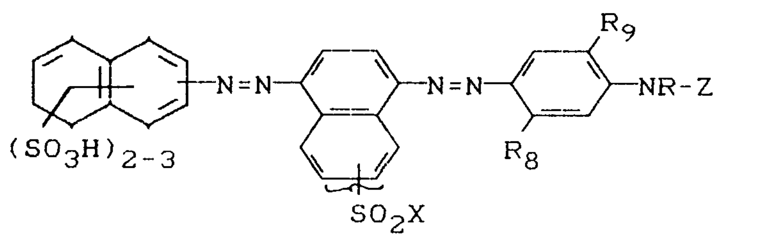

(34)

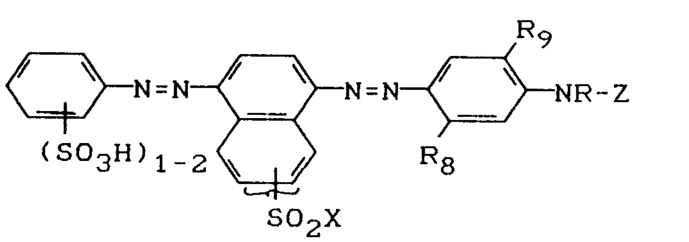

(35)

worin bedeuten

$R_1$ = $C_1$-$C_4$-Alkyl, $C_1$-$C_4$-Alkoxy, Cl, Br, $SO_3H$, COOH

$R_8$ = H, $C_1$-$C_4$-Alkyl, $C_1$-$C_4$-Alkoxy, Acylamino, insbesondere $C_1$-$C_4$-Alkylcarbonylamino, $C_1$-$C_4$-Alkylsulfonylamino, Aminocarbonylamino, gegebenenfalls substituiertes Phenylcarbonylamino, Cl, Br

$R_9$ = H, $C_1$-$C_4$-Alkyl, $C_1$-$C_4$-Alkoxy, OH, $SO_3H$.

Geeignete Brückenglieder B, die gleich oder verschieden sein können, sind beispielsweise:

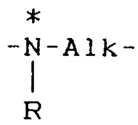
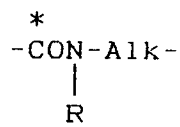
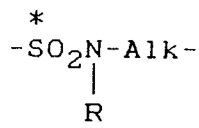

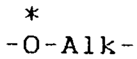
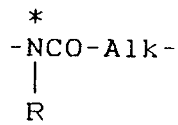
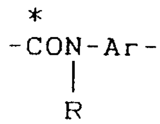

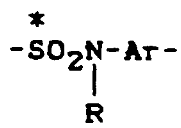
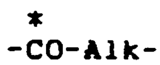
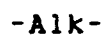

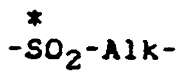
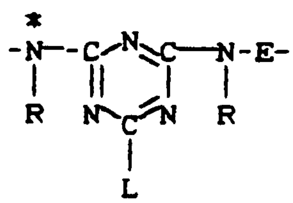
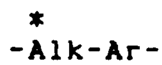

wobei der Stern die Verknüpfungsstelle mit D markiert,

R die oben genannte Bedeutung hat,

Alk = gegebenenfalls durch Heteroatome oder Heteroatome wie N, O oder S enthaltende Gruppierungen unterbrochenes, geradkettiges oder verzweigtes $C_1$-$C_6$-Alkylen,

Ar = gegebenenfalls substituiertes Phenylen oder Naphthylen oder Rest eines Diphenyls oder Stilbens,

E = Alk oder Ar oder

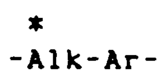

wobei Alk oder Ar weitere Substituenten, beispielsweise F, Cl, Br, $C_1$-$C_4$-Alkyl, $C_1$-$C_4$-Alkoxy, Carboxy oder Sulfo enthalten können,

L = F, Cl, Br, gegenbenenfalls substituiertes Amino, OH, $C_1$-$C_4$-Alkoxy, gegebenenfalls substituiertes Phenoxy, $C_1$-$C_4$-Alkylthio bedeutet.

Der Rest D in Formel (1) kann in der üblichen Weise substituiert sein. Als Beispiele für weitere Substituenten am Rest D seien genannt: Alkylgruppen mit 1 bis 4 Kohlenstoffatomen wie Methyl, Ethyl, Propyl, Isopropyl oder Butyl, Alkoxygruppen mit 1 bis 4 Kohlenstoffatomen wie Methoxy, Ethoxy, Propoxy, Isopropoxy oder Butoxy, Acylaminogruppen mit 1 bis 8 Kohlenstoffatomen wie Acetylamino, Propionylamino oder Benzoylamino, Amino, Alkylamino mit 1 bis 4 Kohlenstoffatomen wie Methylamino, Ethylamino, Propylamino, Isopropylamino oder Butylamino, Phenylamino, N,N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest wie Methoxycarbonyl oder Ethoxycarbonyl, Alkylsulfonyl mit 1 bis 4 Kohlenstoffatomen wie Methylsulfonyl oder Ethylsulfonyl, Trifluormethyl, Nitro, Cyano, Halogen wie Fluor, Chlor oder Brom, Carbamoyl, N-Alkylcarbamoyl mit 1 bis 4 Kohlenstoffatomen im Alkylrest wie N-Methylcarbamoyl oder N-Ethylcarbamoyl, Sulfamoyl, N-Alkylsulfamoyl mit 1 bis 4 Kohlenstoffatomen wie N-Methylsulfamoyl, N-Propylsulfamoyl, N-Isopropylsulfamoyl oder N-Butylsulfamoyl, N-(4-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Der Rest R ist, falls es sich um einen Alkylrest handelt, geradkettig oder verzweigt; er kann weitersubstituiert sein, z. B. durch Halogen, Hydroxy, Cyan, $C_{1-4}$-Alkoxy, Carboxy oder Sulfo. Als Beispiele für R seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, Sulfomethyl, β-Sulfoethyl, Aminosulfonylmethyl und β-Sulfatoethyl. Vorzugsweise ist R Wasserstoff, Methyl oder Ethyl.

Beispiele für faserreaktive Reste Z sind folgende:

2-Fluor-5,6-dichlor-pyrimidinyl-4
6-Fluor-2,5-dichlor-pyrimidinyl-4
2-Fluor-5-chlor-pyrimidinyl-4
2-Fluor-6-chlor-pyrimidinyl-4
2-Fluor-pyrimidinyl-4
6-Fluor-5-chlor-pyrimidinyl-4
6-Fluor-2-chlor-5-brom-pyrimidinyl-4
6-Fluor-5-brom-pyrimidinyl-4

Bevorzugt sind Reaktivfarbstoffe der Formel (1), worin D der Rest eines Monoazofarbstoffes ist. In diesem Falle sind die Reaktivreste, d. h. der Sulfonylrest-$SO_2X$ und der Fluorpyrimidylrest, an verschiedene oder an gleiche Reste von Ausgangskomponenten, nämlich Diazo- und Kupplungskomponenten, gebunden. Die Reaktivfarbstoffe haben dann z. B. die Formel

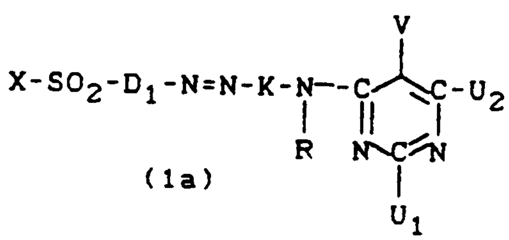

(1a)

oder

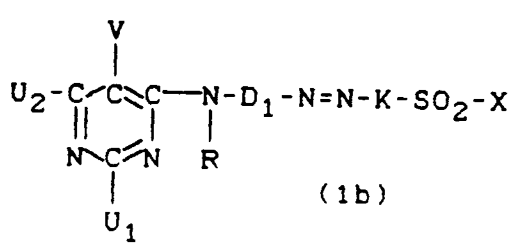

(1b)

worin R, X, $U_1$, $U_2$ und V die unter Formel (1) angegebene Bedeutung haben und $D_1$ der Rest einer Diazokomponente, und K der Rest einer Kupplungskomponente ist. Falls zwei X-$SO_2$-Reaktivreste vorhanden sind, so sind diese insbesondere an den Rest der Diazokomponente gebunden; und für den Fall, daß das Farbstoffmolekül zwei Fluorpyrimidylreste enthält, befinden sich diese vorzugsweise in der Kupplungskomponente. Es sind somit, entsprechend den Indizes, welche den Reaktivresten in Formel (1) angefügt sind, auch tri- und tetrareaktive Farbstoffe in Betracht zu ziehen. Die obigen Erläuterungen gelten sinngemäß auch für Metallkomplexazofarbstoffe.

Beispiele für $D_1$ sind vorzugsweise gegebenenfalls durch $SO_3H$, Chlor, $C_1$-$C_4$-Alkoxy, $C_1$-$C_4$-Alkyl, Carbalkoxy oder Sulfonamido substituiertes Phenylen, gegebenenfalls durch $SO_3H$, Chlor, $C_1$-$C_4$-Alkoxy

oder $C_1$-$C_4$ Alkyl substituiertes Naphthylen, gegebenenfalls durch $SO_3H$ substituiertes 4-(Phenylazo)-phenylen und gegebenenfalls durch $SO_3H$ substituiertes Biphenylen.

K steht beispielsweise für den Rest einer Kupplungskomponente der Hydroxybenzol-, Hydroxynaphthalin-, Aminobenzol-, Aminonaphthalin-, Aminohydroxynaphthalin-Reihe, für einen 5-Hydroxy-3-methyl- (bzw. -carboxy)-pyrazol, einen 6-Hydroxy-2-pyridon- oder einen gegebenenfalls $C_1$-$C_4$-Alkyl- bzw. $C_1$-$C_4$-Alkoxy-ringsubstituierten Acetessigsäurearylid-Rest.

Bevorzugte Farbstoffe sind solche der Formeln

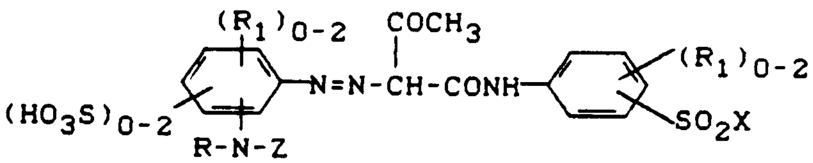

(3)

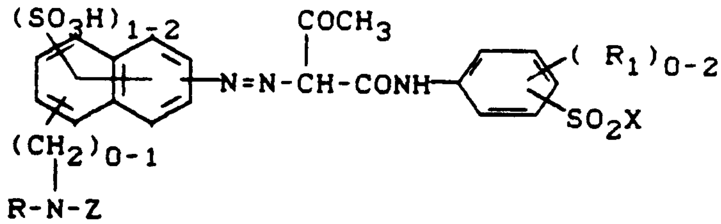

(4)

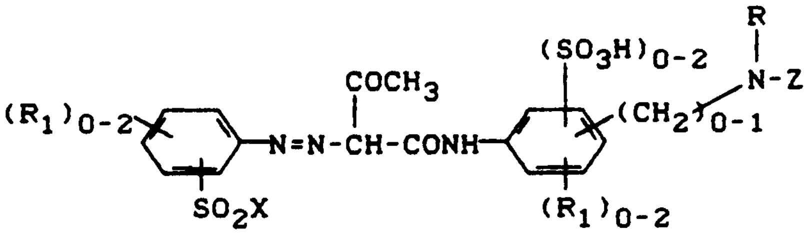

(5)

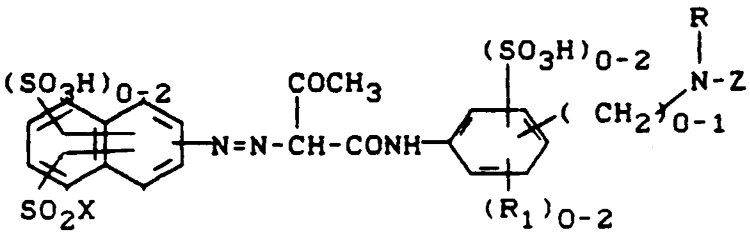

(6)

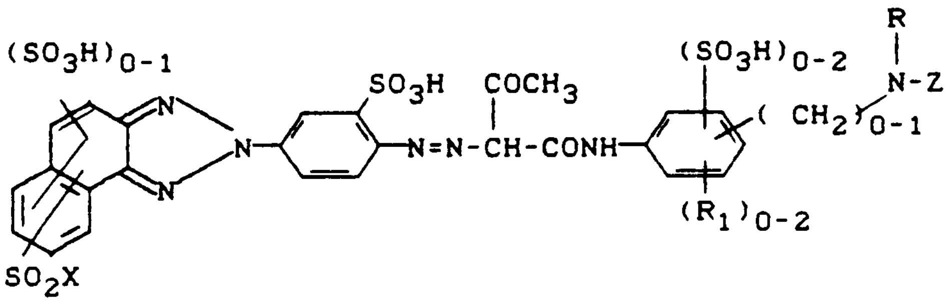

(7)

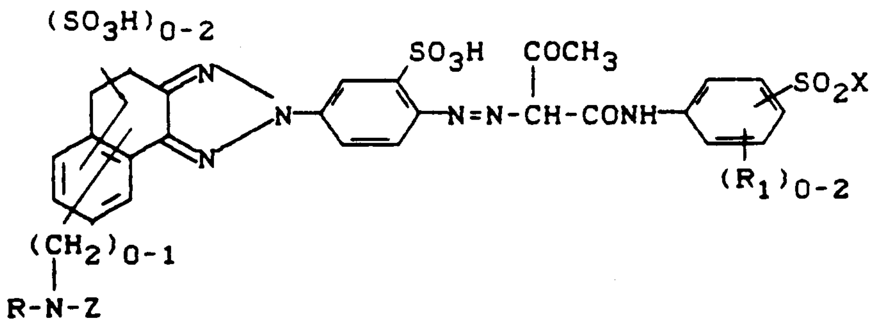

(8)

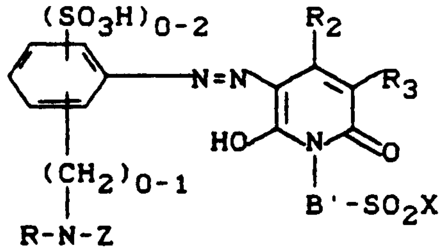

(9)

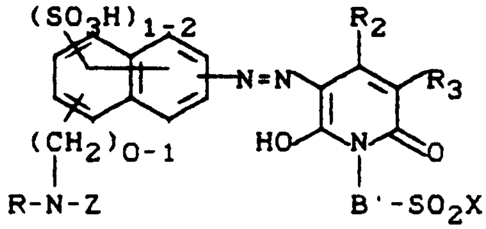

(10)

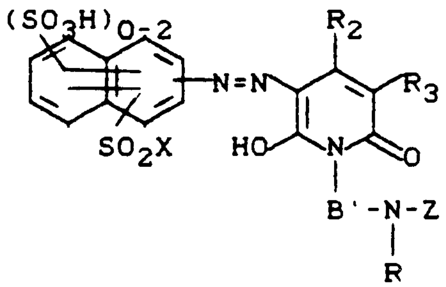

(11)

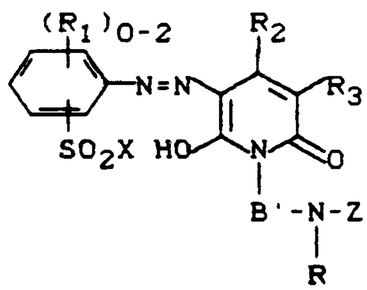

(12)

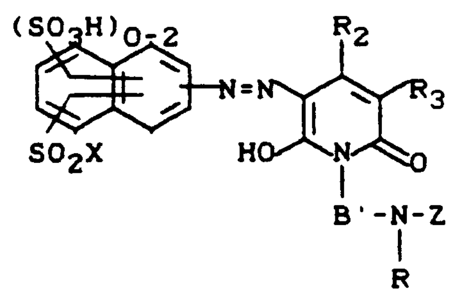

(13)

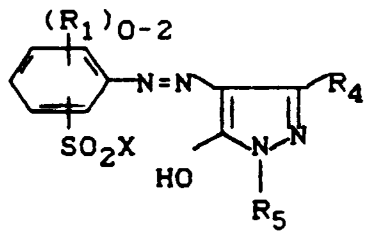

(14)

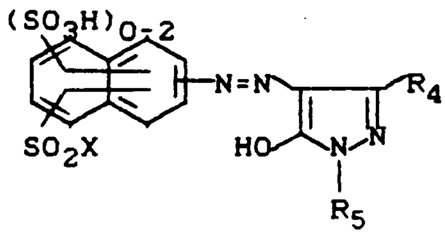

(15)

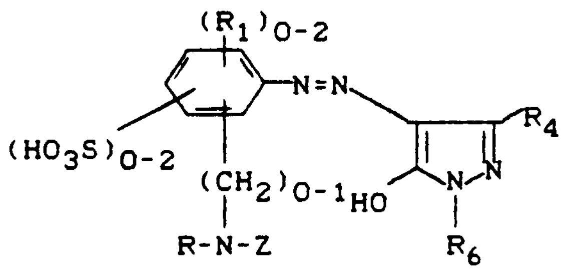

(16)

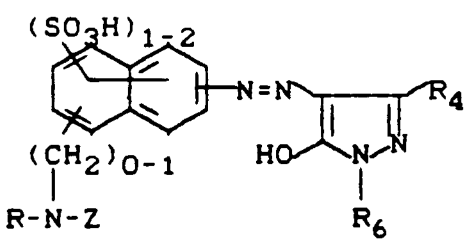

(17)

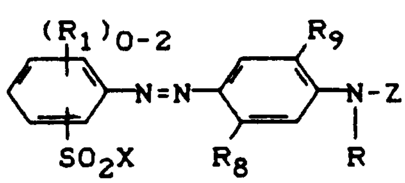

(18)

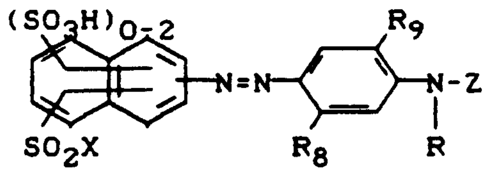

(19)

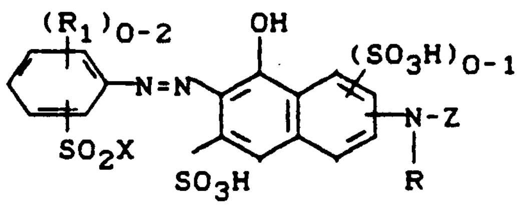

(20)

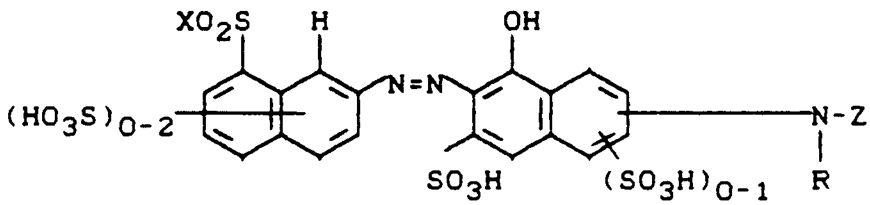

(21)

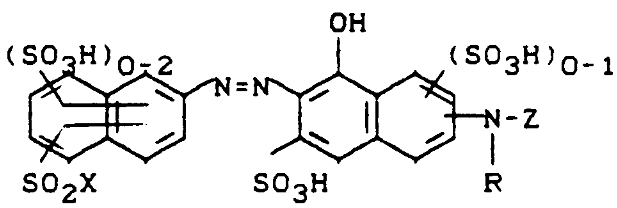

(22)

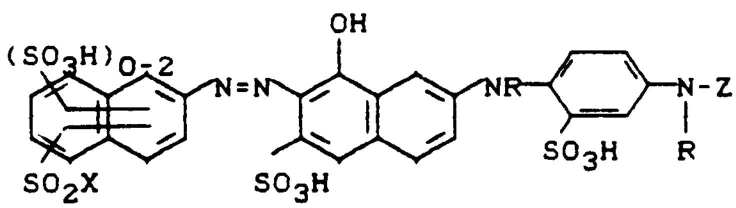

(23)

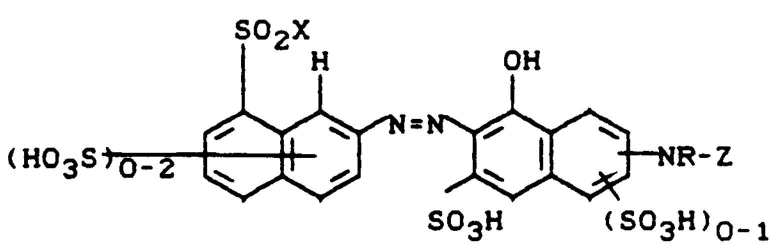

(24)

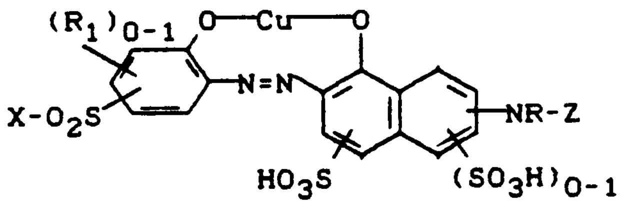

(25)

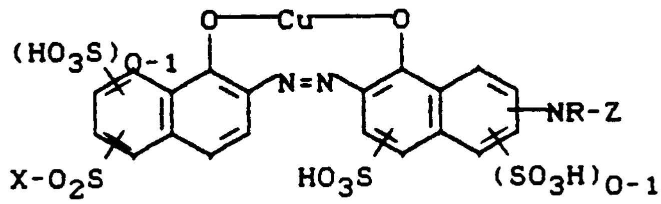

(26)

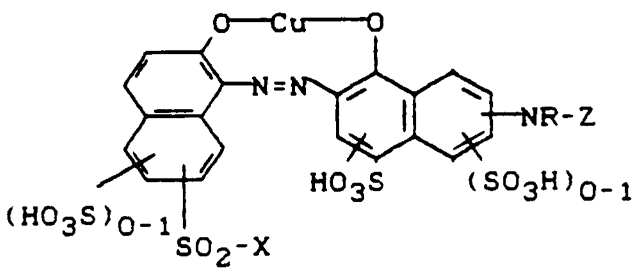

(27)

1:2-Metallkomplexe von Farbstoffen

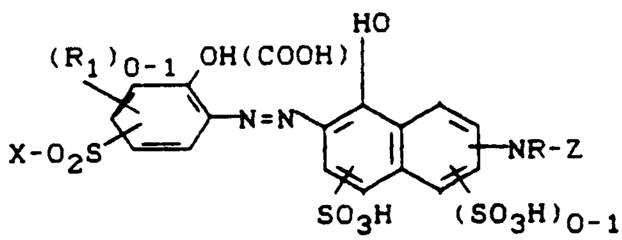

(28)

insbesondere die Cr- und Co-Komplexe, die zwei Farbstoffe (28) oder einen Farbstoff (28) und einen beliebigen anderen metallkomplexbildenden Farbstoff, insbesondere einen Azo- oder Azomethinfarbstoff enthalten.

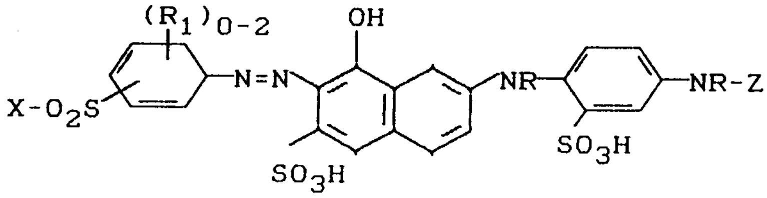

(29)

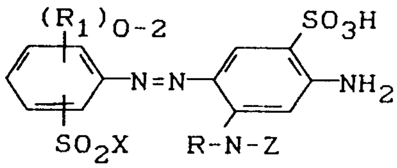

(30)

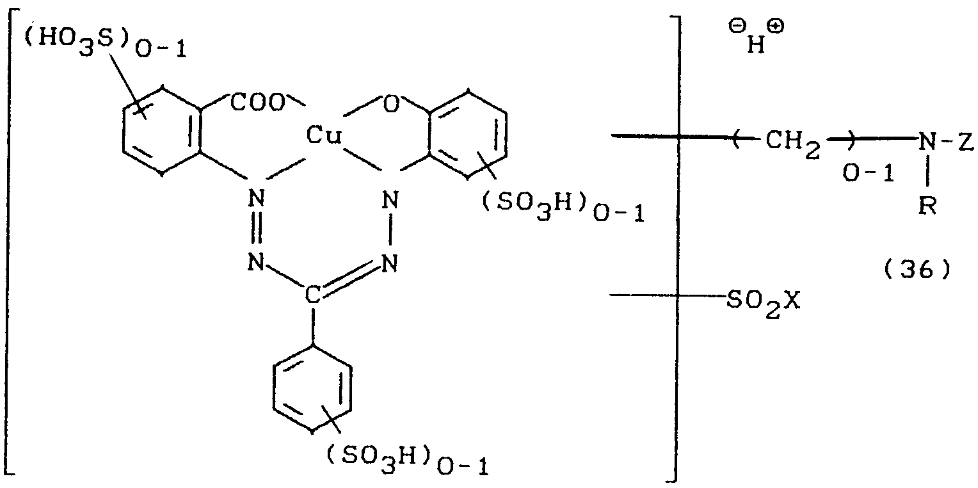

(36)

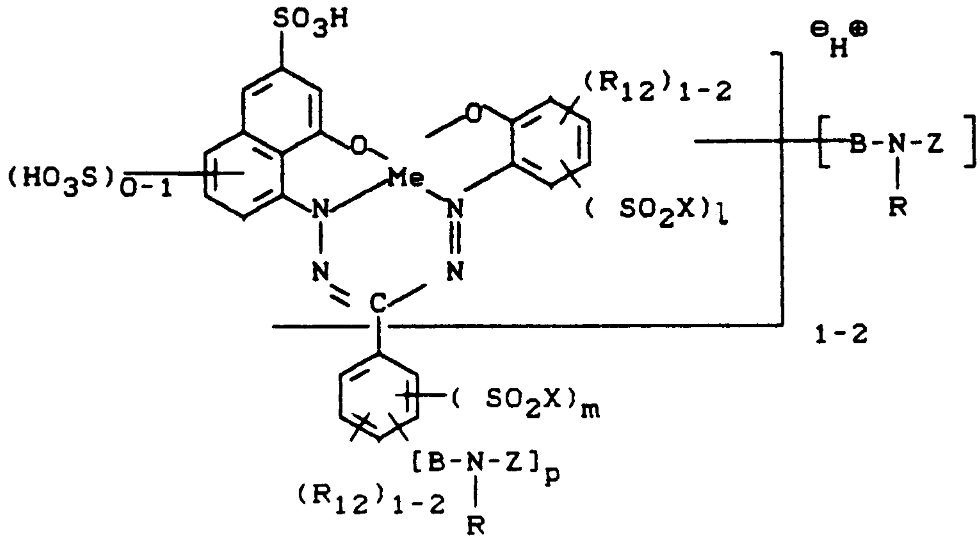

(37)

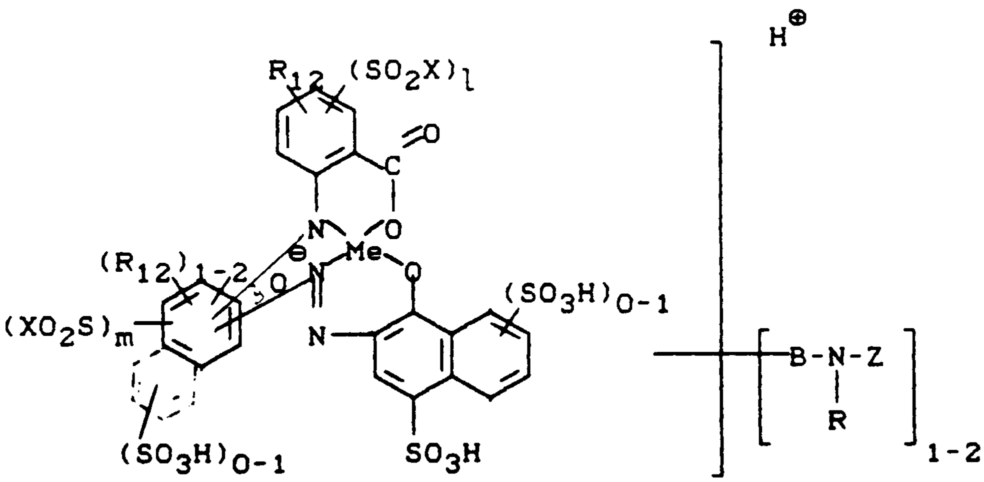

(38)

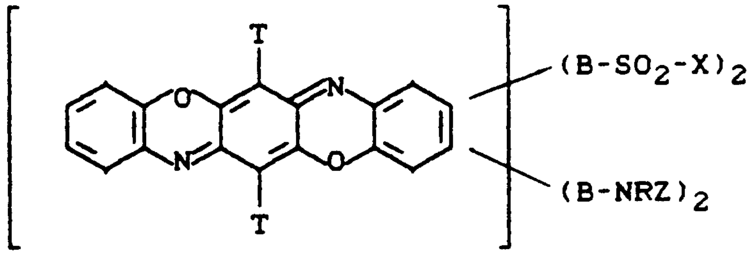

(39)

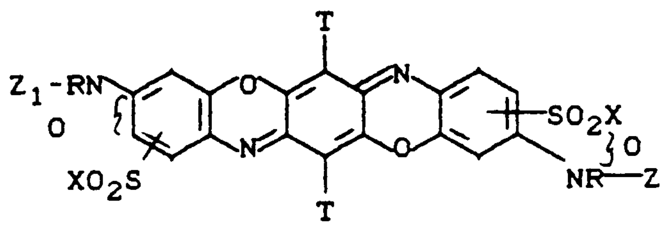

(40)

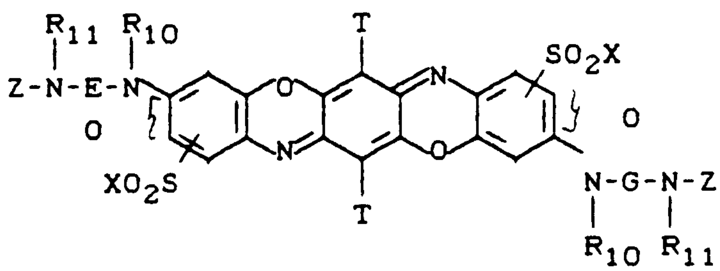

(41)

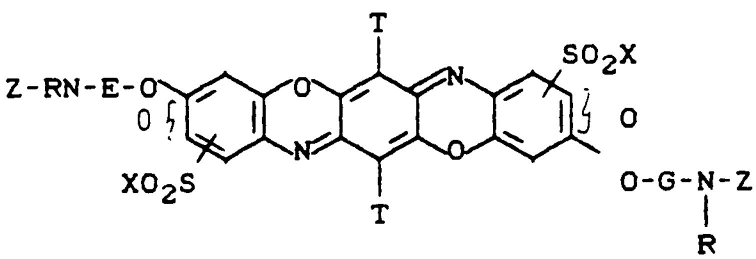

(42)

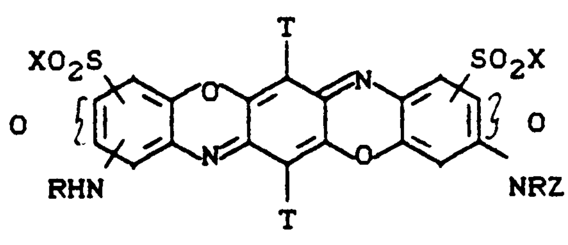

(43)

worin

- $R_1$ = $C_1$-$C_4$-Alkyl, $C_1$-$C_4$-Alkoxy, Cl, Br, $SO_3H$, COOH
- $R_2$ = H, $C_1$-$C_4$-Alkyl, COOH, $CH_2SO_3H$
- $R_3$ = H, $SO_3H$, $CH_2SO_3H$, Cl, $CONH_2$, Carbonsäure-mono- und -di-$C_1$-$C_4$-alkylamid, $C_1$-$C_4$-Alkylsulfonyl
- $R_4$ = $CH_3$, COOH
- $R_5$ =

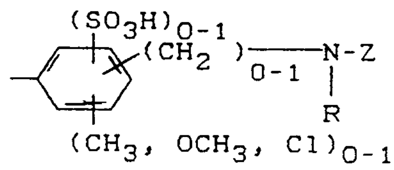

$R_6$ =

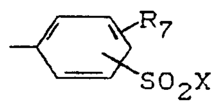

| | |
|---|---|
| $R_7$ = | H, $C_1$-$C_4$-Alkyl, $C_1$-$C_4$-Alkoxy, Cl, Br, COOH, $SO_3H$ |
| $R_8$ = | H, $C_1$-$C_4$-Alkyl, $C_1$-$C_4$-Alkoxy, Acylamino, insbesondere $C_1$-$C_4$-Alkylcarbonylamino, $C_1$-$C_4$-Alkylsulfonylamino, Aminocarbonylamino, gegebenenfalls substituiertes Phenylcarbonylamino, Cl, Br |
| $R_9$ = | H, $C_1$-$C_4$-Alkyl, $C_1$-$C_4$-Alkoxy, OH, $SO_3H$. |
| $R_{10}$ = | H, gegebenenfalls substituiertes Alkyl |
| $R_{11}$ = | H, gegebenenfalls substituiertes Alkyl oder zusammen mit $R_{10}$ Alkylen, vorzugsweise $-CH_2$-$CH_2$-, |
| T = | Cl, Br, $C_1$-$C_4$-Alkoxy, gegebenenfalls substituiertes Phenoxy, |
| $R_{12}$ = | H, $C_1$-$C_4$-Alkyl, $C_1$-$C_4$-Alkoxy, OH, Halogen, COOH, $NO_2$, $SO_3H$, Sulfonamido, $C_1$-$C_4$-Alkylcarbonylamino, gegebenenfalls substituiertes Phenylcarbonylamino, $C_1$-$C_4$-Alkylsulfonylamino, gegebenenfalls substituiertes Phenylsulfonylamino |
| Me = | zweiwertiges Metallatom, vorzugsweise Fe, Cu, Zn, Co, Ni |
| l,m.n,p = | 0 oder 1 wobei l ≠ m, n ≠ p, l ≠ n und m ≠ p |
| G = | aliphatisches, araliphatisches oder aromatisches Brückenglied und |
| B' = | |

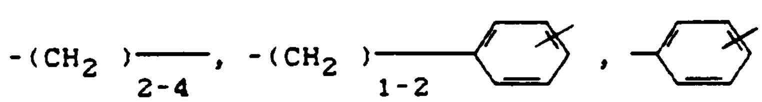

bedeuten.

Als Substituenten für die Alkylreste kommen insbesondere Cl, CN, $SO_3H$, $OSO_3H$, COOH und $OC_1$-$C_4$-alkyl in Frage.

Ganz generell bevorzugt im Rahmen der genannten Farbstoffe sind sulfogruppenhaltige (vorzugsweise 1-6 Sulfogruppen) mit

X = $-CH_2CH_2OSO_3H$ oder $-CH=CH_2$

Z =

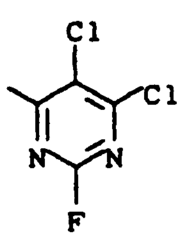
,
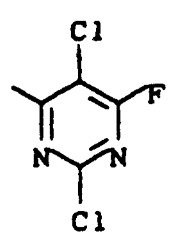
,
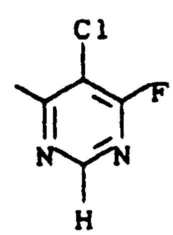

(a) (b)

oder

Gemisch aus 40 - 96 Mol% (b) und 60-4 Mol% (a).

Besonders geeignete aliphatische Reste E und G sind $C_2$-$C_8$-Alkylenreste, die durch Heteroatome oder Heteroatomgruppierungen unterbrochen sein können oder substituiert sein können, wie beispielsweise

$-(CH_2)_{2-8}-$ , 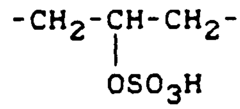 , 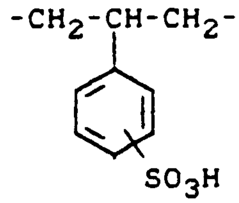

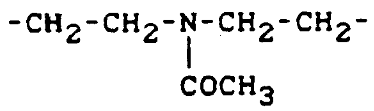 , $-CH_2-CH_2-O-CH_2-CH_2-$ ,

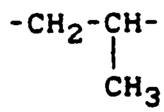 , 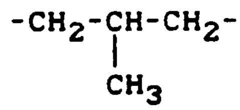 , $-CH_2-CH_2-NHCO-CH_2-$ .

Besonders geeignete araliphatische Reste E und G sind $C_1$-$C_4$-Alkylenphenylreste, die durch Heteroatome oder Heteroatomgruppen unterbrochen sein können, wie beispielsweise

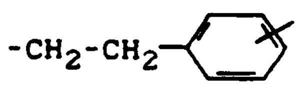 , 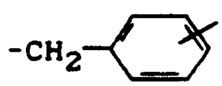 ,

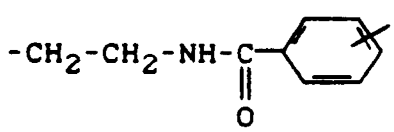 , 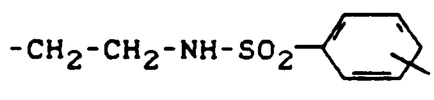 ,

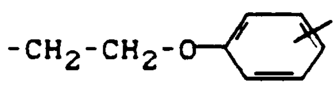 , 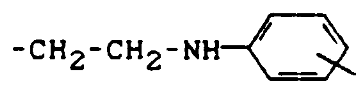 .

Besonders geeignete aromatische Reste E und G sind Phenylenreste, die durch Substituenten, wie beispielsweise $SO_3H$ oder COOH substituiert sein können, wie beispielsweise

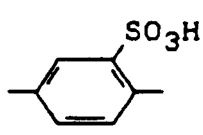 , 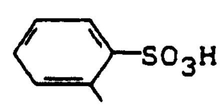

Die Farbstoffe der Formel (1) lassen sich nach verschiedenen, in der Farbstoffchemie üblichen Verfahren herstellen. Folgende seien genannt:

1) Farbstoffe der Formel

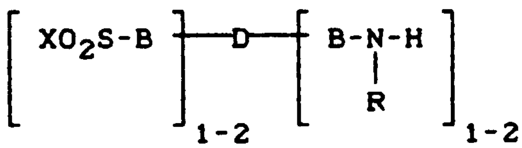

(44)

oder ihre Vorprodukte werden mit 1 oder 2 mol einer Reaktivkomponente

Z-W (45)

worin W einen als Anion abspaltbaren Substituenten wie Fluor oder Chlor bedeutet, in die Farbstoffe der Formel (1) überführt oder die erhaltenen Vorprodukte werden in die gewünschten Endfarbstoffe überführt und gegebenenfalls wird eine weitere Umwandlungsreaktion angeschlossen.

Man geht somit von Farbstoffen aus, die eine X-$SO_2$-Gruppe bereits enthalten, und acyliert die Gruppe -N(R)H mit einer Reaktivkomponente Z-W; oder man verwendet entsprechende Vorprodukte, z. B. eine Diazokomponente der Formel

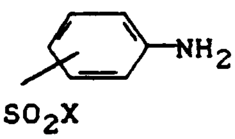

und kuppelt diese auf eine Kupplungskomponente, welche eine Gruppe -N(R)H enthält, und acyliert die Gruppe -N(R)H vor oder nach der Kupplung mit einer Reaktivkomponente Z-W. Bei der oben beschriebenen Ausführungsform kann die acylierte Gruppe -N(R)H auch in der Diazokomponente vorhanden sein und dementsprechend die X-$SO_2$-Gruppe in der Kupplungskomponente. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit einer Reaktivkomponente Z-W durch Verseifen bzw. Reduzieren in die $H_2N$-Gruppe übergeführt wird. Die Stellung der Reaktivreste im fertigen Azofarbstoff ist somit nicht unveränderlich an bestimmte Ausgangskomponenten - Diazo- oder Kupplungskomponenten - gebunden.

Ferner können die beiden Reaktivreste auch an ein und dieselbe Komponente gebunden sein, beispielsweise indem man eine nichtfaserreaktive Diazokomponente sowie eine Kupplungskomponente der Formel

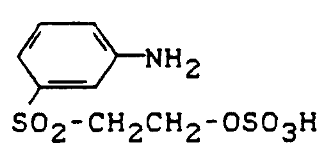

verwendet, und die -$NH_2$-Gruppe nach der Kupplung mit einer Reaktivkomponente Z-W acyliert.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffes ist. Beispiele für derartige, aus zwei oder mehr als zwei Komponenten zusammengesetzte Farbstoffe sind: Mono-azo-, sekundäre Disazo-, Metallkomplexazo- und Formazan-Farbstoffe. Bei der Herstellung der Endfarbstoffe aus Vorprodukten handelt es sich meistens um Kupplungen, die zu Azofarbstoffen führen. Außerdem können Eliminierungsreaktionen an

die Synthese angeschlossen werden. Beispielsweise kann man Reaktivfarbstoffe der Formel (1), welche Sulfatoethylsulfonylreste enthalten, mit säureabspaltenden Mitteln, wie Natriumhydroxid, behandeln, wobei die Sulfatoethylsulfonylreste in Vinylsulfonylreste übergehen.

Der oben beschriebene Weg der Herstellung über eine Zwischenstufe des Reaktivrestes geht in vielen Fällen einheitlich und vollständig.

Liegen in den hergestellten Reaktivfarbstoffen zur Metallkomplexbildung befähigte Gruppen vor, können die Reaktivfarbstoffe auch nachträglich metallisiert werden.

Da die einzelnen, oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse des Reaktivrestes Z eintritt, muß ein Zwischenprodukt, welches Acetylaminogruppen enthält, zwecks Abspaltung der Acetylgruppen verseift werden, bevor mit einer Reaktivkomponente Z-W kondensiert wird. Welche Teilreaktion zweckmäßigerweise zuerst ausgeführt wird, ist von Fall zu Fall verschieden und richtet sich vor allem nach der Löslichkeit der beteiligten Aminoverbindungen und der Basizität der zu acylierenden Aminogruppen.

Die Acylierung der Farbstoffe der Formel (44) oder der Farbstoffvorprodukte mit einer Reaktivkomponente Z-W erfolgt nach an sich bekannten Methoden, vorzugsweise in wäßriger Lösung oder Suspension und in Gegenwart von alkalischen, säurebindenden Mitteln, z. B. wäßriger Alkalihydroxide, -carbonate oder -bicarbonate.

Die wichtigsten Verfahrensvarianten sind in den Ausführungsbeispielen dargestellt. Grundsätzlich lassen sich die Reaktivfarbstoffe der Formel (1) in an sich bekannter Weise oder analog zu bekannten Verfahrensweisen herstellen, indem man von Vorprodukten oder Zwischenprodukten für Farbstoffe, die faserreaktive Reste gemäß Formel (1) enthalten, ausgeht, oder diese faserreaktiven Reste in hierfür geeignete Zwischenprodukte mit Farbstoffcharakter einführt.

2. Eine andere vorteilhafte Methode besteht darin, zunächst einen Farbstoff herzustellen, der eine Vorstufe des Reaktivrestes enthält, und diesen nachträglich in die Endstufe umzuwandeln, z. B. durch Veresterung oder eine Additionsreaktion. Beispielsweise kann man einen Farbstoff der Formel (1), worin X eine Rest $HO\text{-}CH_2CH_2\text{-}$ ist, herstellen und das Zwischenprodukt vor oder nach der Acylierung mit Schwefelsäure umsetzen, so daß die Hydroxygruppe in die Sulfatogruppe überführt wird; oder man verwendet einen analogen Farbstoff, worin X die Vinylgruppe $H_2C=CH\text{-}$ ist, und lagert an das Zwischenprodukt Thioschwefelsäure an, wobei ein Rest $HO_3SS\text{-}CH_2CH_2\text{-}$ entsteht. Die Sulfatierung der Hydroxygruppe in einem Farbstoff der Formel (1) oder einem geeigneten Vorprodukt erfolgt z. B. durch Umsetzung mit konzentrierter Schwefelsäure bei 0 °C bis mäßig erhöhter Temperatur. Die Sulfatierung kann auch durch Reaktion der Hydroxyverbindung mit 2 Äquivalenten Chlorsulfonsäure pro Hydroxygruppe in einem polaren organischen Lösungsmittel, wie beispielsweise N-Methylpyrrolidon, bei 10 °C - 80 °C erfolgen. Vorzugsweise erfolgt die Sulfatierung durch Eintragen der betreffenden Verbindung in Schwefelsäuremonohydrat bei Temperaturen zwischen 5 °C und 15 °C. Die Einführung eines anderen unter alkalischen Bedingungen abspaltbaren Restes für X in eine Verbindung der Formel (1) oder ein Zwischenprodukt anstelle der Sulfatogruppe, beispielsweise einer Thiosulfatogruppe erfolgt in an sich bekannter Weise.

Als Diazokomponenten, die 1 bis 2 Gruppen $-SO_2X$ enthalten, seien genannt:

Anilin-4-β-sulfatoethylsulfon, Anilin-4-β-thiosulfatoethylsulfon, Anilin-4-vinylsulfon, Anilin-4-β-chlorethylsulfon, Anilin-3-β-sulfatoethylsulfon, Anilin-3-vinylsulfon, 2-Methoxy-anilin-5-β-sulfatoethylsulfon, 2-Methoxy-anilin-5-β-thiosulfatoethylsulfon, 2-Methoxy-anilin-5-vinylsulfon, 5-Methoxy-anilin-3-β-sulfatoethylsulfon, 4-Methoxy-anilin-3-β-vinylsulfon, 2,5-Dimethoxyanilin-4-β-sulfatoethylsulfon, 2,5-Dimethoxyanilin-4-vinylsulfon, 2,5-Dimethoxy-anilin-4-β-sulfatoethylsulfon, 2-Methoxy-5-methyl-anilin-4-β-sulfatoethylsulfon, Anilin-2-β-sulfatoethylsulfon, 2-Chloranilin-5-β-sulfatoethylsulfon, 4-Chloranilin-3-β-sulfatoethylsulfon, 3-(3- oder 4-Aminobenzoyl)-aminophenyl-β-sulfatoethylsulfon, 2-Methoxy-5-methyl-anilin-4-vinylsulfon, 6-Carboxy-anilin-3-β-sulfatoethylsulfon, 6-Carboxy-anilin-3-vinylsulfon, 2-Sulfoanilin-4-β-sulfatoethylsulfon, 2-Sulfoanilin-4-vinylsulfon, 2,4-Disulfoanilin-5-vinylsulfon, 2-Hydroxyanilin-5-β-sulfatoethylsulfon, 2-Hydroxy-anilin-4-β-sulfatoethylsulfon, 3-Sulfo-2-hydroxyanilin-5-β-sulfatoethylsulfon, 2-Naphthylamin-8-β-sulfatoethylsulfon, 2-Naphthylamin-6-β-sulfatoethylsulfon, 1-Sulfo-2-naphthylamin-6-β-sulfatoethylsulfon, 1-Naphthylamin-4-β-sulfatoethylsulfon, 1-Sulfo-2-naphthylamin-5-β-sulfatoethylsulfon, 6-Sulfo-2-naphthylamin-8-β-sulfatoethylsulfon, 2-Amino-3-sulfonaphthalin-6,8-bis-(β-sulfatoethylsulfon),2-Brom-1-aminobenzol-4-β-sulfatoethylsulfon, 2,6-Dichlor-1-aminobenzol-4-β-sulfatoethylsulfon, 1-Naphthylamin-5-β-sulfatoethylsulfon, 2-Naphthylamin-5-β-sulfatoethylsulfon, 2-Naphthylamin-8-β-sulfatoethylsulfon, 8-Sulfo-2-naphthylamin-6-β-sulfatoethylsulfon, 1-Naphthylamin-6-β-sulfatoethylsulfon, 1-Naphthylamin-7-β-sulfatoethylsulfon.

Ferner sind die entsprechenden β-Hydroxy-Verbindungen zu erwähnen, welche als Vorprodukte verwendet werden können, z. B.: 1-Amino-4-β-hydroxyethyl-sulfonylbenzol, 1-Amino-3-(β-hydroxyethylsulfonyl)-benzol und 1-Amino-2,4-di-(β-hydroxyethylsulfonyl)-5-chlorbenzol.

Geeignete Diazokomponenten mit dem Rest

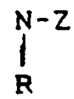

sind beispielsweise

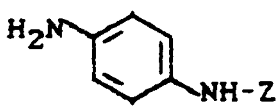

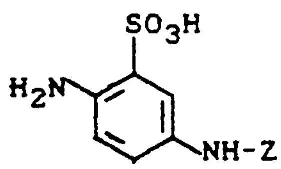

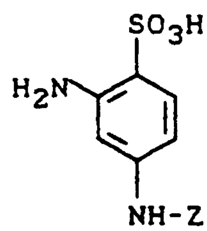

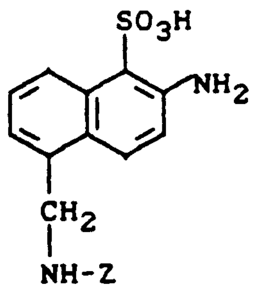
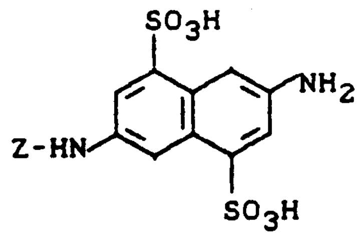

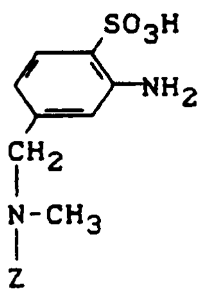
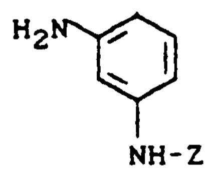
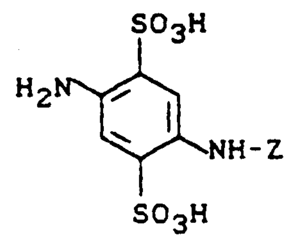

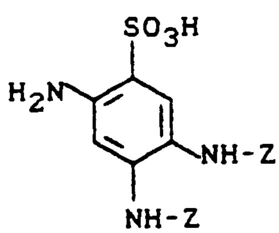
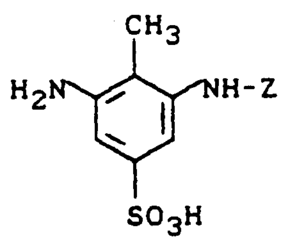
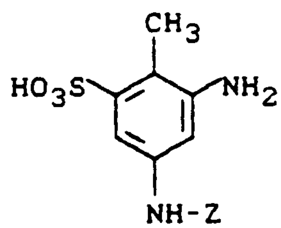

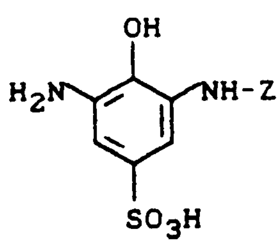
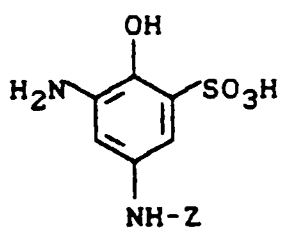
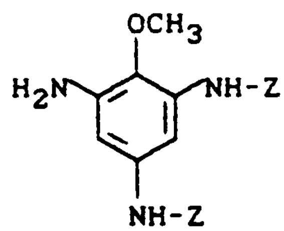

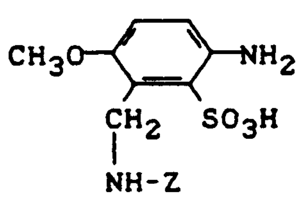
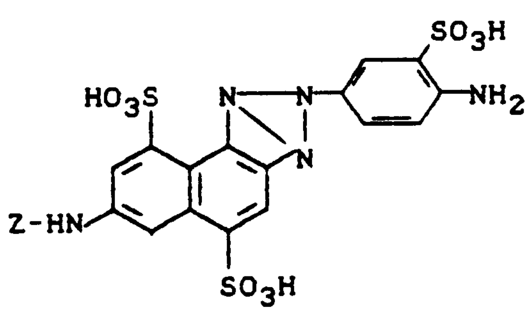

Kupplungskomponenten, die den Rest Z enthalten und die in den erfindungsgemäßen Mono- oder Disazofarbstoffen enthalten sein können oder zu deren Herstellung dienen, sind insbesondere beispielsweise die Verbindungen der Formeln:

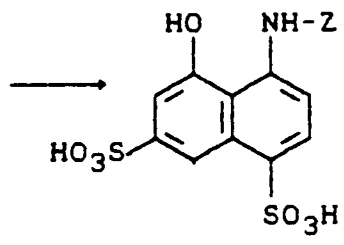

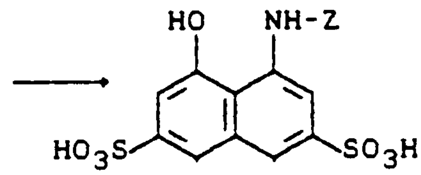

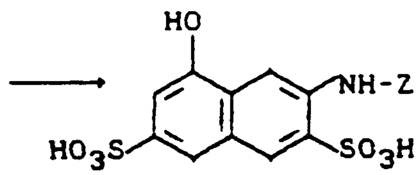

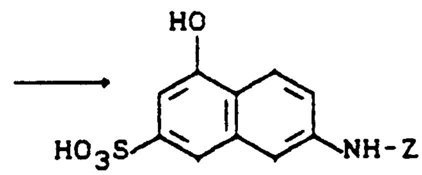

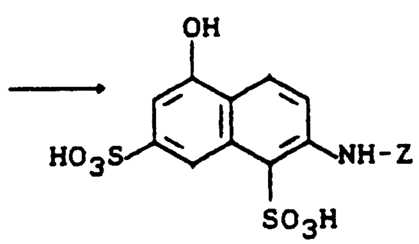

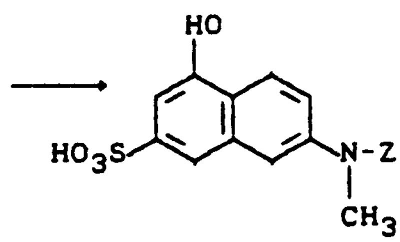

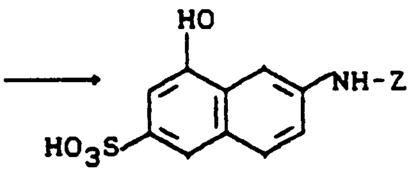

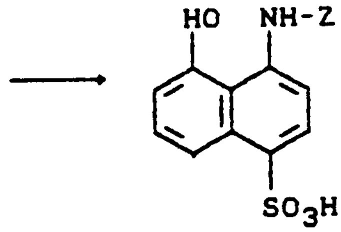

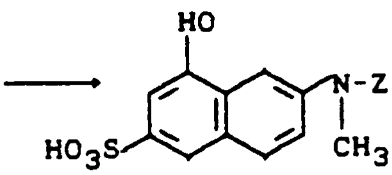

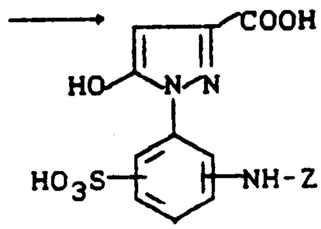

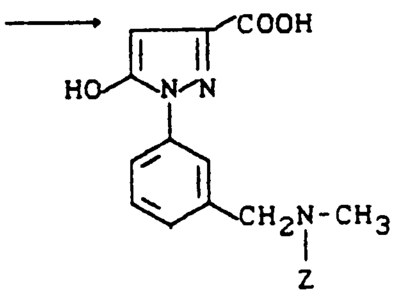

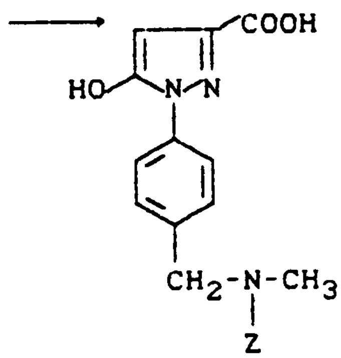

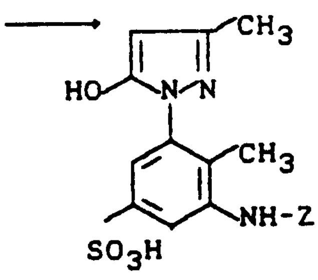

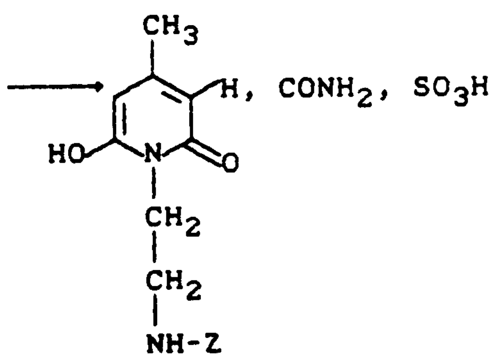

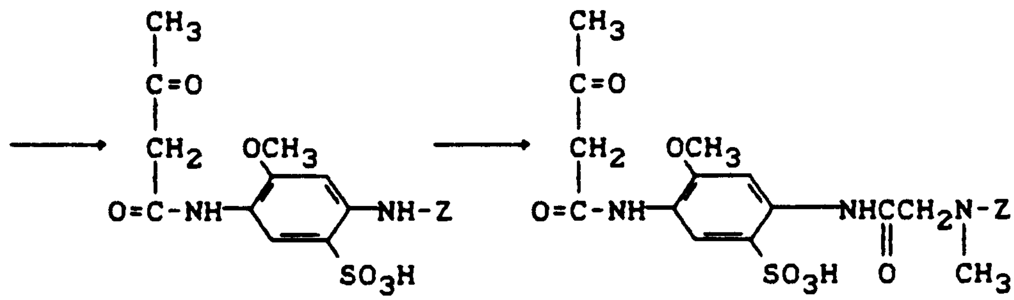

Kupplungskomponenten, die den Rest $SO_2X$ enthalten, sind beispielsweise folgende:

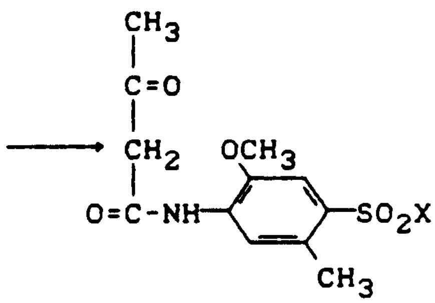

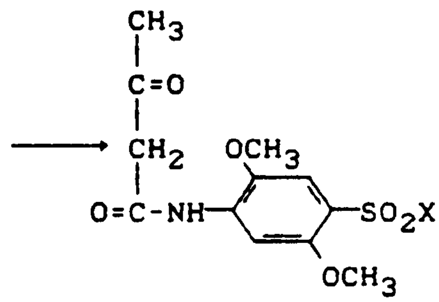

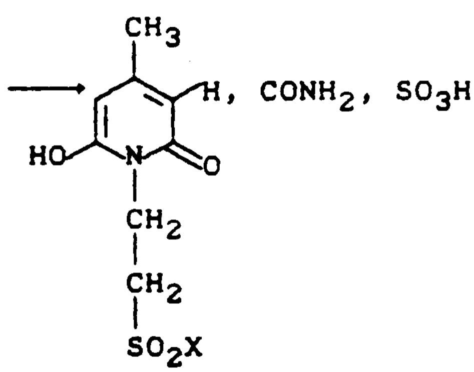

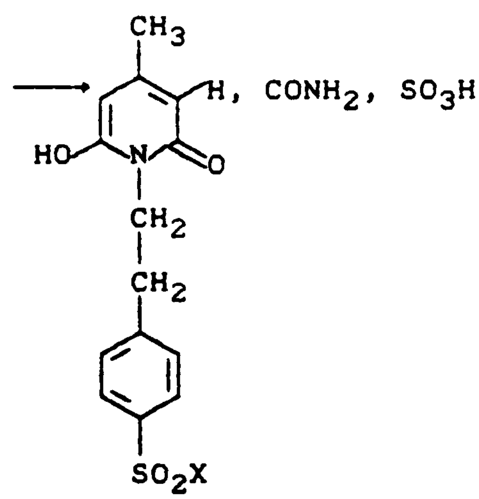

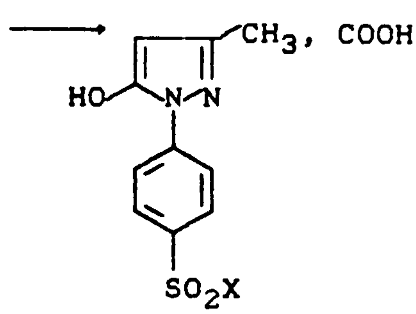

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe, herstellen.

Die Reaktivfarbstoffe der Formel (1) zeichnen sich durch hohe Reaktivität aus und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen.

Die Reaktivfarbstoffe der Formel (1) eignen sich zum Färben und Bedrucken der verschiedenen beispielsweise Hydroxylgruppen oder Amidgruppen enthaltenden Substrate, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

Die angegebenen Formeln sind die der freien Säuren. Bei der Herstellung werden im allgemeinen die Salze erhalten, insbesondere die Alkalisalze wie Natrium-, Kalium-oder Lithiumsalze. Die Farbstoffe können aber auch als konzentrierte Lösungen eingesetzt werden.

Bei den Temperaturangaben in den Beispielen handelt es sich um °C.

Die in den Beispielen angegebenen Farbkennzahlen beziehen sich auf Colour Index Hue Indication chart (Indicator Numbers).

Beispiel 1

0,1 mol 1-Amino-8-hydroxynaphthalin-3,6-disulfonsäure (H-Säure) werden in 150 ml Wasser bei pH 10 gelöst. Man kühlt auf 10°C ab und läßt in 30 Minuten 18,5 g eines Gemisches aus 65 % 4,6-Difluor-2,5-dichlorpyrimidin und 35 % 2,4-Difluor-5,6-dichlorpyrimidin eintropfen und hält dabei den pH durch Zugabe von 10 %iger Natriumhydroxidlösung bei pH 10. Man rührt 30 Minuten bei pH 10 nach und prüft dann auf nicht umgesetzte H-Säure. Gegebenenfalls muß noch 0,5 bis 1 g des Gemisches des Reaktivkomponenten nachgesetzt werden. Anschließend stellt man mit verdünnter Salzsäure auf pH 7.

0,1 mol 2-Amino-6-$\beta$-sulfatoethylsulfonyl-naphthalin-1-sulfonsäure werden in 300 ml Eiswasser angerührt, mit 20 ml konzentrierter Salzsäure versetzt und tropfenweise mit einer wäßrigen Lösung von 7 g Natriumnitrit versetzt. Nach dem Entfernen von überschüssigem Natriumnitrit mit Amidosulfonsäure wird die Diazotierung zu der Lösung der Kupplungskomponente gegeben und durch Einstreuen von Natriumbicarbonat ein pH von 6 - 7 eingehalten.

Nach beendeter Kupplung wird der Farbstoff ausgesalzen, isoliert, getrocknet und gemahlen. Der so erhaltene Farbstoff der Formel

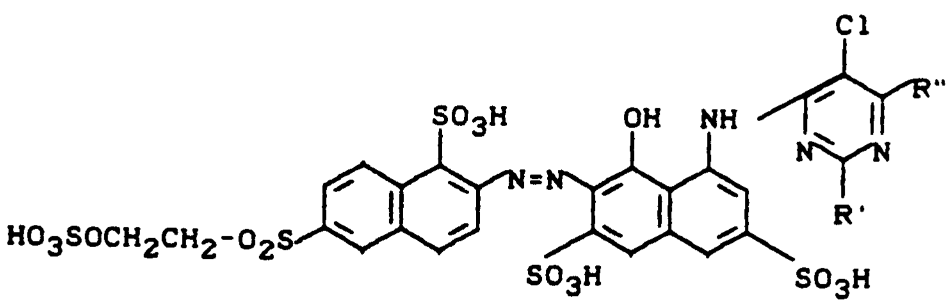

65 % R' = Cl, R'' = F
35 % R' = F, R'' = Cl
färbt Baumwolle in blaustichig roten Tönen (Farbkennzahl 9).

Weitere wertvolle Farbstoffe, die Baumwolle in den in Spalte 5 genannten Tönen färben, erhält man nach den Angaben von Beispiel 1, wenn man die in Spalte 2 aufgeführten Amine diazotiert und auf das Kondensationsprodukt kuppelt, das man durch Acylierung der in Spalte 3 genannten Kupplungskomponenten mit den in Spalte 4 erwähnten Reaktivkomponenten erhält.

In den Beispielen bedeuten die Gemische A, B und C die folgenden Mischungen (Angabe in Gew.-%)

| Gemisch | 2,4-Difluor-5,6-dichlor--pyrimidin | 4,6-Difluor-2,5-dichlor--pyrimidin |
|---|---|---|
| A | 40 | 60 |
| B | 35 | 65 |
| C | 30 | 70 |

| Bsp. | Amin | Kupplungskomponente | Reaktivkomponente | Farbton | Farbkennzahl |
|---|---|---|---|---|---|
| 2 | 4-β-Sulfatoethyl-sulfonyl-anilin | H-Säure | Gemisch B | rot | 8 |
| 3 | " | " | Gemisch C | | |
| 4 | 8-β-Sulfatoethyl-sulfonyl-2-amino-6-sulfo-naphthalin | " | " | blaustichig rot | 9 |
| 5 | 3-β-Sulfatoethyl-sulfonyl-anilin | " | " | rot | 8 |
| 6 | 4-(3'-β-Sulfatoethyl-sulfonyl-phenylamino)-carbonyl-anilin | " | " | rot | 8 |
| 7 | 2-Methoxy-5-β-sulfato-ethyl-sulfonyl-anilin | " | " | rot-violett | 10 |
| 8 | 2-Sulfo-4-β-sulfato-ethylsulfonyl-anilin | " | " | gelbstichig rot | 7 |
| 9 | 4-β-Sulfatoethyl-sulfonyl-anilin | 1-Amino-8-hydroxy-naphthalin-4,6-di-sulfonsäure (K-Säure) | " | rot | 7 |
| 10 | 6-β-Sulfatoethyl-sulfonyl-2-amino-1-sulfo-naphthalin | " | " | rot | 8 |
| 11 | 3-β-Sulfatoethyl-sulfonyl-anilin | " | " | rot | 7 |

| Bsp. | Amin | Kupplungskomponente | Reaktivkomponente | Farbton | Farbkennzahl |
|---|---|---|---|---|---|
| 12 | 2-Methoxy-5-β-sulfatoethylsulfonyl-anilin | 1-Amino-8-hydroxy-naphthalin-4,6-disulfonsäure (K-Säure) | Gemisch C | blaustichig rot | 9 |
| 13 | 8-β-Sulfatoethyl-sulfonyl-2-amino-6-sulfo-naphthalin | " | " | rot | 9 |
| 14 | 4-β-Sulfatoethyl-sulfonyl-anilin | H-Säure | 2,4-Difluor-5-chlor-pyrimidin | rot | 8 |
| 15 | " | " | 4,6-Difluor-5-chlor-pyrimidin | rot | 8 |
| 16 | 6-β-Sulfatoethyl-sulfonyl-2-amino-1-sulfo-naphthalin | " | " | blaustichig rot | 9 |
| 17 | " | " | 2,4-Difluor-5-chlor-pyrimidin | blaustichig rot | 9 |
| 18 | " | K-Säure | " | rot | 8 |
| 19 | 4-β-Sulfatoethyl-sulfonyl-anilin | " | 4,6-Difluor-5-chlor-pyrimidin | rot | 7 |
| 20 | 3-β-Sulfatoethyl-sulfonyl-anilin | H-Säure | " | rot | 8 |
| 21 | 4-β-Thiosulfatoethyl-sulfonyl-anilin | " | " | rot | 8 |

| Bsp. | Amin | Kupplungskomponente | Reaktivkomponente | Farbton | Farbkennzahl |
|---|---|---|---|---|---|
| 22 | 3-β-Thiosulfato-ethyl-sulfonyl-anilin | H-Säure | 4,6-Difluor-5-chlor-pyrimidin | rot | 8 |
| 23 | 2-Sulfo-4-β-sulfato-ethyl-sulfonyl-anilin | 1-(4-Aminobenzoyl-amino)-8-hydroxy-naphthalin-3,6-di-sulfonsäure | " | gelbstichig rot | 7 |
| 24 | 4-β-Chlorethyl-sulfonyl-anilin | H-Säure | " | rot | 8 |
| 25 | 4-β-Acetoxyethyl-sulfonyl-anilin | " | " | rot | 8 |
| 26 | 2-Sulfo-4-β-sulfato-ethyl-sulfonyl-anilin | " | " | gelbstichig rot | 7 |
| 27 | 3-β-Thiosulfato-ethyl-sulfonyl-anilin | K-Säure | " | rot | 7 |
| 28 | 4-Vinylsulfonyl-anilin | " | " | rot | 7 |

Beispiel 29

0,1 mol H-Säure werden in 400 ml Eiswasser mit verdünnter Natronlauge auf pH 5 gestellt. Bei 0° werden 14 g Cyanurfluorid eingetropft, wobei der pH fällt. Er wird durch Einstreuen von Natriumbicarbonat

bei pH 3 bis 4 gehalten. Man rührt 15 Minuten bei pH 3 bis 4 und 0° nach. Anschließend wird eine neutrale Lösung des Natriumsalzes von 0,1 mol eines Gemisches aus 65 % 4-Fluor-2,5-dichlor-6-(3'-amino-4'-sulfophenylamino)-pyrimidin und 35 % 2-Fluor-5,6-dichlor-4-(3'-amino-4'-sulfophenylamino)-pyrimidin (dieses Gemisch kann man herstellen nach den Angaben von Beispiel 1 der EP-A 168703) zugegeben. Bei einem pH von 5 bis 5,5 wird 5 Stunden bei 20 - 25°C gerührt, bis kein freies Amin durch eine Diazotierprobe nachweisbar ist. Die Lösung wird als Kupplungskomponente zur Farbstoffherstellung eingesetzt.

0,1 mol 4-β-Sulfatoethylsulfonyl-anilin werden in 250 ml Eiswasser angerührt, mit 20 ml konz. Salzsäure versetzt und dann eine Lösung von 7 g Natriumnitrit in 50 ml Wasser zugetropft. Man rührt 1/2 Stunde bei 5°C nach und zerstört den Überschuß an Nitrit mit Amidosulfonsäure. Die so hergestellte Suspension der Diazoverbindung läßt man bei einem pH von 6 - 7 langsam in die Lösung der Kupplungskomponente einlaufen. Man rührt 2 Stunden bis zur vollständigen Kupplung nach. Bei pH 6,5 wird der Farbstoff ausgesalzen, abgesaugt und getrocknet. Nach dem Mahlen erhält man ein rotes Farbstoffpulver, das Baumwolle in einem klaren Rot färbt (Farbkennzahl 8). Der Farbstoff entspricht der Formel

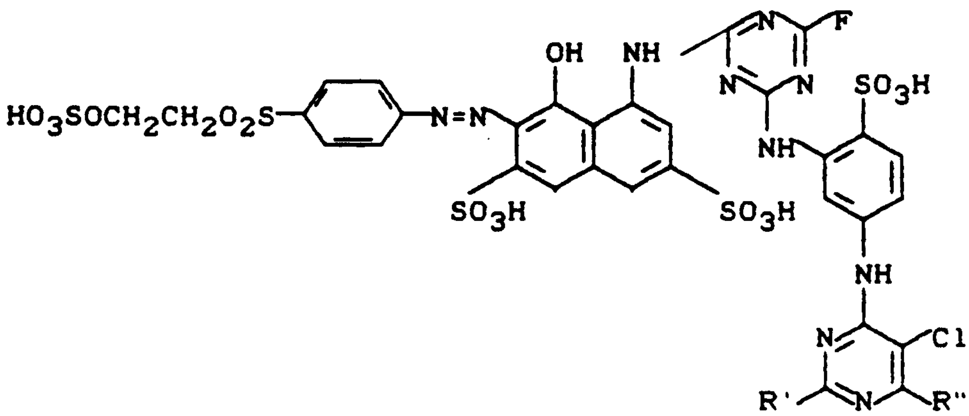

65 % R' = Cl, R'' = F
35 % R' = F, R'' = Cl

Weitere wertvolle Farbstoffe erhält man, den Angaben dieses Beispiels zufolge, wenn man die in Spalte 2 aufgeführten Diazokomponenten und anstelle von Cyanurfluorid Cyanurchlorid einsetzt, wobei bei der Kondensation mit Cyanurchlorid die aus der Literatur bekannten Bedingungen zu verwenden sind.

| Bsp. | Diazokomponente | Reaktivkomponente | Farbton | Farbkennzahl |
|---|---|---|---|---|
| 30 | 3-β-Sulfatoethyl-sulfonyl-anilin | Cyanurchlorid | rot | 8 |
| 31 | 3-β-Sulfatoethyl-sulfonyl-anilin | " | rot | 8 |
| 32 | 6-β-Sulfatoethyl-sulfonyl-8-sulfo-2-amino-naphthalin | " | blaustichig rot | 9 |
| 33 | " | Cyanurfluorid | " | 9 |
| 34 | 3-β-Sulfatoethyl-sulfonyl-anilin | " | rot | 8 |
| 35 | 5-β-Sulfatoethyl-sulfonyl-2-methoxy-anilin | " | rotstichig violett | 10 |

Analog zu der im Beispiel 29 beschriebenen Methode lassen sich, bei Verwendung der entsprechenden Zwischenprodukte, die in der folgenden Tabelle aufgeführten Farbstoffe herstellen, die Baumwolle im angegebenen Farbton färben.

| Beisp. | Farbstoff | Farbton | Farbkennzahl |
|---|---|---|---|
| 36 | 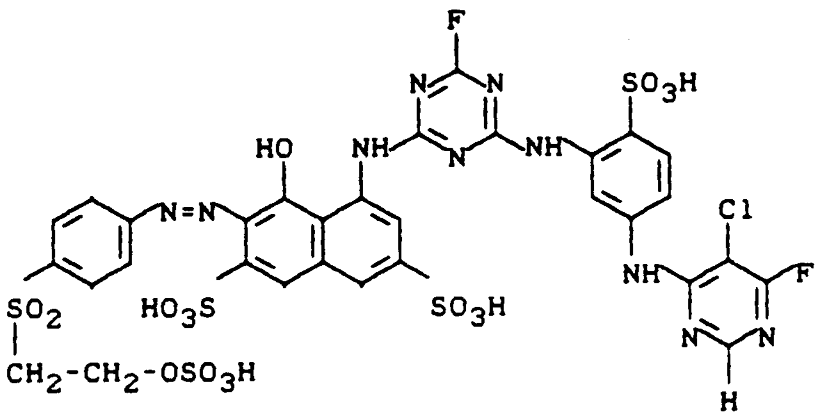 | rot | 8 |
| 37 | 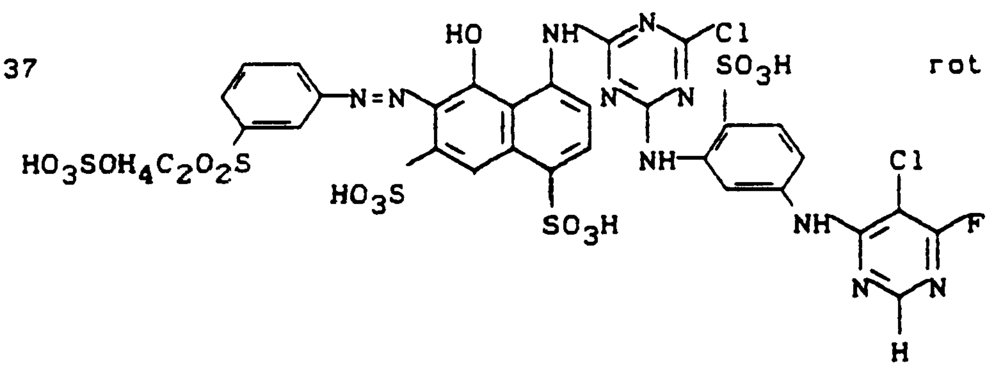 | rot | 7 |
| 38 | 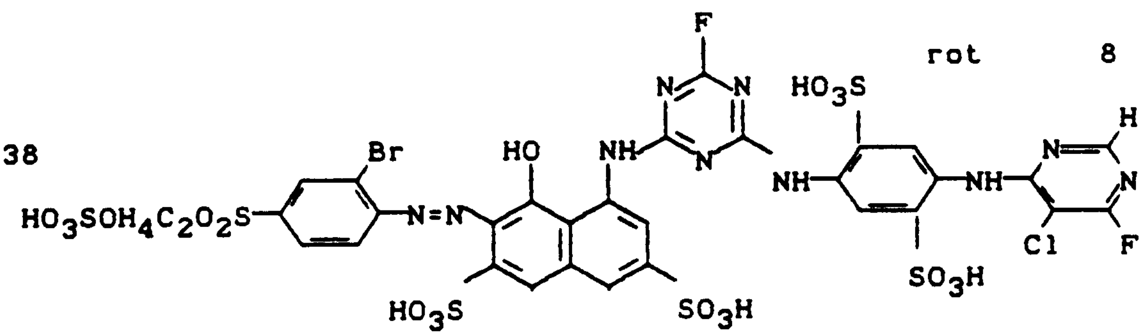 | rot | 8 |

| Beispiel | Farbstoff | Farbton | Farbkennzahl |
|---|---|---|---|
| 39 | 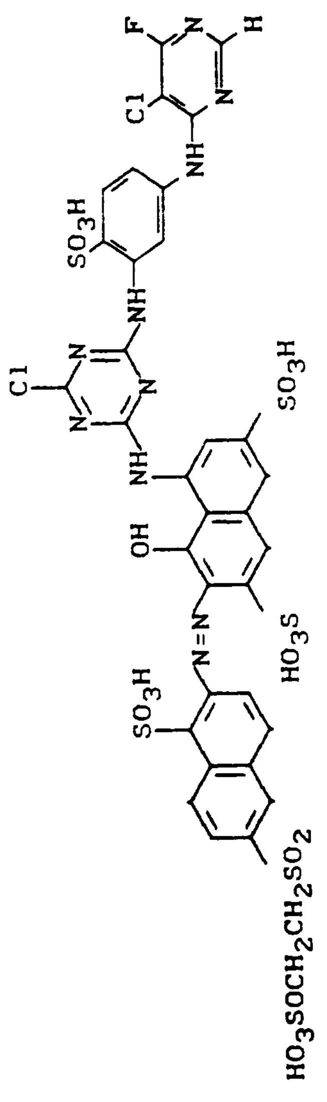 | blaustichig rot | 9 |
| 40 | 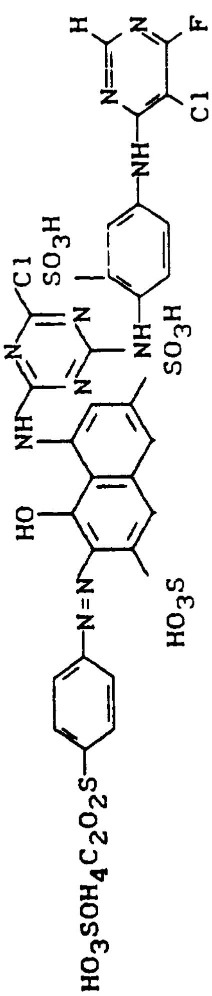 | rot | 8 |
| 41 | 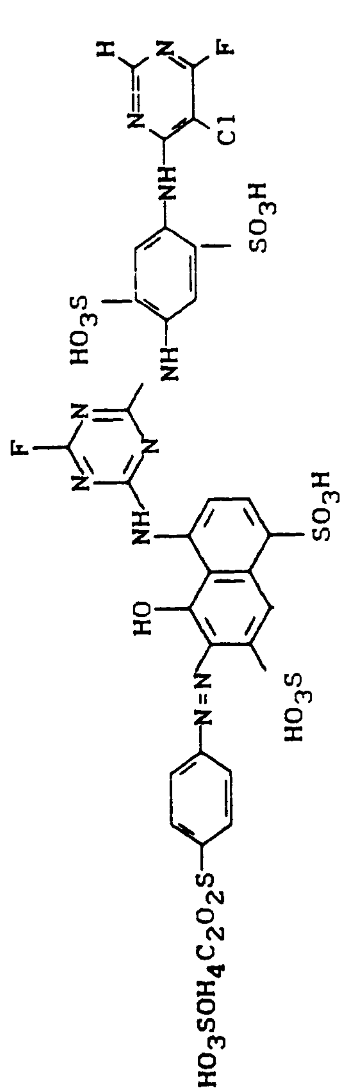 | rot | 7 |

Beispiel 42

281 Teile 4-$\beta$-Sulfatoethylsulfonyl-anilin werden in 1.000 Teilen Wasser eingetragen und durch vorsichtige Zugabe von 65 Teilen Natriumcarbonat in Lösung gebracht, wobei sich der pH-Wert auf 6,5 bis 7,0

einstellt. Man läßt 2 Stunden bei diesem pH weiterrühren, gibt sodann 750 Teile Eis und 255 Teile einer 31%igen wäßrigen Salzsäure hinzu; anschließend läßt man 173 Teile der 40%igen wäßrigen Natriumnitritlösung einlaufen, rührt bei 0 bis 5°C weitere 2 Stunden nach und zerstört sodann überschüssige salpetrige Säure mittels Amidosulfonsäure. In die so hergestellte Diazoniumsalzsuspension läßt man bei einem pH-Wert von 6,0 bis 6,5 unter gleichzeitigem Eintragen von etwa 70 Teilen Natriumcarbonat die Lösung des Kondensationsproduktes von je einem Mol Cyanurchlorid und 1-Amino-8-naphthol-3,6-disulfonsäure und 3-Amino-acetanilid-4-sulfonsäure und 5-Chlor-4,6-difluorpyrimidin einlaufen. Diese Lösung des Kondensationsproduktes wird wie folgt hergestellt: 319 Teile 1-Amino-8-naphthol-3,6-disulfonsäurewerden unter Rühren in ein Gemisch aus 500 Teilen Wasser und 121 Teilen einer 33%igen Natronlauge eingetragen; der pH-Wert der Lösung soll anschließend 6,5 bis 7,0 betragen. Diese Lösung läßt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5°C und bei dem angegebenen pH-Wert, der durch Einstreuen von 92 Teilen Natriumcarbonat gehalten wird, weitergerührt. In die so erhaltene klare Lösung trägt man 221 Teile 3-Amino-acetanilid-4-sulfonsäure ein und danach innerhalb einer Stunde 105 Teile Natriumcarbonat, wobei sich der pH-Wert auf 4,5 bis 5,0 erhöht. Bei diesem pH-Wert läßt man noch 2 Stunden nachrühren, wobei die Temperatur bei 35 bis 40°C gehalten wird. Die Lösung wird mit 400 Teilen conc. Natriumhydroxid versetzt und 2 Stunden bei 70 bis 75°C gerührt. Danach wird mit conc. Salzsäure neutralisiert. Zu dieser neutralen Lösung wird die äquivalente Menge 5-Chlor-4,6-difluorpyrimidin gegeben und auf 30°C erwärmt.

Es wird ein rotes, elektrolythaltiges Pulver erhalten, das den Farbstoff der Formel

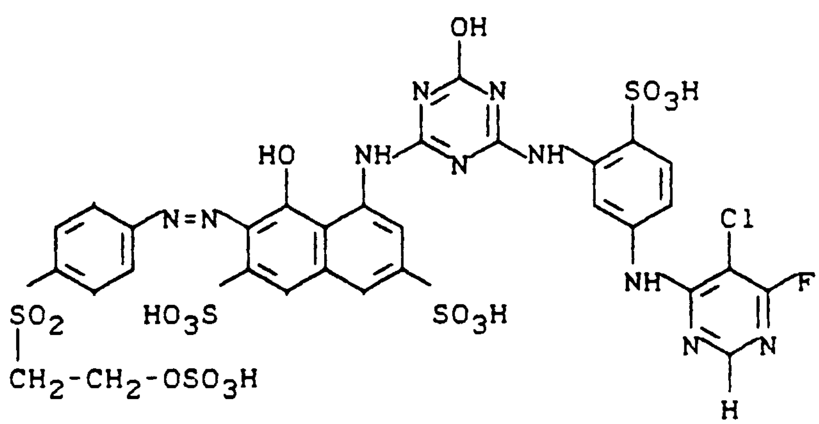

enthält.

Dieser Farbstoff färbt Wolle aus saurem Bad oder Cellulosefasermaterialien in Gegenwart von säurebindenden Mitteln nach den in der Technik üblichen Applikations- und Fixiermethoden für faserreaktive Farbstoffe in klaren roten Tönen (Farbkennzahl 8) mit sehr gutem Farbaufbau und hohem Fixiergrad. Die Färbungen besitzen sehr gute Naßechtheiten.

Beispiel 43

0,1 mol 2-Amino-5-hydroxynaphthalin-7-sulfonsäure (I-Säure) werden in 400 ml Wasser unter Zusatz von konz. Natronlauge bei pH 6 - 6,5 gelöst. Man kühlt dann auf 10° ab und läßt 18,5 g des Difluor-dichlorpyrimidin-Gemisches B zutropfen, wobei der pH durch Eintropfen von verdünnter Natronlauge bei pH 6 gehalten wird. Man rührt bei pH 6 und 15°C solange nach, bis der Nachweis auf die Aminogruppe negativ ausfällt. Gegebenenfalls müssen noch 1 - 2 g des Gemisches der Reaktivkomponente nachgesetzt werden. Die Lösung wird als Kupplungskomponente zur Farbstoffherstellung eingesetzt.

0,1 mol 2-Amino-6-$\beta$-sulfatoethylsulfonyl-naphthalin-2-sulfonsäure werden nach den Angaben von Beispiel 1 diazotiert. Die so erhaltene Diazotierung läßt man bei pH 5 - 6 im Laufe von zwei Stunden in die Kupplungslösung eintropfen. Man rührt zwei Stunden bis zur vollständigen Kupplung bei pH 5,5 - 6 nach. Dann wird der Farbstoff ausgesalzen, isoliert und getrocknet. Nach dem Mahlen wird ein rotes Farbstoffpulver erhalten, das sich leicht im Wasser mit oranger Farbe löst. Der Farbstoff der Formel

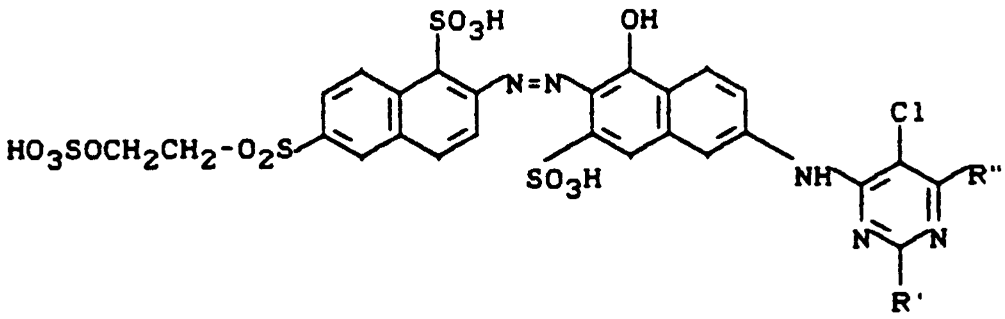

65 % R' = Cl, R'' = F
35 % R' = F, R'' = Cl
färbt Baumwolle nach einem der für Reaktivfarbstoffe üblichen Färbeverfahren in klaren rotstichig orangen Tönen (Farbkennzahl 6).

Weitere wertvolle Farbstoffe, die Baumwolle in den in Spalte 5 genannten Tönen färben, erhält man nach den Angaben von Beispiel 43, wenn man die in Spalte 2 aufgeführten Amine diazotiert und auf das Kondensationsprodukt kuppelt, das man durch Acylierung der in Spalte 3 genannten Kupplungskomponenten mit den in Spalte 4 erwähnten Reaktivkomponenten erhält.

| Bsp. | Amin | Kupplungskomponente | Reaktivkomponente | Farbton | Farbkennzahl |
|---|---|---|---|---|---|
| 44 | 2-Amino-6-sulfato-ethyl-sulfonyl-naphthalin-1-sulfonsäure | I-Säure | 2,4-Difluor-5,6-dichlorpyrimidin | rotstichig orange | 6 |
| 45 | " | " | 2,4-Difluor-5-chlor-pyrimidin | " | 6 |
| 46 | " | 2-Amino-8-hydroxy-naphthalin-6-sulfonsäure (γ-Säure) | Gemisch B | gelbstichig rot | 7 |
| 47 | " | " | Gemisch A | " | 7 |
| 48 | " | " | Gemisch C | " | 7 |
| 49 | " | I-Säure | Gemisch A | rotstichig orange | 6 |
| 50 | " | " | Gemisch C | " | 6 |
| 51 | 4-β-Sulfatoethyl-sulfonyl-anilin | " | Gemisch B | orange | 5 |
| 52 | " | " | Gemisch C | " | 5 |
| 53 | " | γ-Säure | Gemisch B | gelbstichig rot | 7 |
| 54 | " | " | Gemisch C | " | 7 |

| Bsp. | Amin | Kupplungskomponente | Reaktivkomponente | Farbton | Farbkennzahl |
|---|---|---|---|---|---|
| 55 | 4-β-Sulfatoethyl-sulfonyl-2-sulfo-anilin | γ-Säure | Gemisch C | rotstichig orange | 6 |
| 56 | " | " | Gemisch B | " | 6 |
| 57 | " | I-Säure | Gemisch B | orange | 5 |
| 58 | " | " | Gemisch C | orange | 5 |
| 59 | 8-β-Sulfatoethyl-sulfonyl-6-sulfo-2-amino-naphthalin | " | Gemisch B | rotstichig orange | 6 |
| 60 | 4-β-Sulfatoethyl-sulfonyl-anilin | 7-Amino-1-hydroxy-naphthalin-3,6-disulfonsäure | 4,6-Difluor-5-chlorpyrimidin | gelbstichig rot | 7 |
| 61 | " | 7-(β-Sulfatoethylamino)-1-hydroxynaphthalin-3-Sulfonsäure | " | gelbstichig rot | 7 |
| 62 | 2-Amino-6-β-sulfato-ethylsulfonyl-naphthalin-1-sulfonsäure | " | " | gelbstichig rot | 7 |
| 63 | " | 6-(β-Sulfatoethylamino)-1-hydroxynaphthalin-3-sulfonsäure | " | rotstichig orange | 6 |

| Bsp. | Amin | Kupplungskomponente | Reaktivkomponente | Farbton | Farbkennzahl |
|---|---|---|---|---|---|
| 64 | 4-β-Sulfatoethyl-sulfonylanilin | 6-(β-Sulfatoethyl-amino)-1-hydroxy-naphthalin-3-sulfon-säure | 4,6-Difluor-5-chlorpyrimidin | orange | 5 |
| 65 | " | I-Säure | " | orange | 5 |
| 66 | 4-β-Sulfatoethyl-sulfonyl-2-sulfoanilin | " | " | orange | 5 |
| 67 | " | Y-Säure | " | rotstichig orange | 6 |
| 68 | 4-β-Sulfatoethylsulfonyl-anilin | " | " | gelbstichig rot | 7 |
| 69 | " | 6-Amino-1-hydroxy-naphthalin-3,5-di-sulfonsäure | " | orange | 5 |

Beispiel 70

0,1 Mol 1-Aminoethyl-3-sulfomethyl-4-methyl-6-hydroxy-pyridon (2) werden in Wasser gelöst und mit 0,105 Mol 5-Chlor-4,6-difluor-pyrimidin umgesetzt. Der pH-Wert wird mit Sodalösung bei 7,5 gehalten. Nach

beendeter Kondensation wird mit der in Beispiel 1 hergestellten Diazotierung versetzt. Durch Abstumpfen mit Sodalösung auf pH 5 bis 6 wird die Kupplung herbeigeführt. Der Farbstoff wird ausgesalzen, abgesaugt, getrocknet und gemahlen. Es resultiert ein in Wasser leicht lösliches gelbes Farbstoffpulver. Nach einem der für Reaktivfarbstoffe üblichen Applikationsverfahren erhält man damit auf Baumwolle stark grünstichig gelbe Färbungen.

Der Farbstoff entspricht der Formel

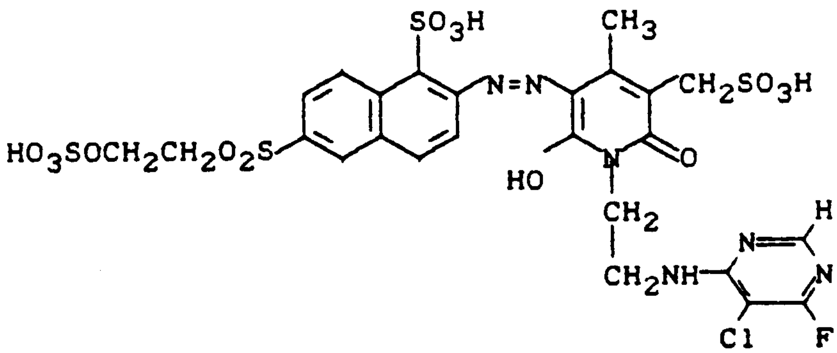

Beispiel 71

Einen gleich wertvollen Farbstoff erhält man nach der Arbeitsweise des Beispiels 70 unter Verwendung der Diazotierung aus Beispiel 29.

Der Farbstoff entspricht der Formel

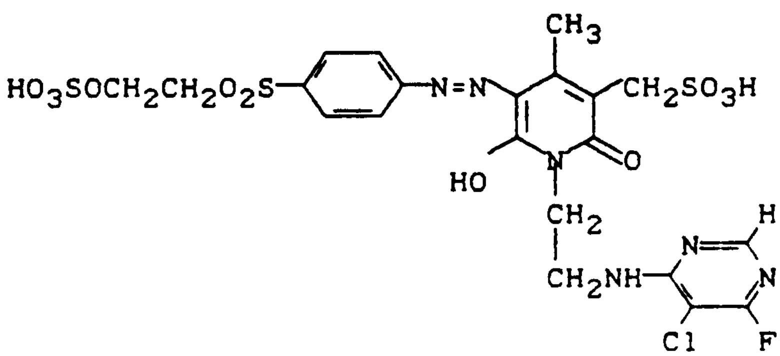

Beispiel 72

0,1 Mol 4-Acetylamino-2-aminobenzolsulfonsäure werden in 100 ml Wasser mit Natronlauge neutral gelöst, mit Schwefelsäure versetzt und bei 0 °C mit Natriumnitritlösung diazotiert. Nach einer Stunde wird überschüssiges Nitrit mit Amidosulfonsäure entfernt. Zu dieser Diazotierung gibt man die äquivalente Menge 1-(4'-Hydroxyethylsulfophenyl)-pyrazol-5-on-3-carbonsäure und hebt den pH mit Natronlauge auf 5. Nachdem die Kupplung beendet ist, wird aufgeheizt, mit Schwefelsäure versetzt und bei 90 °C die Acetylgruppe verseift. Der Farbstoff fällt aus, wird abgesaugt und getrocknet. Anschließend wird zur Sulfatierung der Hydroxygruppe in Schwefelsäure Monohydrat eingetragen. Nach dem Austragen auf Eiswasser wird mit 5-Chlor-4,6-difluor-pyrimidin bei pH 4 und 40 °C kondensiert. Der Farbstoff wird ausgesalzen, isoliert, getrocknet und gemahlen. Man erhält ein bräunliches Farbstoffpulver, das den Farbstoff der Formel

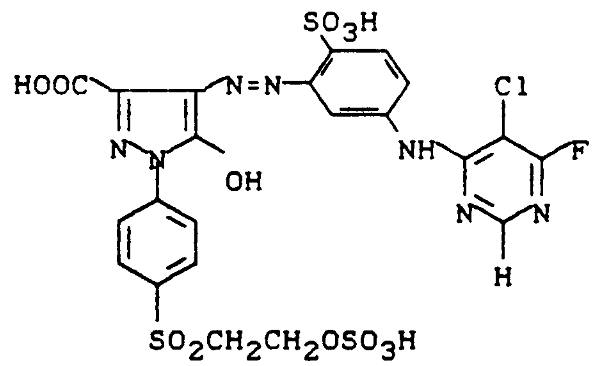

enthält und Baumwolle nach den für Reaktivfarbstoffe üblichen Applikationsmethoden in grünstichig gelben Tönen färbt.

Beispiel 73

Arbeitet man analog dem Beispiel 72 und setzt anstelle von 4-Acetylamino-2-aminobenzolsulfonsäure die 5-Acetylamino-2-amino-benzolsulfonsäure ein, erhält man den Farbstoff der Formel

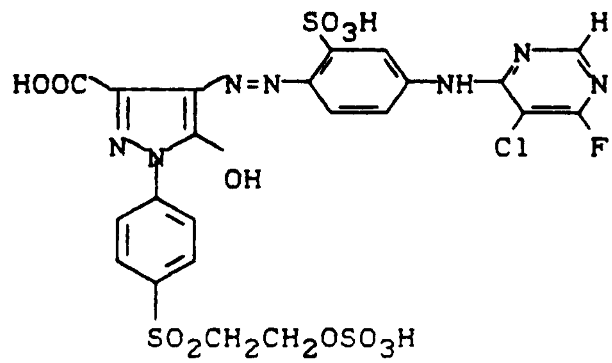

der Baumwolle nach den für Reaktivfarbstoffe üblichen Applikationsmethoden in goldgelben Tönen färbt.

Analog zu den beschriebenen Methoden lassen sich auch die in der folgenden Tabelle aufgeführten Farbstoffe herstellen, die Baumwolle in den angegeben Farbtönen färben.

| Beisp. | Farbstoff | Farbton |
|---|---|---|
| 74 | 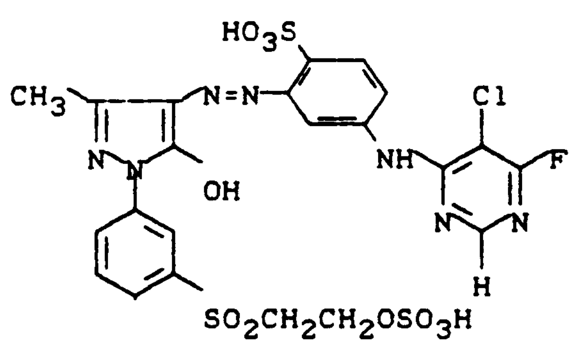 | grünstichig gelb |

| Beispiel | Farbstoff | Farbton |
|---|---|---|
| 75 | 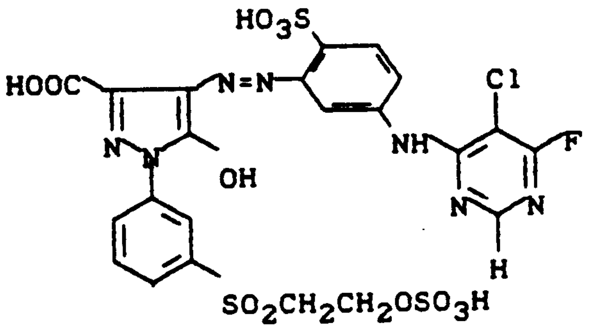 | grünstichig gelb |
| 76 | 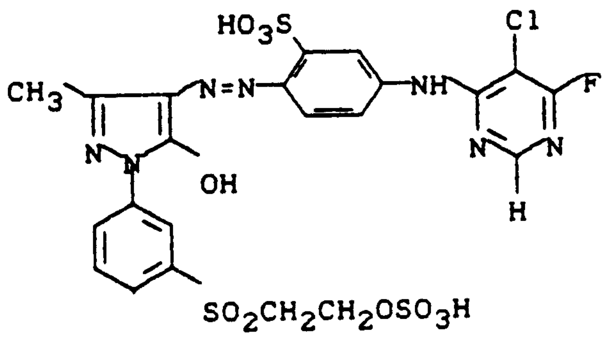 | goldgelb |
| 77 | 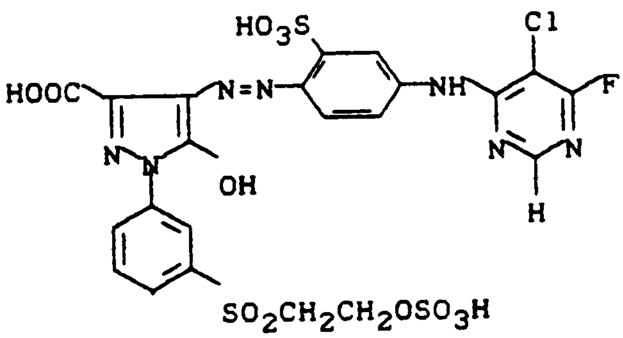 | goldgelb |
| 78 | 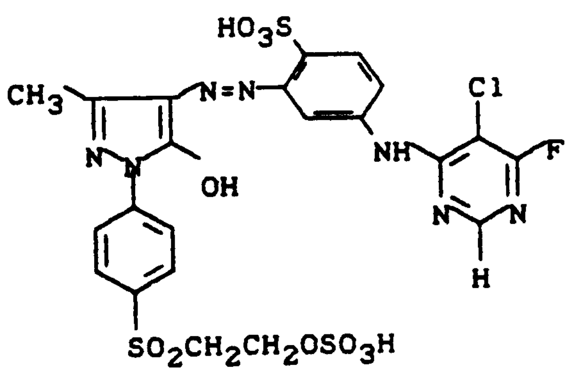 | grünstichig gelb |

| Beisp. | Farbstoff | Farbton |
| --- | --- | --- |
| 79 | 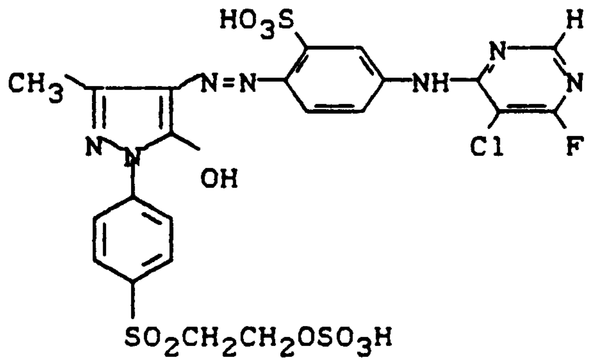 | goldgelb |

Beispiel 80

0,1 Mol 1-(4'-Amino-3'-sulfophenyl)-3-methyl-5-pyrazolon werden in 400 ml Wasser mit Natronlauge neutral gelöst, mit Salzsäure auf pH 4 gestellt und mit der äquivalenten Menge an 5-Chlor-4,6-difluorpyrimidin bei 35 ° C acyliert, wobei die entstehende Fluorwasserstoffsäure mit Sodalösung neutralisiert wird. Zu der so hergestellten Kupplungskomponente wird eine wie in Beispiel 1 hergestellte Diazotierung von 2-Amino-6-sulfatoethylsulfonyl-naphthalin-1-sulfonsäuregegeben und der pH-Wert mit Natriumacetatlösung bei 4 gehalten. Nach beendeter Kupplung wird der Farbstoff ausgesalzen, isoliert, getrocknet und gemahlen. Man erhält ein bräunliches Pulver, das den Farbstoff der Formel

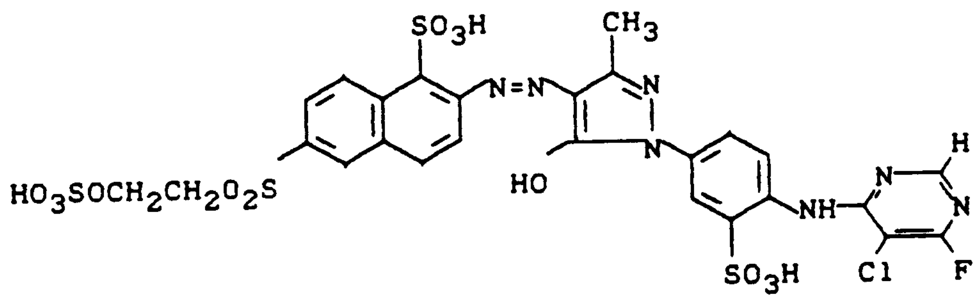

enthält und Baumwolle in gelben Tönen färbt.

Beispiel 81

Setzt man im Beispiel 80 anstelle der Diazotierung von 2-Amino-6-sulfatoethylsulfonyl-naphthalin-1-sulfonsäure die Diazotierung von 1-Amino-4-sulfatoethylsulfonylbenzol ein, erhält man ebenfalls einen wertvollen Farbstoff der Formel

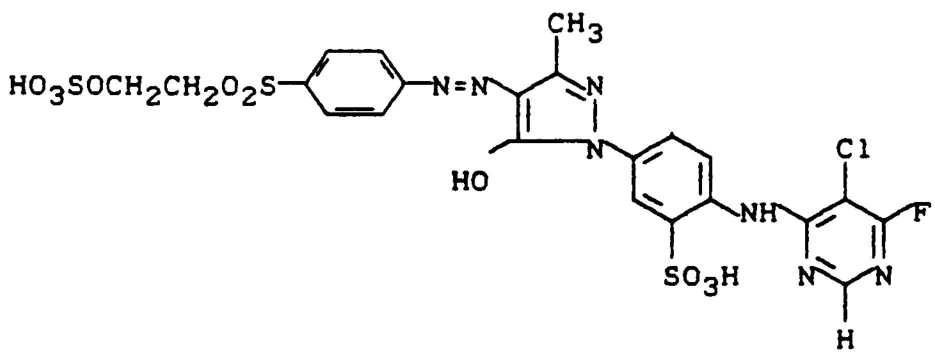

der Baumwolle nach den für Reaktivfarbstoffe üblichen Applikationsverfahren in gelben Tönen färbt.

Beispiel 82

0,1 mol 3,6-Disulfo-8-β-sulfatoethylsulfonyl-2-amino-naphthalin werden in 250 ml Eiswasser angerührt, mit 20 ml konzentrierter Salzsäure versetzt und dann eine Lösung von 7 g Natriumnitrit in 50 ml Wasser zugetropft. Man rührt 1 Stunde bei 0°C - 5°C nach und entfernt den Überschuß an Nitrit mit Amidosulfonsäure. In die Diazotierung tropft man dann 0,1 mol m-Toluidin ein, stellt den pH durch Einstreuen von Natriumbicarbonat auf pH 3 - 4 und führt bei 0°C - 5°C und pH 3 - 4 die Kupplung zu Ende. Anschließend stellt man den pH auf 6 und tropft bei 15°C - 20°C 0,1 mol des Gemisches B der Reaktivkomponenten ein. Man rührt bis zur Beendigung der Acylierung bei pH 6 - 6,5 und 20°C - 25°C. Dann wird der Farbstoff ausgesalzen, abgesaugt und getrocknet. Nach dem Mahlen erhält man ein gelbes Farbstoffpulver, das Baumwolle in rotstichig gelben Tönen färbt (Farbkennzahl 3).

Der Farbstoff entspricht der Formel

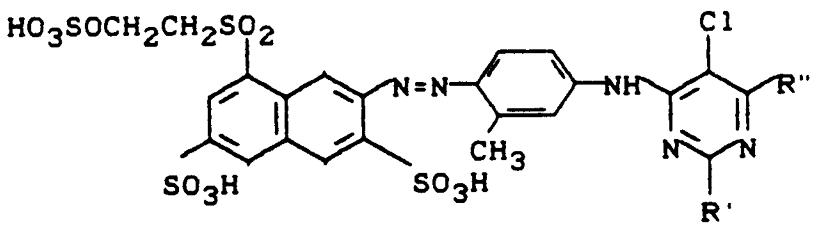

65 % R' = Cl, R'' = F
35 % R' = F, R'' = Cl

Weitere wertvolle Farbstoffe erhält man nach den Angaben dieses Beispiels, wenn man die in Spalte 2 genannten Diazokomponenten, die in Spalte 3 aufgeführten Kupplungskomponenten und die in Spalte 4 erwähnten Reaktivkomponenten einsetzt, wobei die in Spalte 5 angegebenen Farbtöne der Färbungen auf Baumwolle mit den entsprechenden Farbkennzahlen erhalten werden.

| Bsp. | Diazokomponente | Kupplungskomponente | Reaktivkomponente | Farbton | Farbkennzahl |
|---|---|---|---|---|---|
| 83 | 3,6-Disulfo-8-β-sulfatoethylsulfonyl-2-aminonaphthalin | m-Toluidin | Gemisch A | rotstichig gelb | 3 |
| 84 | " | " | Gemisch B | " | 3 |
| 85 | " | m-Aminoacetanilid | Gemisch A | " | 3 |
| 86 | " | " | Gemisch B | " | 3 |
| 87 | " | " | Gemisch C | " | 3 |
| 88 | " | m-Aminophenylharnstoff | Gemisch A | " | 3 |
| 89 | " | " | Gemisch B | " | 3 |
| 90 | " | " | Gemisch C | " | 3 |
| 91 | 6-β-Sulfatoethyl-sulfonyl-8-sulfo-2-amino-naphthalin | m-Toluidin | Gemisch B | " | 3 |
| 92 | " | m-Aminophenylharnstoff | Gemisch B | " | 3 |
| 93 | " | m-Aminoacetanilid | Gemisch B | " | 3 |

| Bsp. | Diazokomponente | Kupplungskomponente | Reaktivkomponente | Farbton | Farbkennzahl |
|---|---|---|---|---|---|
| 94 | 2-Sulfo-4-β-sulfato-ethylsulfonyl-anilin | m-Toluidin | Gemisch B | gelb | 3 |
| 95 | " | m-Aminoacetanilid | Gemisch B | " | 3 |
| 96 | " | m-Aminophenylharnstoff | Gemisch B | " | 3 |
| 97 | 6-β-Sulfatoethyl-sulfonyl-8-sulfo-2-amino-naphthalin | m-Sulfoacetylamino-anilin | Gemisch B | " | 3 |
| 98 | " | m-Sulfatoacetylamino-anilin | Gemisch B | " | 3 |
| 99 | 2-Amino-6-β-sulfato-ethylsulfonyl-naphthalin-1-sulfonsäure | 2-Amino-4-acetyl-aminobenzolsulfonsäure | 4,6-Difluor-5-chlor-pyrimidin | " | 3 |
| 100 | 4-β-Sulfatoethylsulfonyl-anilin | " | " | " | 3 |
| 101 | " | 1-Amino-naphthalin-6-sulfonsäure | " | " | 3 |
| 102 | 2-Amino-6-β-sulfatoethyl-sulfonylnaphthalin-1-sulfonsäure | " | " | " | 3 |

Beispiel 103

Durch Kupplung der Diazotierung aus Beispiel 1 mit dem Kondensationsprodukt aus 2,4-Diaminobenzolsulfonsäure mit 5-Chlor-4,6-difluorpyrimidin, das bei pH 4 und 40 °C in Gegenwart von Sodalösung

hergestellt wird, erhält man den Farbstoff der Formel

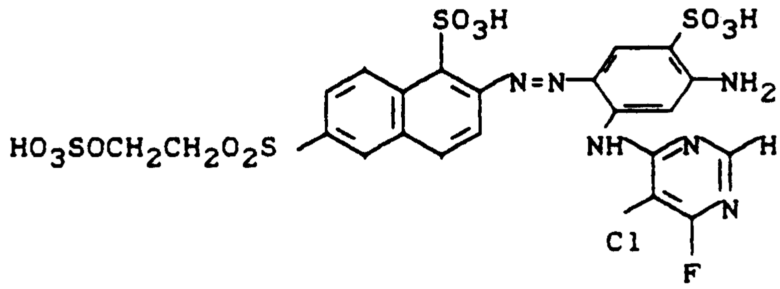

der Baumwolle in gelben Tönen färbt.

Beispiel 104

Analog zu Beispiel 103 erhält man bei Verwendung der Diazotierung aus Beispiel 29 den Farbstoff der Formel

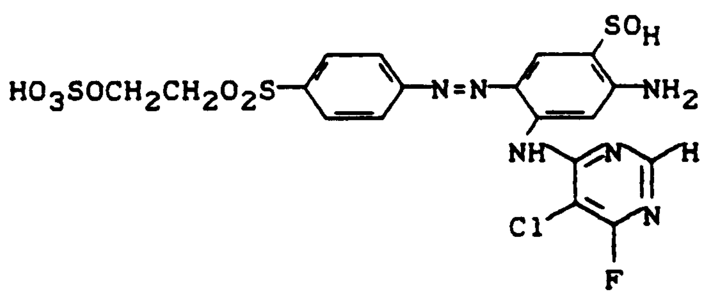

der Baumwolle in gelben Tönen färbt.

Beispiel 105

0,1 Mol des Azofarbstoffes der Formel

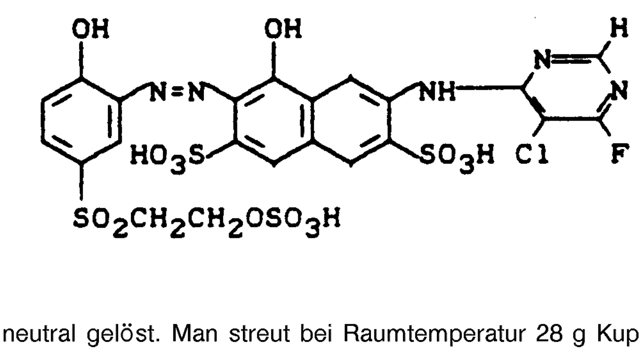

werden in 1 l Wasser neutral gelöst. Man streut bei Raumtemperatur 28 g Kupfersulfat ($CuSO_4 \cdot 5H_2O$) ein und hält durch gleichzeitiges Eintropfen von Sodalösung den pH zwischen 5,5 und 6,5. Nach beendeter Kupferung wird der Farbstoff mit Kochsalz ausgesalzen, abgesaugt, getrocknet und gemahlen.

Man erhält ein dunkles Pulver, das sich leicht in Wasser löst und Baumwolle nach einem der für Reaktivfarbstoffe üblichen Färbeverfahren rubin färbt. Der Farbstoff entspricht der Formel

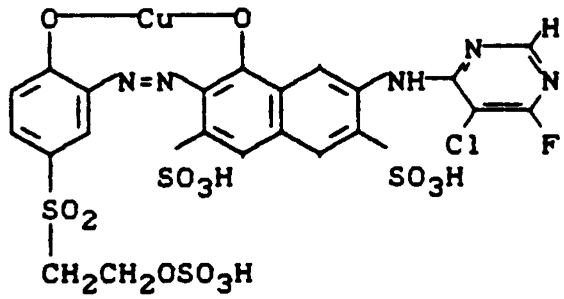

Der in diesem Beispiel verwendete Azofarbstoff wird erhalten, indem man 2-Amino-4-sulfatoethylsulfonylphenol diazotiert und bei pH 5,5 bis 6,5 auf das Kondensationsprodukt kuppelt, das man durch Acylierung von 2-Amino-8-hydroxy-naphthalin-3,6-disulfonsäure mit 5-Chlor-4,6-difluor-pyrimidin erhält.

Beispiel 106

In die analog Beispiel 29 hergestellte Diazotierung von 1-Amino-4-sulfatoethylsulfonylbenzol wird das bei pH 4 und 40 °C hergestellte Kondensationsprodukt aus 1-Hydroxy-3-sulfo-7-(2'-sulfo-4'-aminophenylamino)-naphthalin und 5-Chlor-4,6-difluor-pyrimidin gegeben. Durch Einstellen eines pH-Wertes von 6 bis 7 mit Sodalösung wird der Farbstoff der Formel

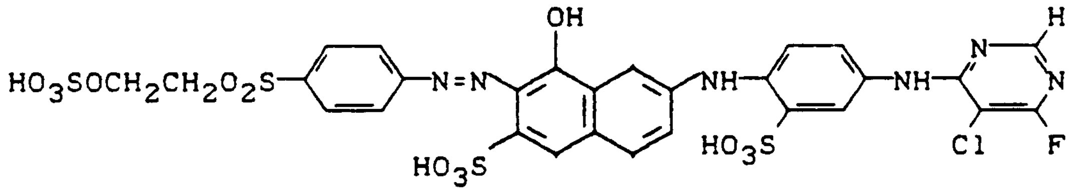

hergestellt. Nach beendeter Kupplung wird der Farbstoff ausgesalzen, isoliert, getrocknet und gemahlen. Man erhält ein dunkelbraunes, leicht in Wasser lösliches Pulver, das Baumwolle braun färbt.

Beispiel 107

0,1 mol des Farbstoffs der Formel

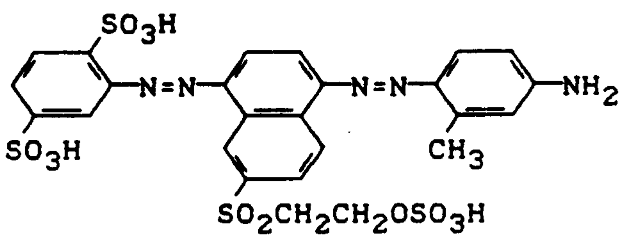

werden in 1.000 ml Wasser neutral gelöst und tropfenweise mit 18,5 g des Reaktivkomponenten-Gemisches C bei 15 °C - 20 °C versetzt, wobei man durch Einstreuen von Natriumbicarbonat einen pH von 6 - 7 einhält. Nach beendeter Kondensation wird der Farbstoff ausgesalzen, abgesaugt und getrocknet. Nach dem Mahlen erhält man ein braunes Farbstoffpulver, das Baumwolle in rotstichig braunen Tönen färbt (Farbkennzahl 32). Der erhaltene Farbstoff entspricht der Formel

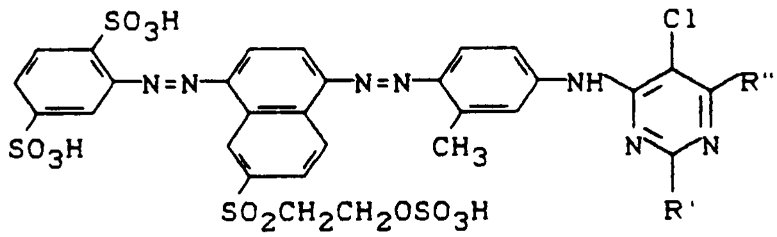

65 % R' = C, R'' = F
35 % R' = F, R'' = Cl

Der in diesem Beispiel als Ausgangsmaterial eingesetzte Farbstoff wird erhalten durch Kupplung von diazotiertem 1-Amino-2,5-disulfobenzol (Diazokomponente) auf 1-Amino-6-$\beta$-sulfatoethyl-sulfonyl-naphthalin (Mittelkomponente) bei pH 3 - 4, Diazotierung des erhaltenen Monoazofarbstoffs und Kupplung auf m-Toluidin (Endkomponente) bei pH 3 - 4.

Weitere wertvolle Farbstoffe werden nach den Angaben dieses Beispiels erhalten, wenn man die nachfolgend aufgeführten Diazo-, Mittel-, End- und Reaktivkomponenten einsetzt, wobei Farbstoffe resultieren, die Baumwolle rotstichig braun färben (Farbkennzahl 32).

| Bsp. | Diazokomponente | Mittelkomponente | Endkomponente | Reaktivkomponente |
|---|---|---|---|---|
| 108 | 2-Amino-4,6,8-trisulfo-naphthalin | 1-Amino-7-β-sulfato-ethylsulfonyl-naphthalin | m-Toluidin | Gemisch C |
| 109 | 2-Amino-4,6,8-trisulfo-naphthalin | " | " | " |
| 110 | 1-Amino-3,5,7-trisulfo-naphthalin | " | " | " |
| 111 | 2-Amino-4,6,8-trisulfo-naphthalin | " | " | " |
| 112 | 6-β-Sulfatoethyl-sulfonyl-8-sulfo-naphthalin | 1-Amino-7-sulfo-naphthalin | " | " |
| 113 | 2-Sulfo-4-β-sulfato-ethylsulfonyl-anilin | " | " | " |
| 114 | 2-Amino-naphthalin-4,8-disulfonsäure | 1-Amino-7-β-sulfatoethylsulfonyl-naphthalin | " | 5-Chlor-4,6-difluor-pyrimidin |
| 115 | 2-Amino-6-β-sulfatoethylsulfonyl-naphthalin-8-sulfonsäure | 1-Amino-6-naphthalin-sulfonsäure | " | " |
| 116 | 2-Amino-6-β-sulfatoethylsulfonyl-naphthalin-1-sulfonsäure | " | " | " |
| 117 | 2-Amino-5-β-sulfatoethylsulfonyl-benzol-1-sulfonsäure | " | " | " |

Beispiel 118

0,2 mol der Verbindung

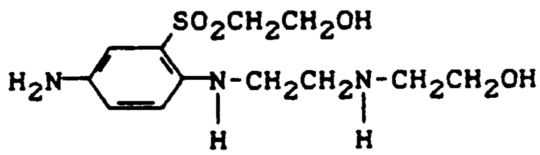

(dargestellt durch Umsetzung von 1-Chlor-2-(β-hydroxyethylsulfonyl)-4-nitrobenzol mit dem Eisessigaddukt des Diamins der Formel

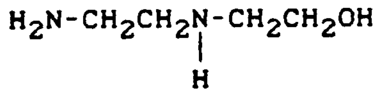

in Isopropanol und anschließender katalytischer Hydrierung mit Raney-Nickel und Wasserstoff] werden bei 80 °C mit 0,1 mol Chloranil in Isopropanol und Gegenwart von Natriumacetat kondensiert. Das dunkelbraune, ausgefallene Produkt der Formel

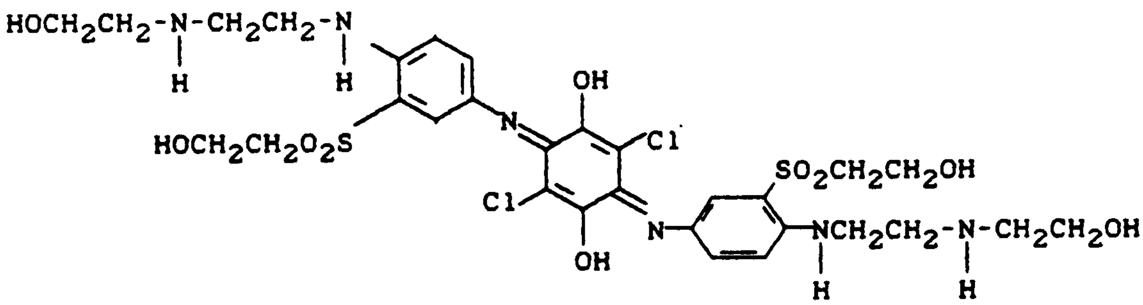

wird abgesaugt, getrocknet und in 250 ml 20 %igem Oleum eingetragen. Zu diesem Ansatz fügt man 0,2 mol Kaliumperoxidsulfat hinzu und rührt mehere Stunden bei 20 °C - 25 °C nach.

Anschließend wird auf Eis ausgetragen, die blaue Farbbase der Struktur

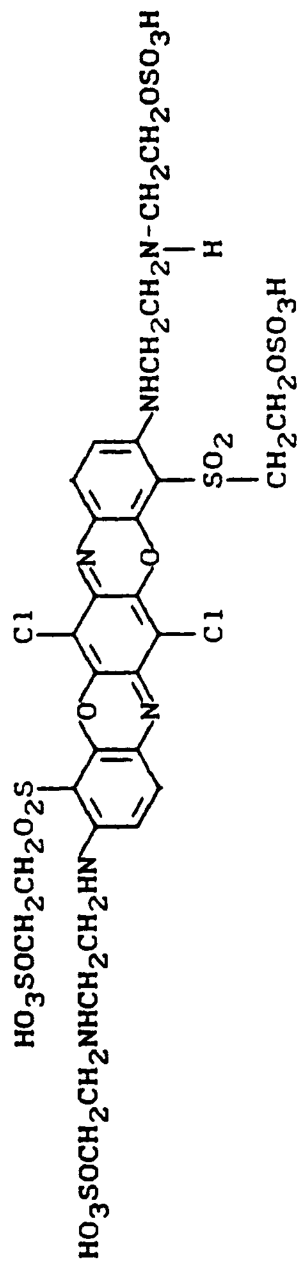

isoliert, in Wasser angeschlagen und mit 0,2 mol des Gemisches C der Reaktivkomponenten bei 0 - 5 °C und pH 6,5 bis 7,5 kondensiert.

Der Farbstoff wird mit Natriumchlorid ausgesalzen, isoliert, getrocknet und gemahlen. Man erhält ein dunkles Farbstoffpulver, das den Farbstoff der Formel

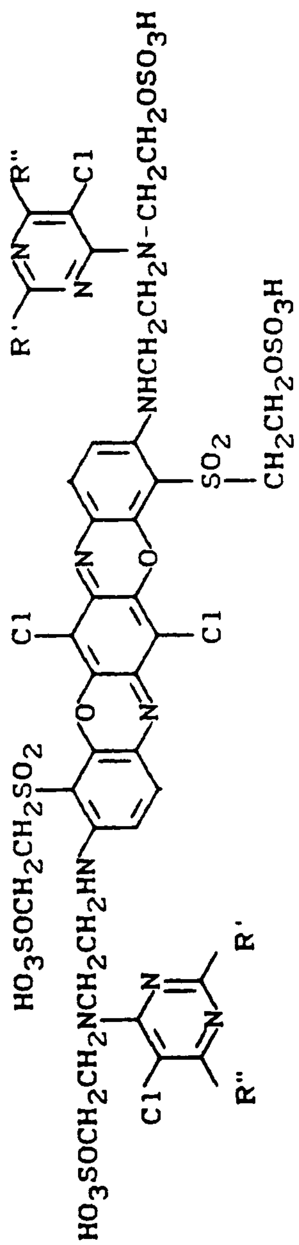

70 % R' = Cl, R" = F
30 % R' = F, R" = Cl
enthält und Baumwolle und Wolle nach den für Reaktivfarbstoffe üblichen Färbe- und Druckmethoden in blauen Tönen färbt (Farbkennzahl 14).

Beispiel 119

Ersetzt man in Beispiel 118 das Pyrimidinderivatgemisch C durch 5-Chlor-4,6-difluorpyrimidin erhält man den Farbstoff der Formel

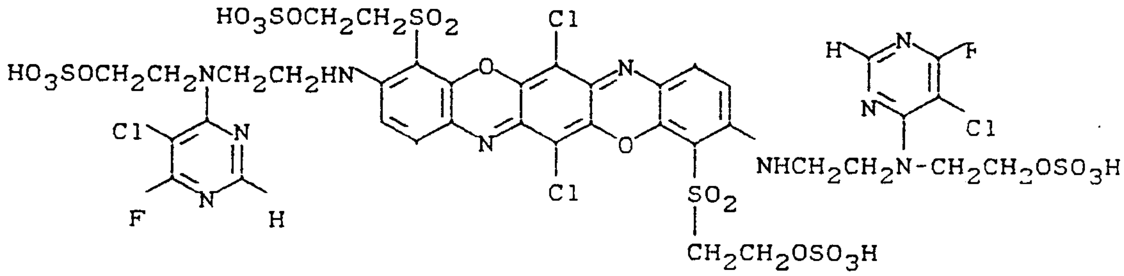

der Baumwolle und Wolle nach den für Reaktivfarbstoffe üblichen Färbe- und Druckmethoden in blauen Tönen färbt.

Beispiel 120

52 g des Farbstoffes 1-Amino-4-(3'-amino-4'-β-hydroxyethylsulfonyl-phenylamino)-anthrachinon-2-sulfonsäure (hergestellt durch Kondensation von 1,3-Diaminobenzol-4-β-hydroxyethylsulfon und 1-Amino-4-brom-anthrachinon-2-sulfonsäure) werden als trockene, gemahlene Ware unter Rühren in 200 g Schwefelsäure Monohydrat eingetragen.

Man läßt über Nacht bei Raumtemperatur rühren und gießt die Lösung dann unter Rühren auf eine Mischung von 500 g Eis und 150 g Kaliumchlorid.

Der ausgeschiedene Farbstoff wird dann abgesaugt, mit gesättigter Natriumchloridlösung gewaschen und in 300 Teilen Wasser unter Zugabe von Natriumbicarbonat neutral gelöst.

In die Lösung streut man 18,5 g des Gemisches C der Reaktivkomponenten ein, erwärmt auf 20 bis 30 °C und hält den pH durch Eintropfen von Sodalösung zwischen 5 und 6. Nach beendeter Kondensation wird geklärt und aus dem Filtrat der Farbstoff durch Aussalzen abgeschieden. Nach einem der für Reaktivfarbstoffe üblichen Applikationsverfahren erhält man auf Baumwolle ein klares Blau mit guten Allgemeinechtheiten (Farbkennzahl 14).

Der Farbstoff entspricht der Formel

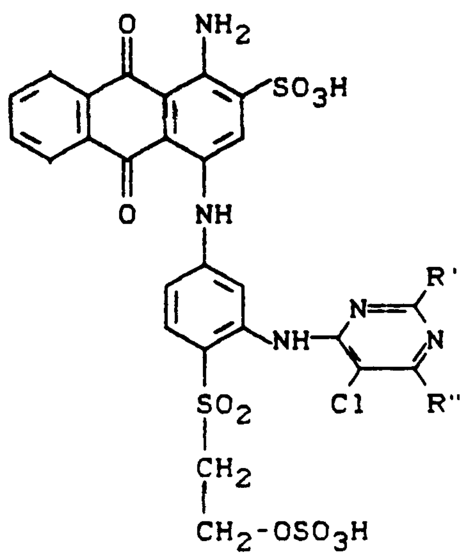

70 % R' = Cl, R" = F
30 % R' = F, R" = Cl

Beispiel 121

54 g des Farbstoffes 1-Amino-4-(2'-methyl-5'-amino-4'-β-hydroxy-ethylsulfonyl-phenylamino)-anthrachinon-2-sulfonsäure (hergestellt durch Kondensation von 1-Amino-4-brom-anthrachinon-2-sulfonsäure

und 2,4-Diaminotoluol-5-β-hydroxyethylsulfon) werden analog Beispiel 120 umgesetzt.

Es wird der Farbstoff der Formel

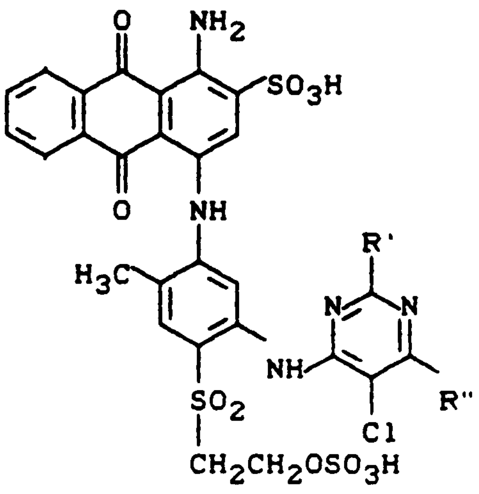

70 % R' = CL, R'' = F
30 % R' = F, R'' = Cl
erhalten, der auf Wolle und Baumwolle ein echtes, klares Blau färbt. (Farbkennzahl 14).

Nach der Arbeitsweise des Beispiels 120 lassen sich bei Verwendung der entsprechenden Zwischenprodukte auch die folgenden Farbstoffe herstellen:

Beispiel 122

**Farbton**

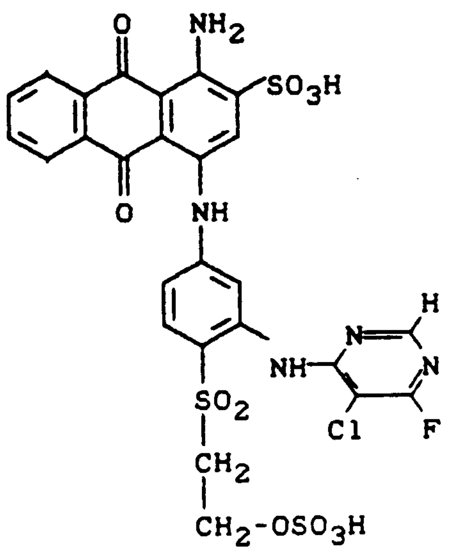

**klares Blau**

Beispiel 123

Farbton

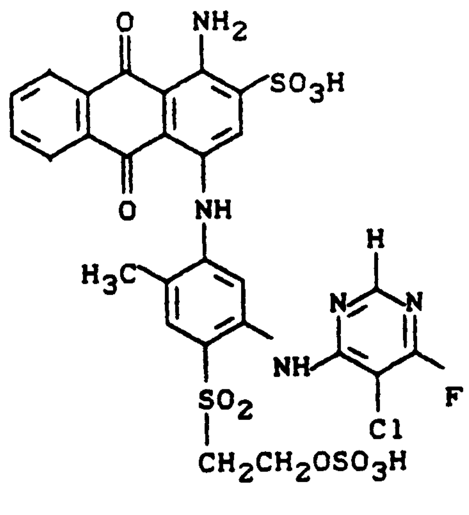

klares Blau

Beispiel 124

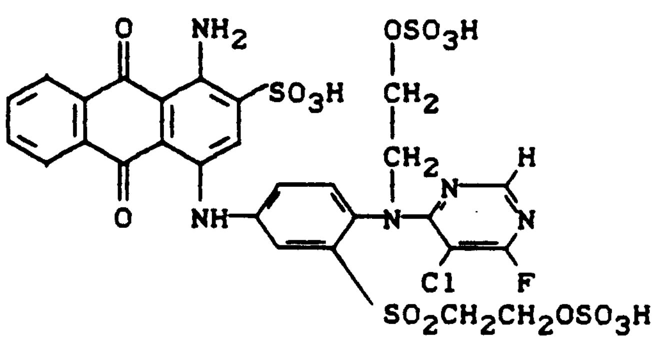

grünstichig blau

Beispiel 125

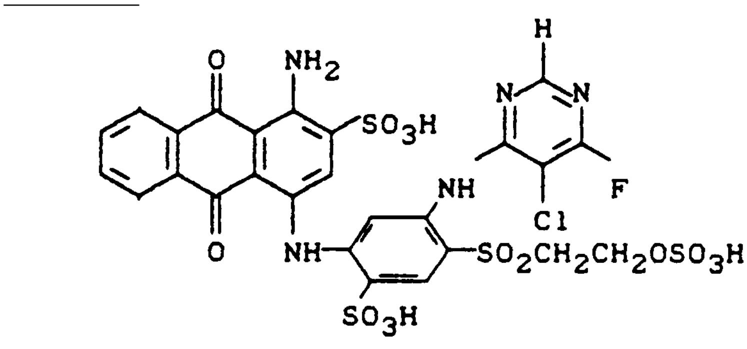

klares Blau

Beispiel 126

23,2 g 2-Carboxyphenylhydrazin-4-sulfonsäure und 21,3 g 4-Acetaminobenzaldehyd-2-sulfonsäure werden in wäßriger Lösung kondensiert und das erhaltene Hydrazon in Gegenwart von Soda und 25 g Kupfersulfat mit der Diazoniumverbindung von 22,7 g 2-Aminophenol-4-(β-hydroxyethyl)sulfon gekuppelt. Nach beendeter Reaktion wird unter Zusatz von 15 g Soda so lange bei 100 °C verseift, bis dünnschichtchromatographisch eine vollständige Verseifung der Acetylgruppe nachgewiesen werden kann. Der Farbstoff wird dann durch Zugabe von Natriumchlorid ausgeschieden, isoliert und getrocknet. Nach dem Mahlen wird das Farbstoffpulver unter Rühren in Pyridin eingetragen.

Man erwärmt auf 80 °C und gibt die gleiche Menge an Amidosulfonsäure wie an Farbstoffpulver hinzu. Die Temperatur steigt hierbei bis auf 105 °C an. Bei 100 - 105 °C wird noch 1/2 Stunde nachgerührt. Dann wird Pyridin durch Abdestillieren und Trocknen im Vakuum entfernt, der Rückstand in Wasser gelöst und mit 18,5 g des Gemisches C der Reaktivkomponenten bei 20 °C und pH 6 bis 6,5 kondensiert.

Nach beendeter Reaktion wird der Farbstoff mit Natriumchlorid abgeschieden, isoliert und getrocknet. Nach dem Mahlen erhält man ein Farbstoffpulver, das das Natriumsalz der Verbindung der Formel

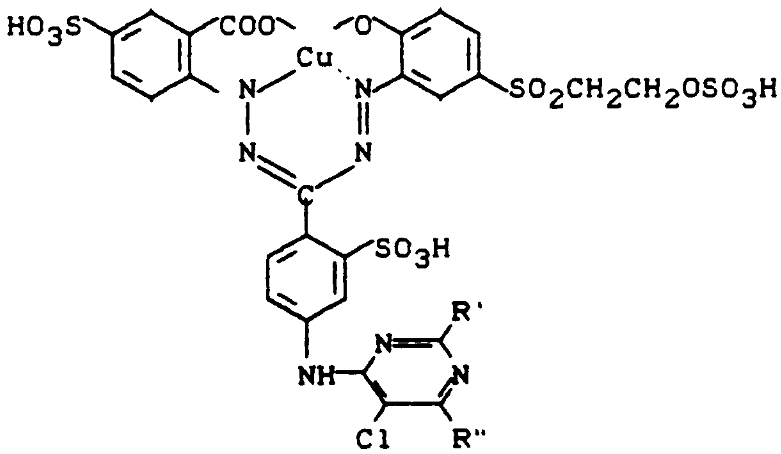

70 % R' = Cl, R'' = F
30 % R' = F, R'' = Cl
enthält und Baumwolle mit blauer Nuance färbt.

Weitere erfindungsgemäße blaue Reaktivfarbstoff erhält man, wenn man wie in Beispiel 126 beschrieben, die folgenden Phenylhydrazine und aromatischen Aldehyde zu Hydrazonen umsetzt, mit den ebenfalls nachfolgend angegebenen Diazokomponenten in Gegenwart von $CuSO_4$ kuppelt und die entstandenen Farbstoffe analog Beispiel 126 verseift, sulfatiert und mit dem Gemisch C der Reaktivkomponenten acyliert.

| Bsp. | Phenylhydrazin | Aldehyd | Diazokomponenten |
|---|---|---|---|
| 127 | 2-Carboxy-5-(β-hydroxyethylsulfonyl)-phenylhydrazin | Benzaldehyd | 3-Acetylamino-4-hydroxy-5-amino-benzolsulfonsäure |
| 128 | 2-Carboxy-4-acetylamino-phenylhydrazin | " | 4-β-Hydroxyethylsulfonyl-2-aminophenol-6-sulfonsäure |

Weitere wertvolle Farbstoffe erhält man, wenn man in den Beispielen 126 - 128 anstelle der Reaktivkomponente C die Reaktivkomponente 5-Chlor-4,6-difluorpyrimidin einsetzt. Die Farbstoffe färben Baumwolle in blauen Farbtönen.

Beispiel 129

1 Mol des Farbstoffs der Formel

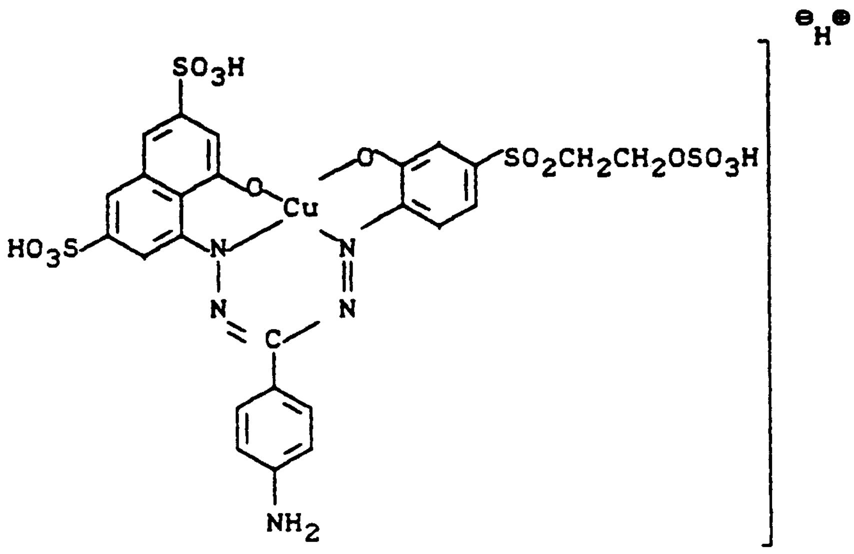

wird in 1700 ml Wasser gelöst und bei pH 6,5 und 40-50 °C mit 1,05 Mol 5-Chlor-4,6-difluorpyrimidin kondensiert, wobei die freiwerdende Säure mit 20 %-iger Sodalösung neutralisiert wird.

Der für die Reaktion eingesetzte Farbstoff wird folgendermaßen hergestellt:

8-Hydrazino-1-(phenylsulfonyloxy)-naphthalin-3,6-disulfonsäure wird in Wasser verrührt und bei pH 5 mit 4-Acetylamino-benzaldehyd zum Hydrazon kondensiert. 2-Amino-5-($\beta$-Hydroxyethylsulfonyl)phenol wird in Wasser verrührt und in Gegenwart von Kupfersulfatlösung mit Natriumnitritlösung diazotiert. Diese kupferhaltige Diazotierung wird zu dem Hydrazon gegeben und die Kupplung bei pH 11 mit Natronlauge durchgeführt. Anschließend wird auf 70 °C aufgeheizt, wobei die Phenylsulfonylgruppe verseift wird. Zur Verseifung der Acetylaminogruppe werden weitere 10 Vol-% einer 40%-igen Natronlaugelösung zugesetzt und 4 Stunden auf 95 °C erwärmt. Die Lösung wird heiß mit Natriumchlorid gesättigt, mit Salzsäure auf pH 7 gestellt und kaltgerührt. Die nach Filtration erhaltene Farbbase wird entsprechend DE-A-1 443 877 sulfatiert mit Amidosulfonsäure in Gegenwart von organischen Lösungsmitteln bei erhöhter Temperatur.

Nach vollständiger Kondensation mit dem Pyrimidinderivat wird der Farbstoff ausgesalzen, isoliert und getrocknet. Man erhält ein dunkles Farbstoffpulver, das die Verbindung der Formel

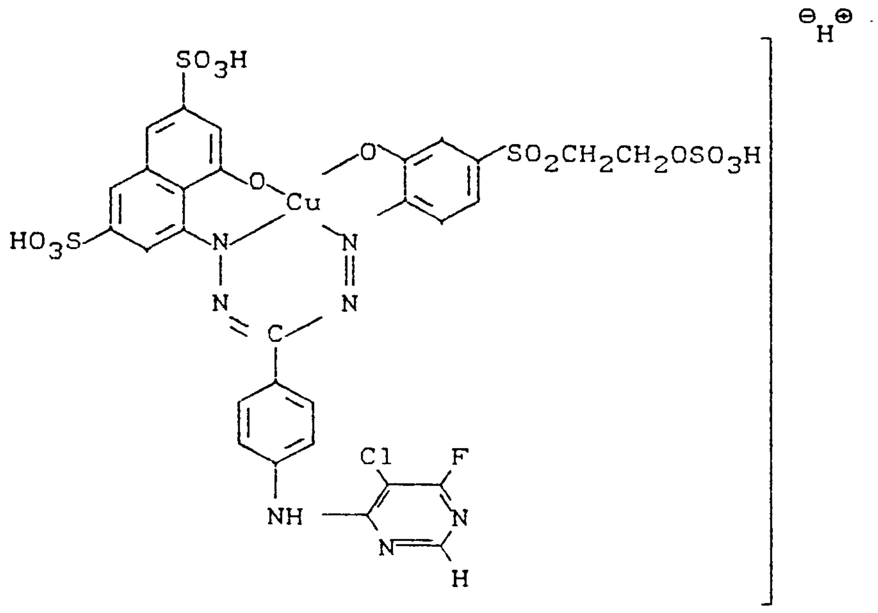

enthält und Baumwolle in graugrünen Tönen färbt.

Analog Beispiel 127 erhält man weitere interessante Farbstoffe, wenn man das Hydrazin aus Beispiel 127 mit den in der folgenden Tabelle aufgeführten Aldehyden zu Hydrazonen kondensiert, die angegebene

2-Aminophenolkomponente diazotiert und in Anwesenheit eines Metallsalzes kuppelt, den Phenylsulfonylester und die Acylaminogruppe verseift, anschließend sulfatiert und abschließend mit 5-Chlor-4,6-difluorpyrimidin kondensiert. Die so erhaltenen Reaktivfarbstoffe liefern auf Cellulose-Materialien hochechte Färbungen und Drucke mit den angegebenen Farbtönen.

| Bsp. | Aldehyd | 2-Aminophenol-komponente | Metallsalz | Reaktivrest | Farbton |
|---|---|---|---|---|---|
| 130 | 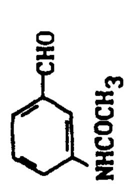 | 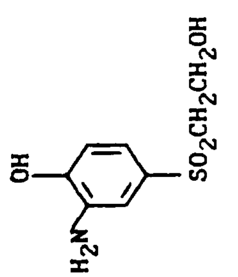 | $CuSo_4$ | 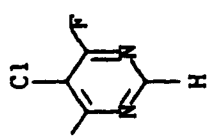 | graugrün |
| 131 | 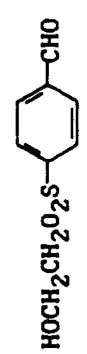 | 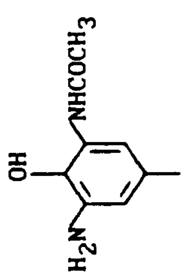 | " | " | grau |
| 132 | " | 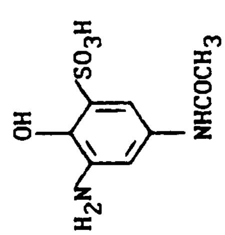 | " | " | grau |

## Patentansprüche

**1.** Reaktivfarbstoffe der Formel

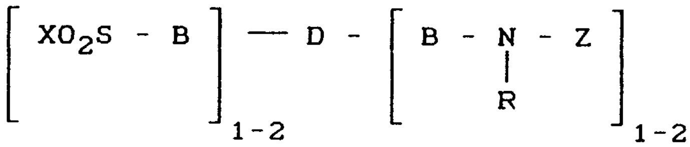

(1)

worin

D = Rest eines Farbstoffes der metallfreien Monoazo-, metallhaltigen Monoazo-, Anthrachinon-, Formazan- und Dioxazin- Reihe,

X = $CH=CH_2$ oder $CH_2CH_2$-Y, worin

Y = alkalisch eliminierbarer Rest, z. B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3\ ^+A^-$,

B = direkte Bindung oder Brückenglied an ein Ring C-Atom eines aromatisch-carbocyclischen oder an ein Ring C-Atom oder N-Atom eines aromatisch-heterocyclischen Ringes in D

R = H oder gegebenenfalls substituiertes $C_1$-$C_4$-Alkyl

Z = faserreaktiver Rest der Formel

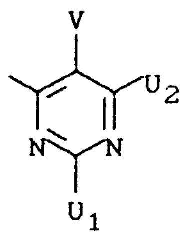

(2)

worin

V = H, Cl oder Br

$U_1$, $U_2$ = H, Cl, F mit der Maßgabe, daß $U_1$ verschieden von $U_2$ ist und einer der Reste für F steht.

**2.** Farbstoffe des Anspruchs 1 der Formeln

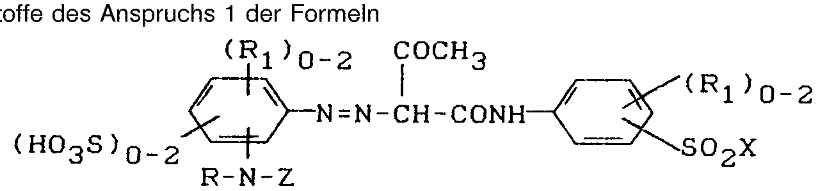

(3)

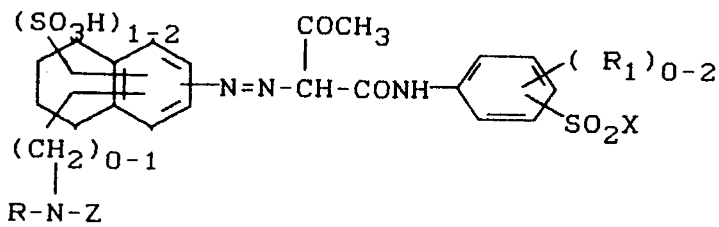
(4)

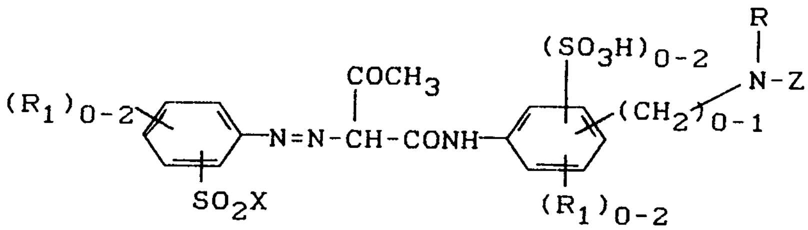
(5)

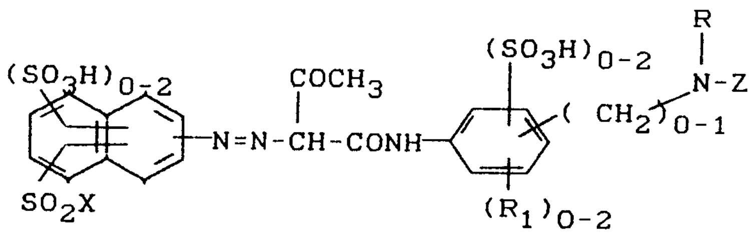
(6)

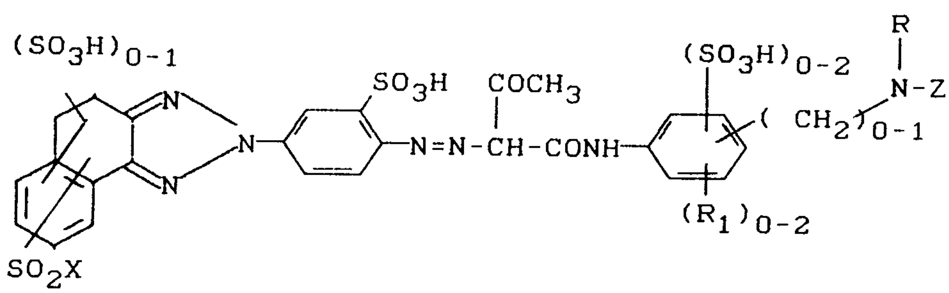
(7)

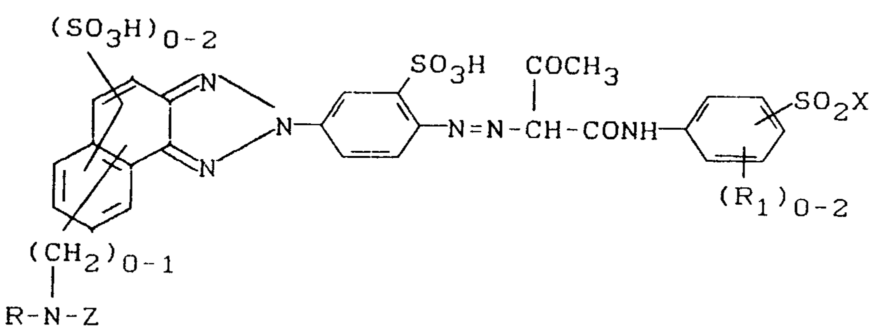
(8)

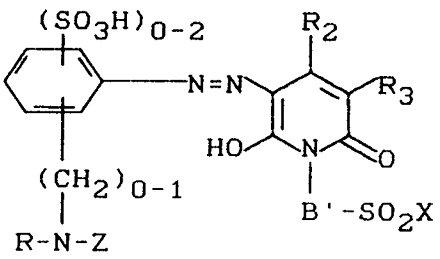

(9)

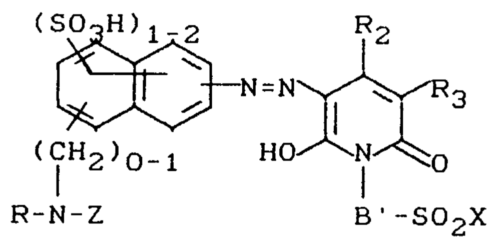

(10)

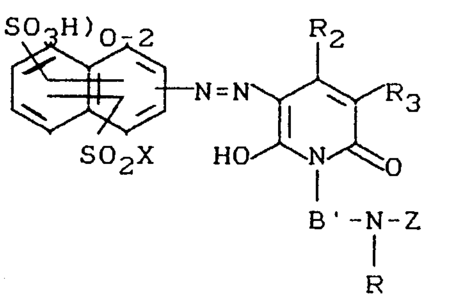

(11)

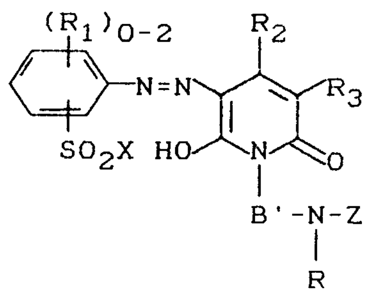

(12)

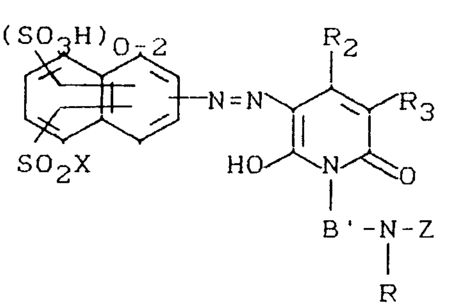

(13)

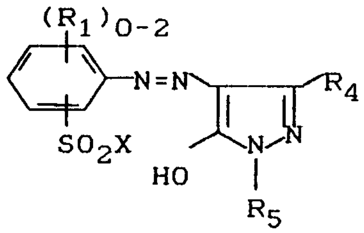

(14)

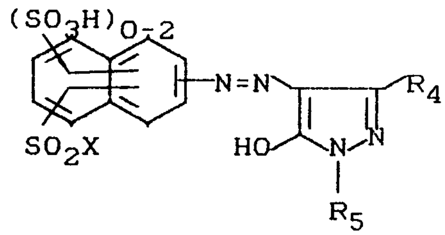

(15)

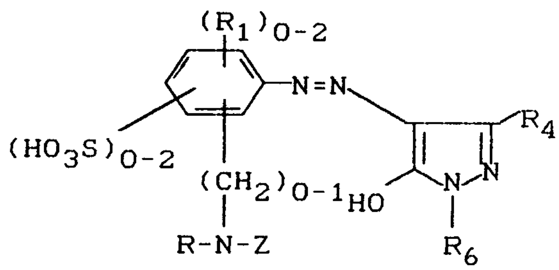

(16)

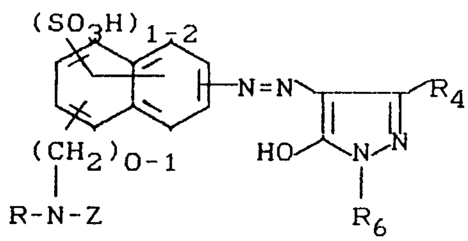

(17)

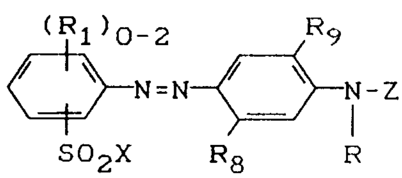

(18)

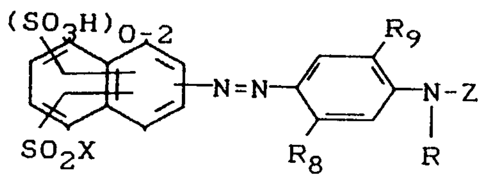

(19)

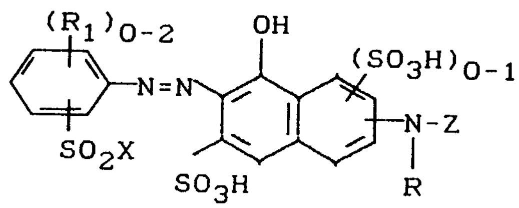

(20)

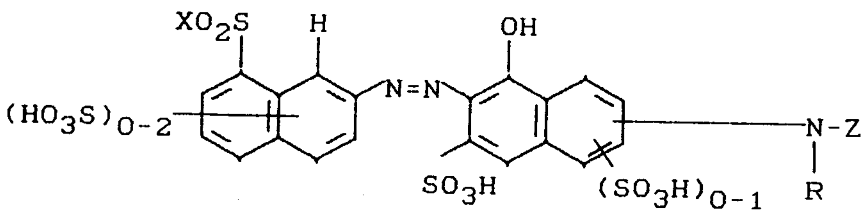

(21)

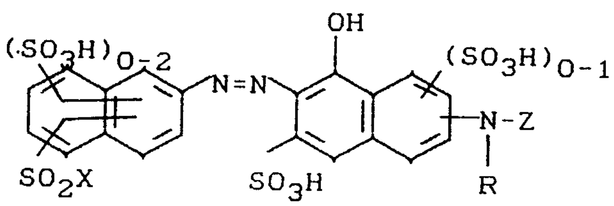

(22)

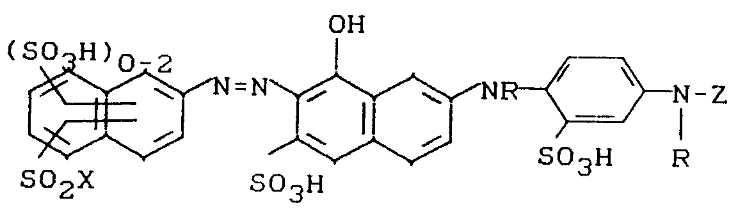

(23)

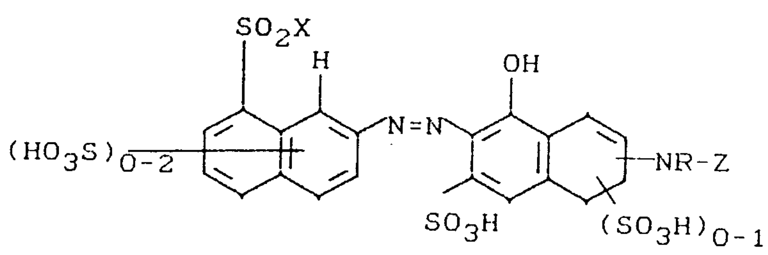

(24)

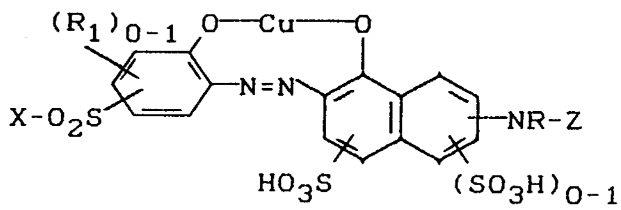

(25)

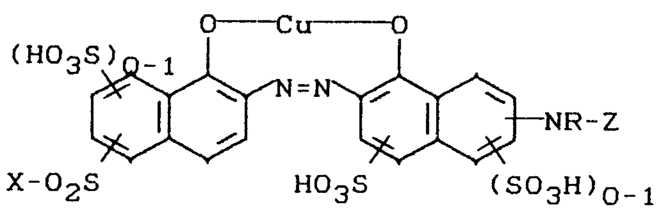

(26)

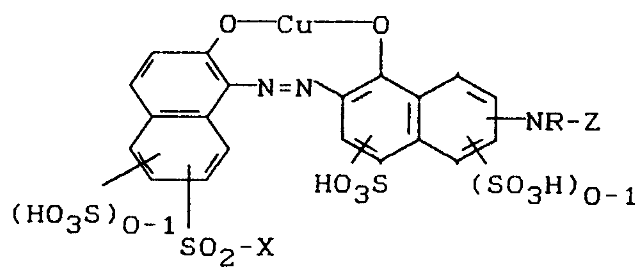

(27)

1:2-Metallkomplexe von Farbstoffen

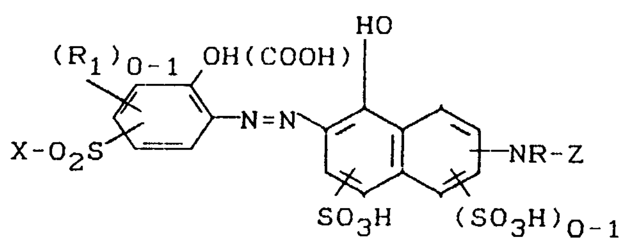

(28)

insbesondere die Cr- und Co-Komplexe, die zwei Farbstoffe (28) oder einen Farbstoff (28) und einen beliebigen anderen metallkomplexbildenden Farbstoff, insbesondere einen Azo- oder Azomethinfarbstoff enthalten

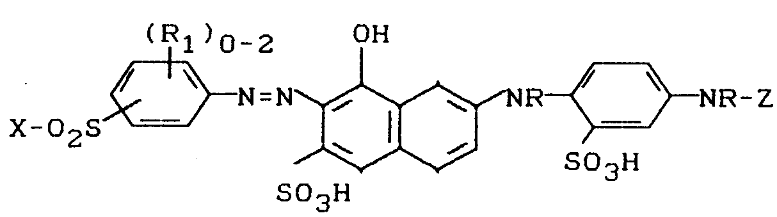

(29)

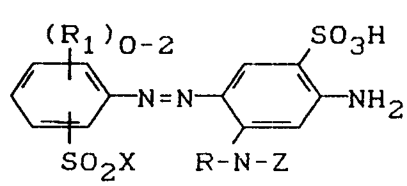

(30)

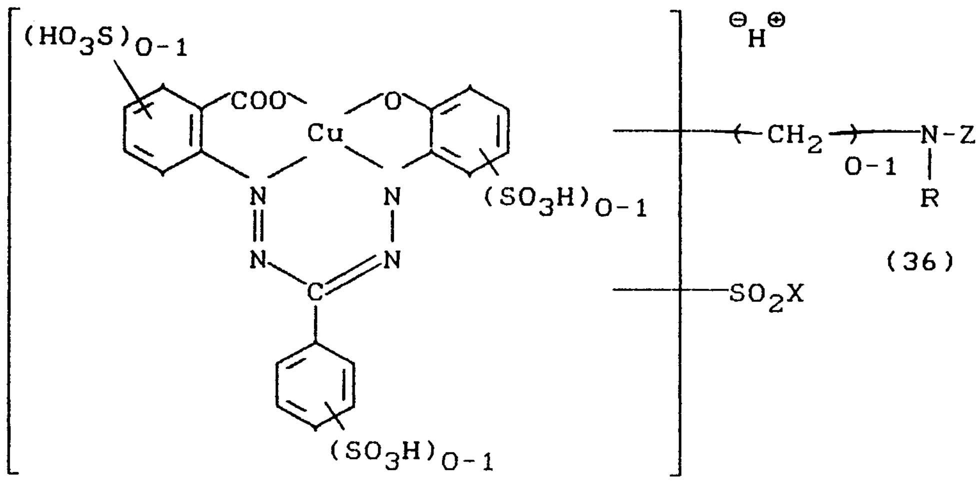

(36)

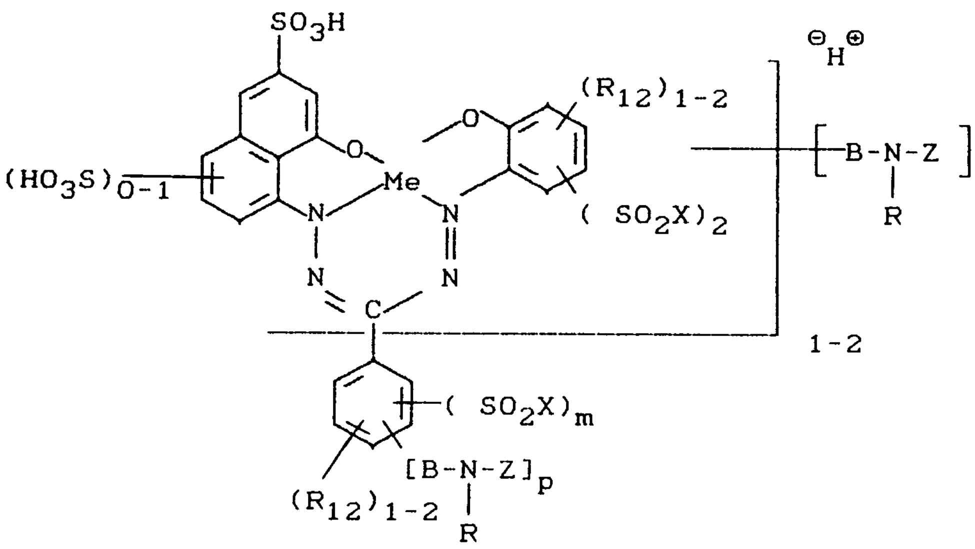

(37)

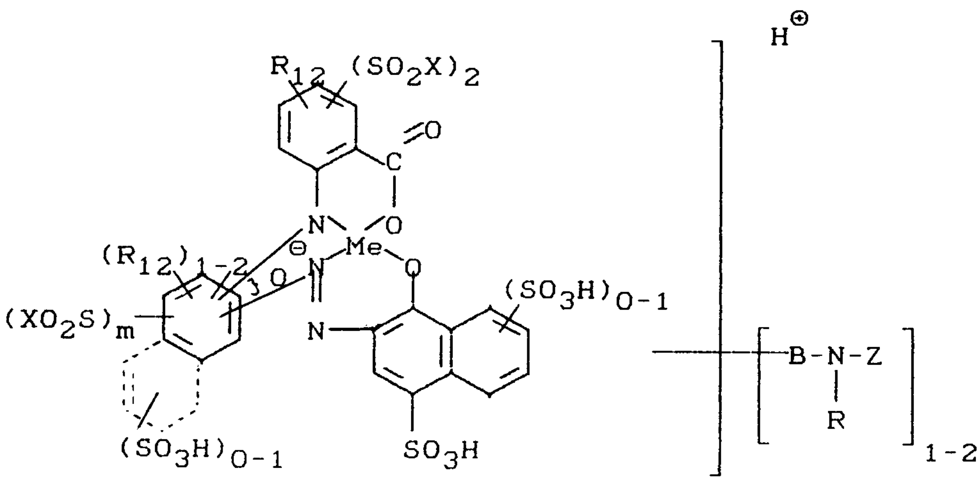

(38)

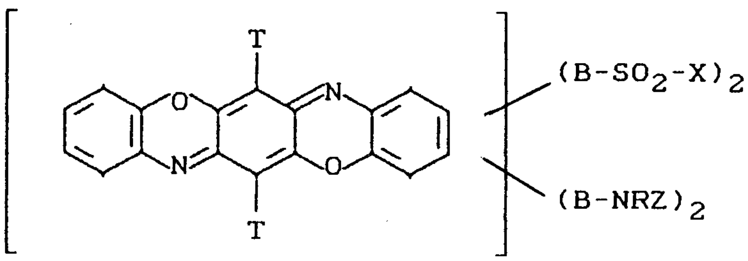

(39)

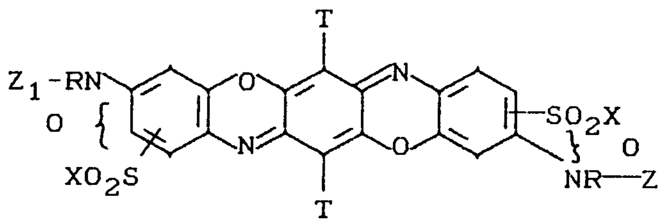

(40)

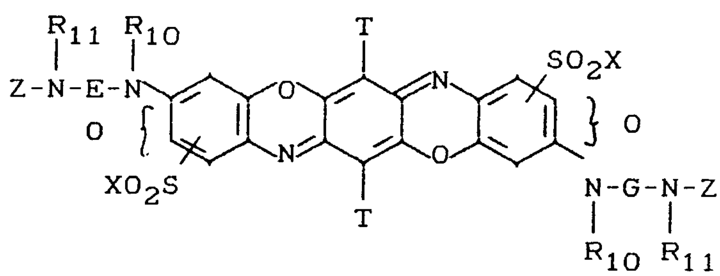

(41)

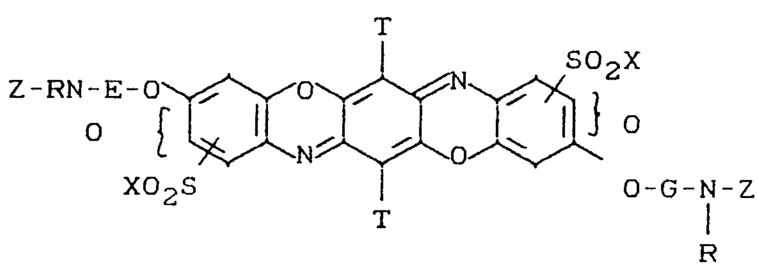

(42)

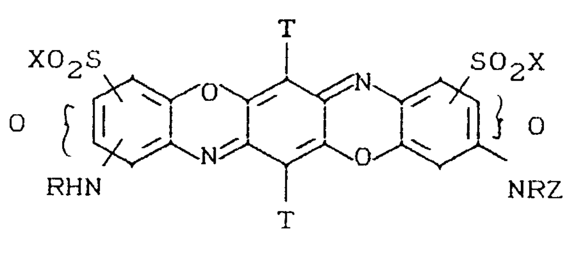

(43)

worin

$R_1$ = $C_1$-$C_4$-Alkyl, $C_1$-$C_4$-Alkoxy, Cl, Br, $SO_3H$, COOH

$R_2$ = H, $C_1$-$C_4$-Alkyl, COOH, $CH_2SO_3H$

$R_3$ = H, $SO_3H$, $CH_2SO_3H$, Cl, $CONH_2$, Carbonsäure-mono- und -di-$C_1$-$C_4$-alkylamid, $C_1$-$C_4$-Alkylsulfonyl

$R_4$ = $CH_3$, COOH

$R_5$ =

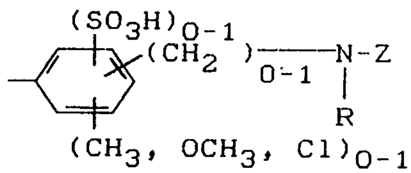

$R_6$ =

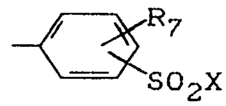

| | |
|---|---|
| $R_7$ = | H, $C_1$-$C_4$-Alkyl, $C_1$-$C_4$-Alkoxy, Cl, Br, COOH, $SO_3H$ |
| $R_8$ = | H, $C_1$-$C_4$-Alkyl, $C_1$-$C_4$-Alkoxy, Acylamino, insbesondere $C_1$-$C_4$-Alkylcarbonylamino, $C_1$-$C_4$-Alkylsulfonylamino, Aminocarbonylamino, gegebenenfalls substituiertes Phenylcarbonylamino, Cl, Br |
| $R_9$ = | H, $C_1$-$C_4$-Alkyl, $C_1$-$C_4$-Alkoxy, OH, $SO_3H$. |
| $R_{10}$ = | H, gegebenenfalls substituiertes Alkyl |
| $R_{11}$ = | H, gegebenenfalls substituiertes Alkyl oder zusammen mit $R_{10}$ Alkylen, vorzugsweise $-CH_2-CH_2-$, |
| T = | Cl, Br, $C_1$-$C_4$-Alkoxy, gegebenenfalls substituiertes Phenoxy, |
| $R_{12}$ = | H, $C_1$-$C_4$-Alkyl, $C_1$-$C_4$-Alkoxy, OH, Halogen, COOH, $NO_2$, $SO_3H$, Sulfonamido, $C_1$-$C_4$-Alkyl-carbonylamino, gegebenenfalls substituiertes Phenylcarbonylamino, $C_1$-$C_4$-Alkylsulfonylamino, gegebenenfalls substituiertes Phenylsulfonylamino |
| Me = | zweiwertiges Metallatom, vorzugsweise Fe, Cu, Zn, Co, Ni |
| l,m,n,p = | 0 oder 1 wobei l ≠ m, n ≠ p, l ≠ n und m ≠ p |
| G = | aliphatisches, araliphatisches oder aromatisches Brückenglied und |
| B' = | |

$-(CH_2)_{2-4}-$, 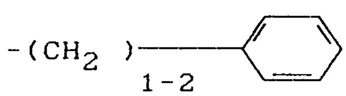 , 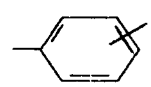

bedeuten.

**3.** Metallfreie sekundäre Disazofarbstoffe der Formel

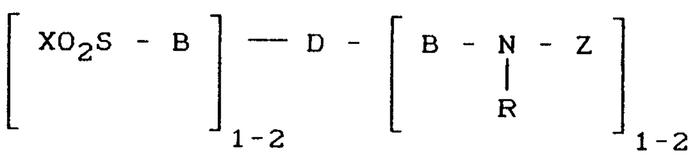 (1)

worin
X, Y, B, R und Z die in Anspruch 1 angegebene Bedeutung aufweisen,
dadurch gekennzeichnet, daß sie einer der folgenden Formeln (31) bis (35) entsprechen

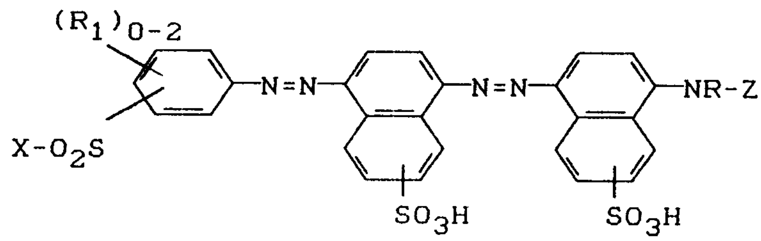

(31)

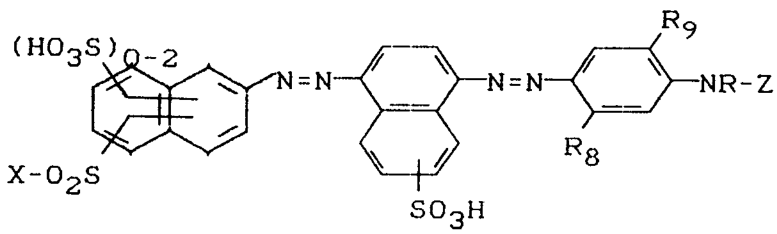

(32)

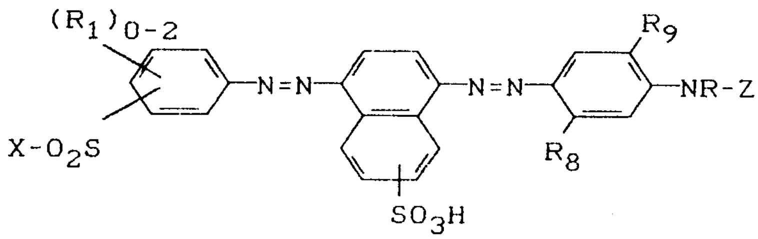

(33)

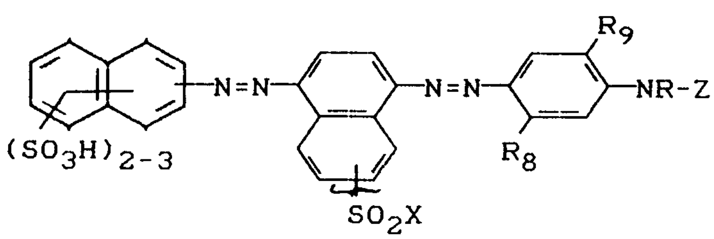

(34)

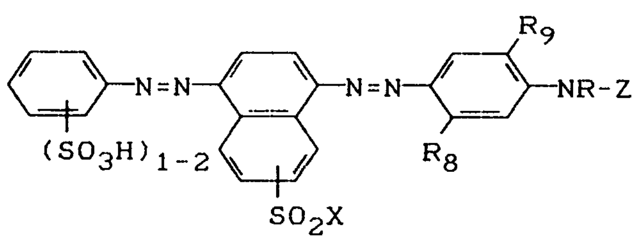

(35)

worin bedeuten

$R_1$ = $C_1$-$C_4$-Alkyl, $C_1$-$C_4$-Alkoxy, C1, Br, $SO_3H$, COOH

$R_8$ = H, $C_1$-$C_4$-Alkyl, $C_1$-$C_4$-Alkoxy, Acylamino, insbesondere $C_1$-$C_4$-Alkylcarbonylamino, $C_1$-$C_4$-Alkylsulfonylamino, Aminocarbonylamino, gegebenenfalls substituiertes Phenylcarbonylamino, Cl, Br

$R_9$ = H, $C_1$-$C_4$-Alkyl, $C_1$-$C_4$-Alkoxy, OH, $SO_3H$.

**4.** Farbstoffe der Ansprüche 1 bis 3 mit

X = $-CH_2CH_2OSO_3H$ oder $-CH = CH_2$

Z =

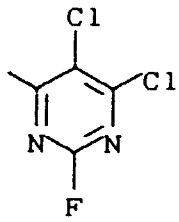 , 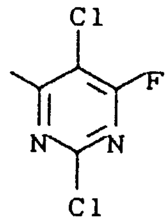 , 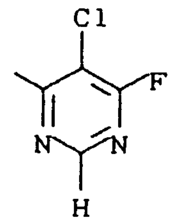

(a) (b)

oder Gemisch aus 40 - 96 Mol% (b) und 60-4 Mol% (a).

## Claims

**1.** Reactive dyestuffs of the formula

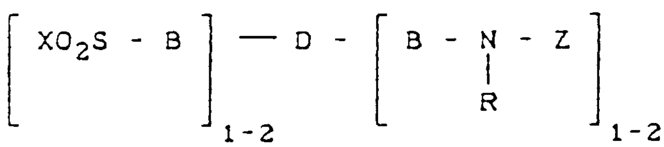 (1)

in which

- D is the radical of a dyestuff of the metal-free monoazo, metal-containing monoazo, anthraquinone, formazan and dioxazine series,
- X is $CH=CH_2$ or $CH_2CH_2$-Y in which
- Y is a radical which can be eliminated by alkali, for example $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3^+A^-$,
- B is a direct bond or a bridge member to a ring carbon atom of an aromatic-carbocyclic ring or to a ring carbon atom or nitrogen atom of an aromatic-heterocyclic ring in D
- R is H or substituted or unsubstituted $C_1$-$C_4$-alkyl
- Z is a fibre-reactive radical of the formula

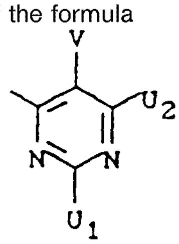 (2)

in which

- V is H, Cl or Br
- $U_1$, $U_2$ are H, Cl, F with the proviso that $U_1$ is different from $U_2$ and one of the radicals represents F.

**2.** Dyestuffs of Claim 1 of the formulae

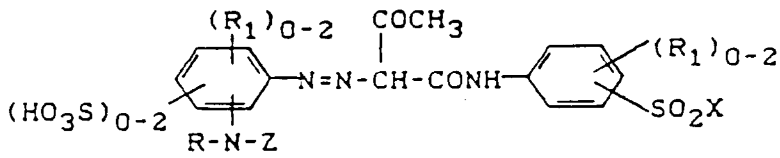

(3)

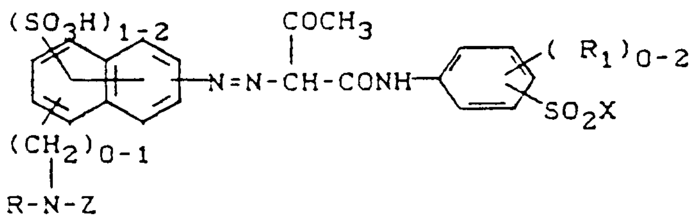

(4)

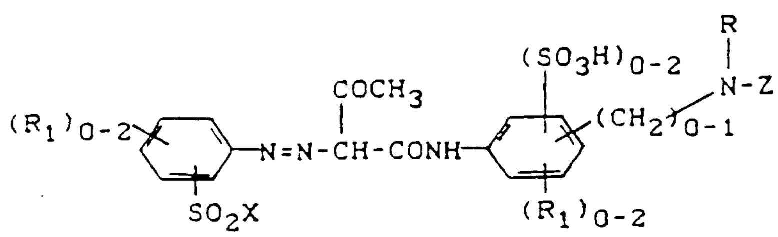

(5)

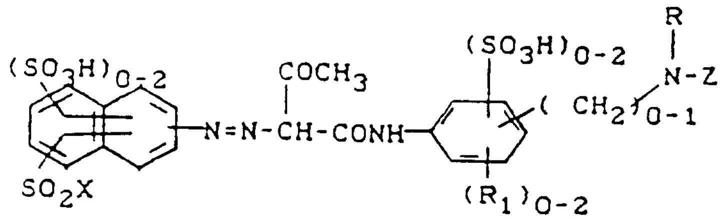

(6)

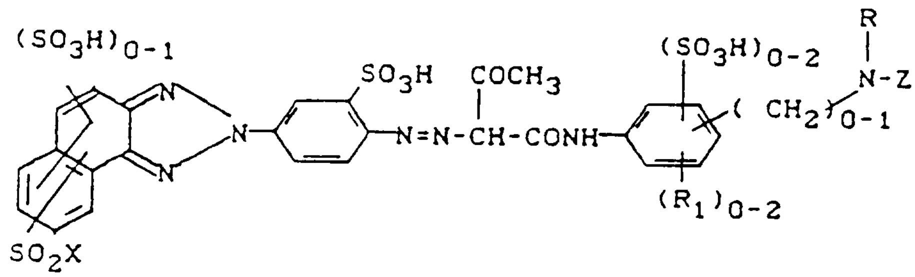

(7)

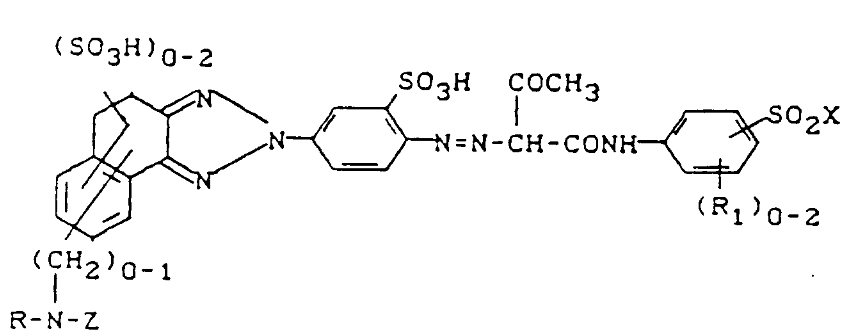

(8)

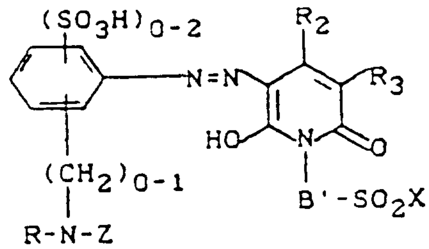

(9)

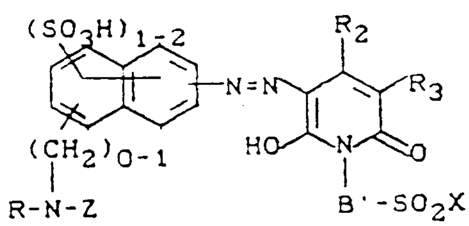

(10)

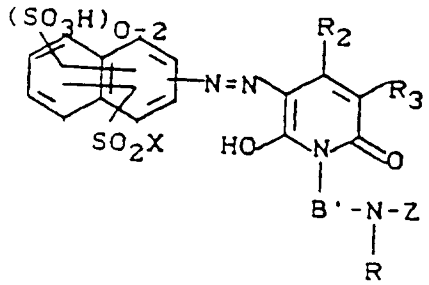
(11)

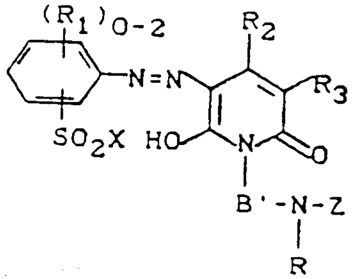
(12)

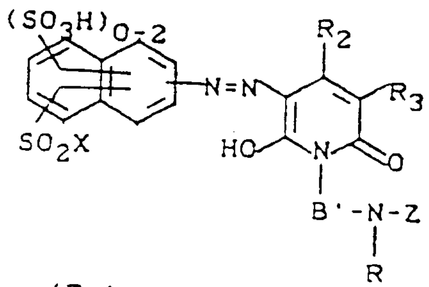
(13)

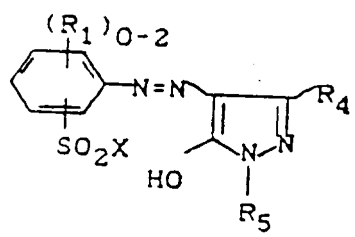
(14)

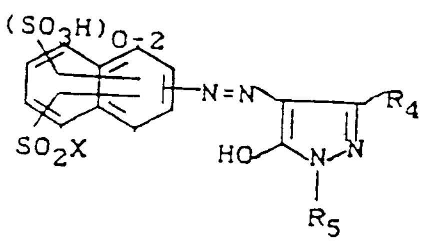
(15)

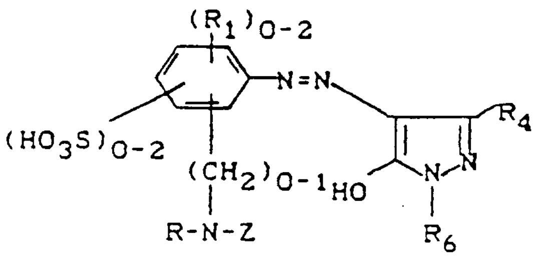

(16)

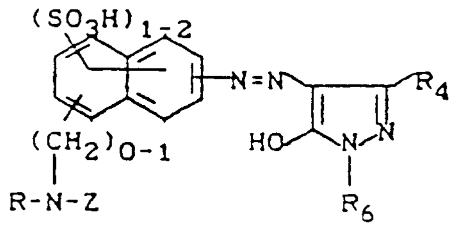

(17)

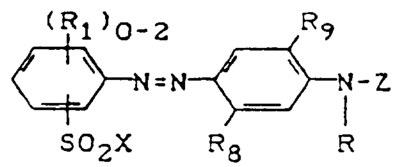

(18)

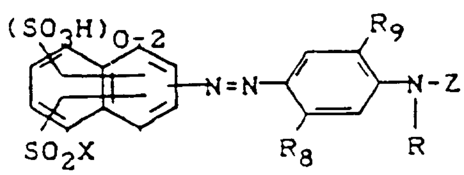

(19)

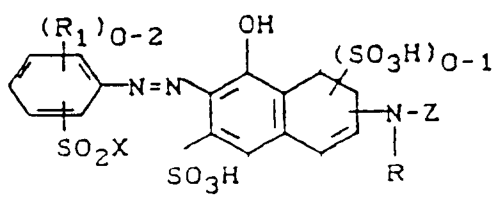

(20)

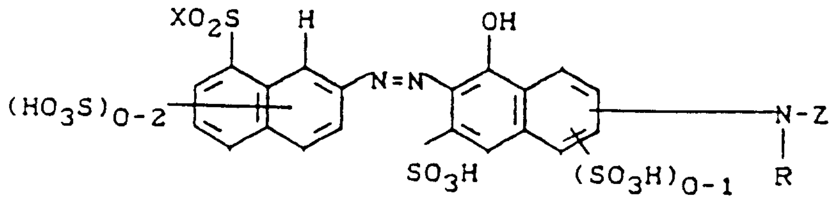

(21)

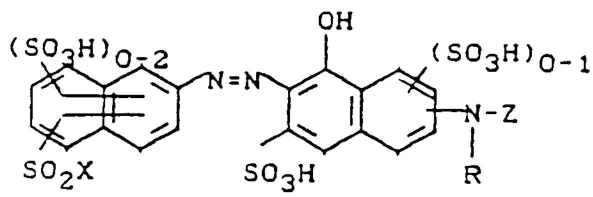

(22)

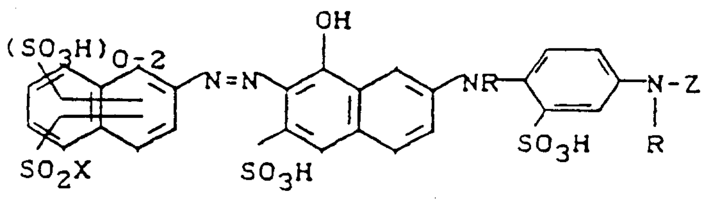

(23)

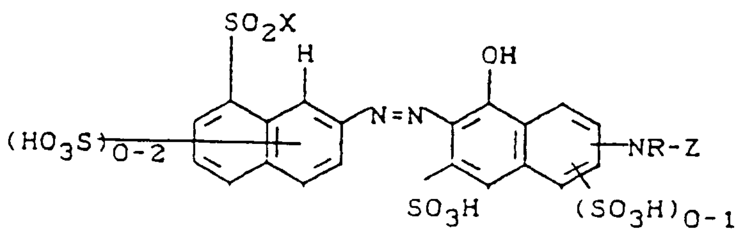

(24)

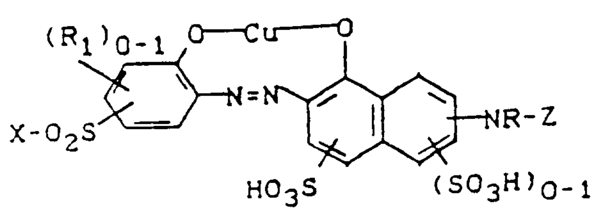

(25)

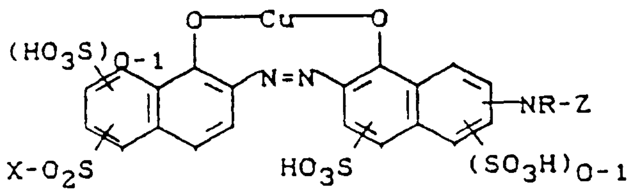

(26)

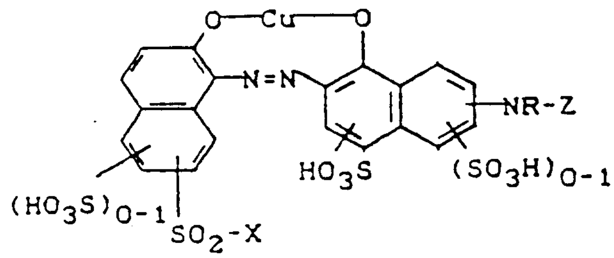

(27)

1:2 metal complexes of dyestuffs

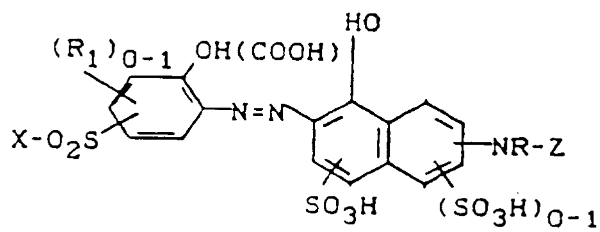

in particular the Cr and Co complexes which contain two dyestuffs (28) or one dyestuff (28) and any other desired metal complex-forming dyestuff, in particular an azo or azomethine dyestuff

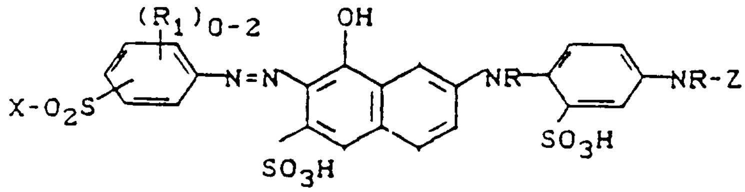

(29)

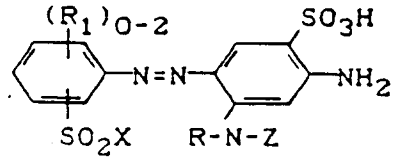

(30)

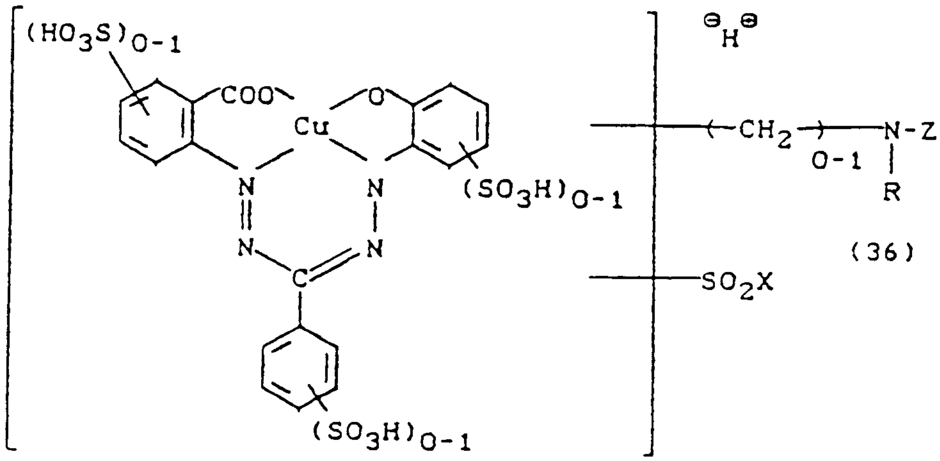

(36)

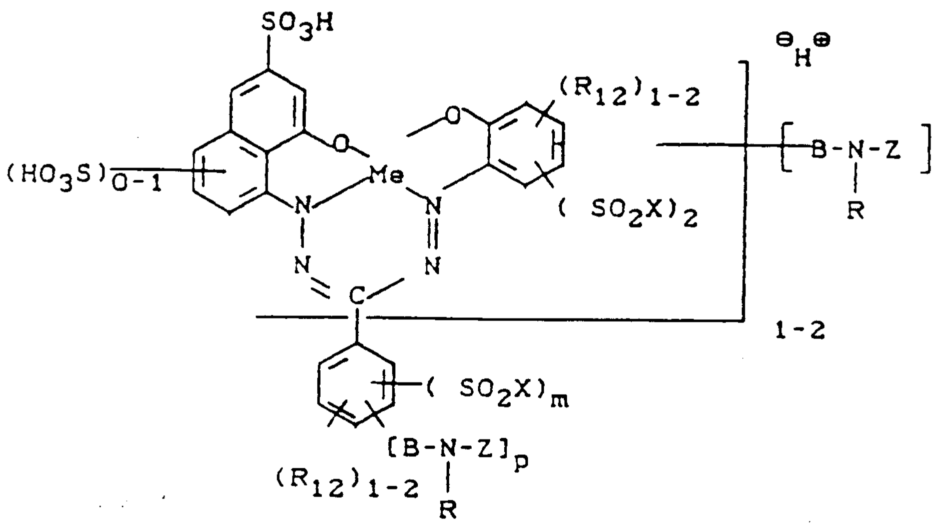

(37)

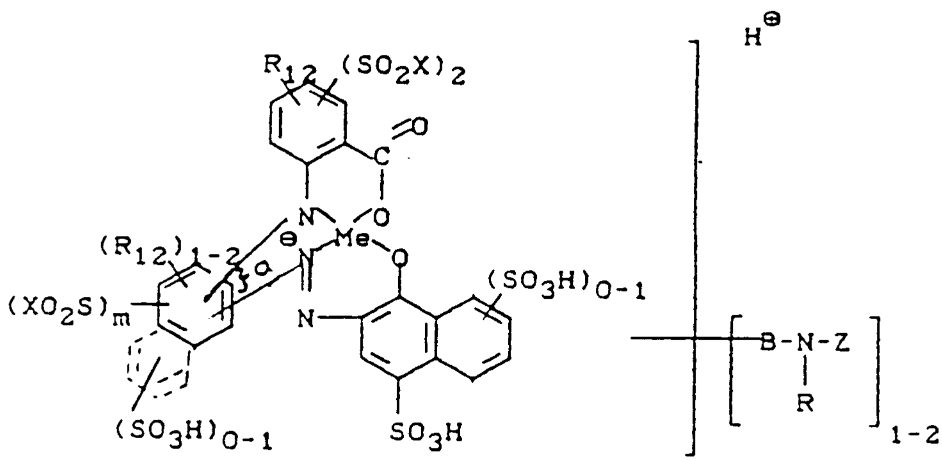

(38)

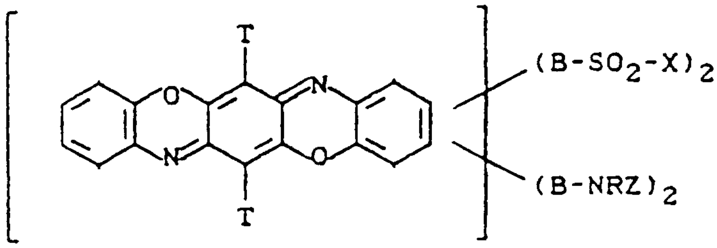

(39)

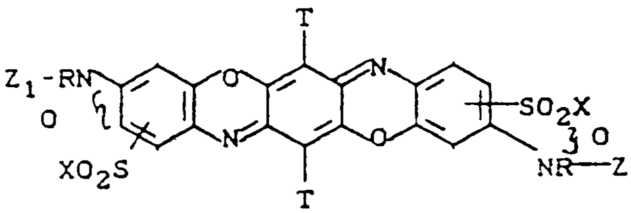

(40)

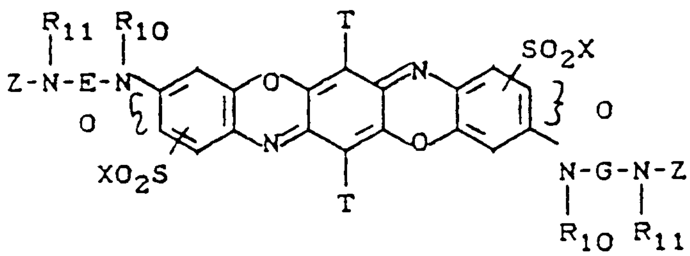

(41)

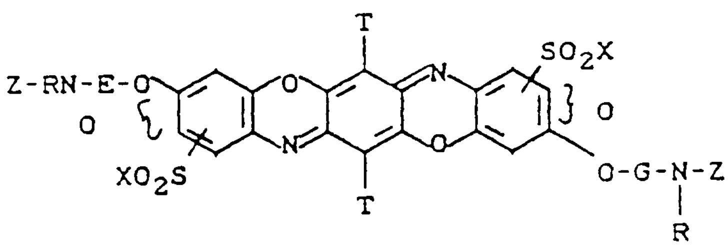

(42)

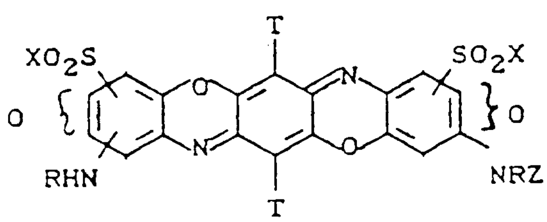

(43)

in which

- $R_1$ denotes $C_1$-$C_4$-alkyl, $C_1$-$C_4$-alkoxy, Cl, Br, $SO_3H$, COOH,
- $R_2$ denotes H, $C_1$-$C_4$-alkyl, COOH, $CH_2SO_3H$,
- $R_3$ denotes H, $SO_3H$, $CH_2SO_3H$, Cl, $CONH_2$, mono- and di-$C_1$-$C_4$-alkylcarboxamide, $C_1$-$C_4$-alkylsulphonyl,
- $R_4$ denotes $CH_3$, COOH,
- $R_5$ denotes

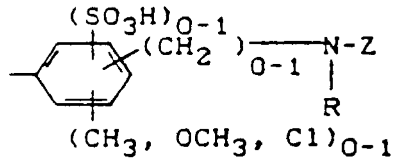

R6 denotes

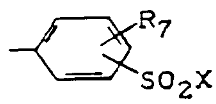

$R_7$ denotes H, $C_1$-$C_4$-alkyl, $C_1$-$C_4$-alkoxy, Cl, Br, COOH, $SO_3H$,

$R_8$ denotes H, $C_1$-$C_4$-alkyl, $C_1$-$C_4$-alkoxy, acylamino, in particular $C_1$-$C_4$-alkylcarbonylamino, $C_1$-$C_4$-alkylsulphonylamino, aminocarbonylamino, substituted or unsubstituted phenylcarbonylamino, Cl, Br,

$R_9$ denotes H, $C_1$-$C_4$-alkyl, $C_1$-$C_4$-alkoxy, OH, $SO_3H$,

$R_{10}$ denotes H, substituted or unsubstituted alkyl,

$R_{11}$ denotes H, substituted or unsubstituted alkyl or together with $R_{10}$ denotes alkylene, preferably $-CH_2-CH_2-$,

T denotes Cl, Br, $C_1$-$C_4$-alkoxy, substituted or unsubstituted phenoxy,

$R_{12}$ denotes H, $C_1$-$C_4$-alkyl, $C_1$-$C_4$-alkoxy, OH, halogen, COOH, $NO_2$, $SO_3H$, sulphonamido, $C_1$-$C_4$-alkylcarbonylamino, substituted or unsubstituted phenylcarbonylamino, $C_1$-$C_4$-alkylsulphonylamino, substituted or unsubstituted phenylsulphonylamino,

Me denotes a divalent metal atom, preferably Fe, Cu, Zn, Co, Ni

l, m, n, p denote 0 or 1 where l ≠ m, n ≠ p, l ≠ n and m ≠ p,

G denotes an aliphatic, araliphatic or aromatic bridge member and

B' denotes

$-(CH_2)_{2-4}-$, 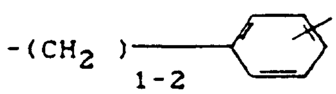 , 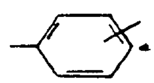

3. Metal-free secondary disazo dyestuffs of the formula

$$\left[ XO_2S - B \right]_{1-2} - D - \left[ B - \underset{\displaystyle R}{\underset{|}{N}} - Z \right]_{1-2} \qquad (1)$$

in which
X, Y, B, R and Z have the meaning indicated in Claim 1,
characterized in that they correspond to one of the following formulae (31) to (35)

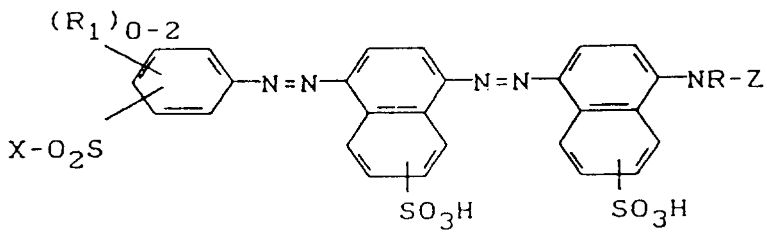 (31)

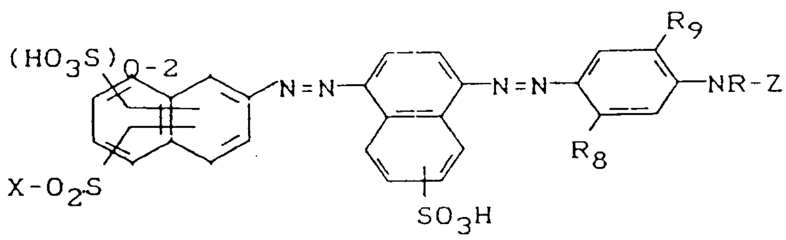 (32)

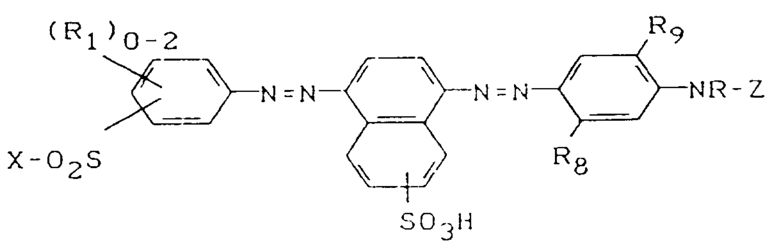 (33)

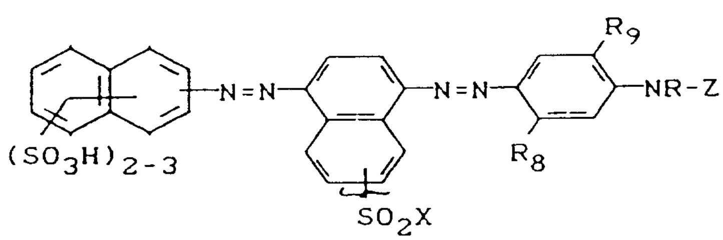 (34)

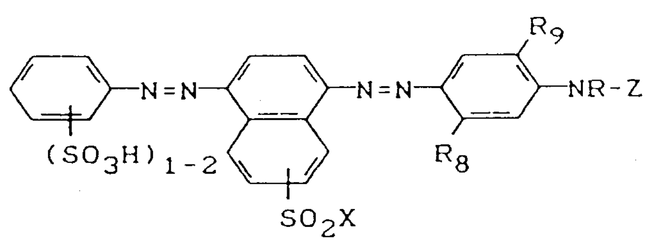 (35)

in which
$R_1$ is $C_1$-$C_4$-alkyl, $C_1$-$C_4$-alkoxy, Cl, Br, $SO_3H$, COOH
$R_8$ is H, $C_1$-$C_4$-alkyl, $C_1$-$C_4$-alkoxy, acylamino, in particular $C_1$-$C_4$-alkylcarbonylamino, $C_1$-$C_4$alkylsulphonylamino, aminocarbonylamino, optionally substituted phenylcarbonylamino, Cl, Br
$R_9$ is H, $C_1$-$C_4$-alkyl, $C_1$-$C_4$-alkoxy, OH, $SO_3H$.

**4.** Dyestuffs of Claims 1 to 3 in which
X is $-CH_2CH_2OSO_3H$ or $-CH = CH_2$,

Z is

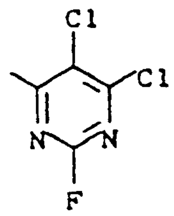 , 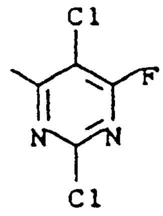 , 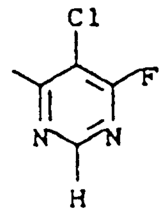

(a) (b)

or a mixture of 40 - 96 mol % of (b) and 60-4 mol % of (a).

## Revendications

**1.** Colorants réactifs de formule

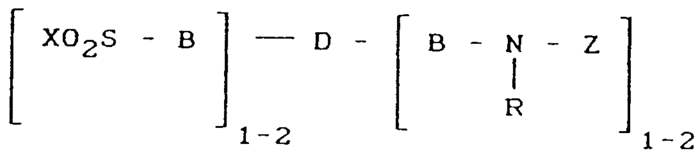 (1)

dans laquelle

- D est le reste d'un colorant de la série monoazoïque non métallique, monoazoïque métallique, anthraquinone, formazane ou dioxazine,
- X est un groupe $CH=CH_2$ ou $CH_2CH_2$-Y, dans lequel
- Y est un reste éliminable par voie alcaline, par exemple $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3{}^+A^-$,
- B est une liaison directe ou un pont lié à un atome cyclique de carbone d'un noyau aromatique-carbocyclique ou à un atome cyclique de carbone ou d'azote d'un noyau aromatique-hétérocyclique présent dans D
- R représente l'hydrogène ou un groupe alkyle en $C_1$ à $C_4$ éventuellement substitué
- Z est un reste réactif envers la fibre, de formule

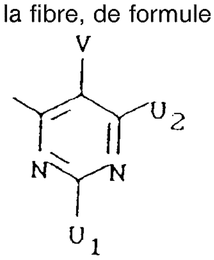 (2)

dans laquelle

- V représente H, Cl ou Br
- $U_1$ et $U_2$ représentent H, Cl, F, sous réserve que $U_1$ soit différent de $U_2$ et que l'un des restes représente du fluor.

**2.** Colorants suivant la revendication 1, de formules

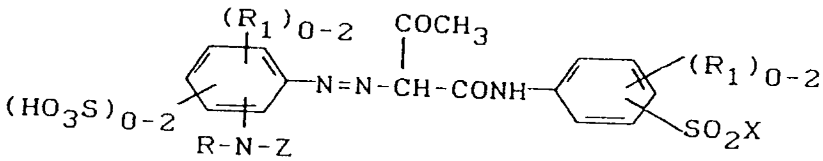

(3)

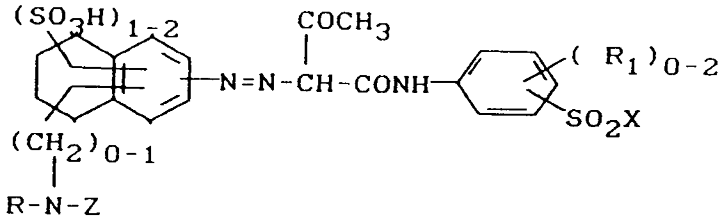

(4)

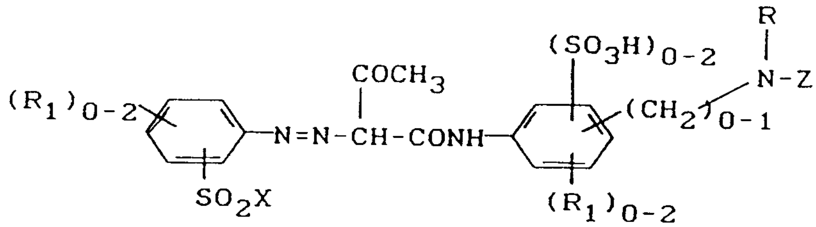

(5)

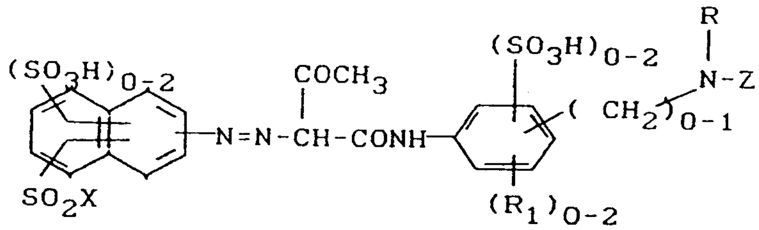

(6)

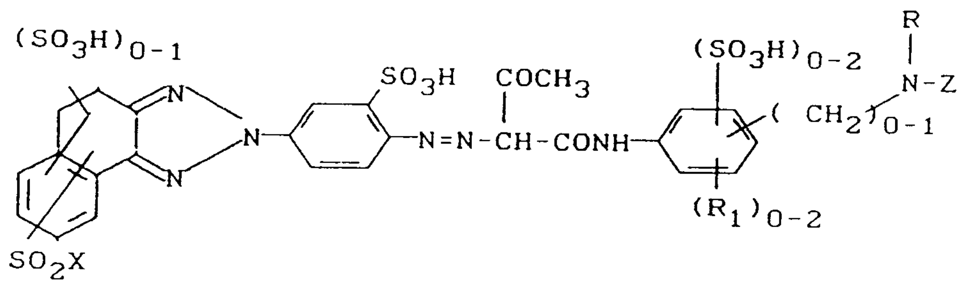

(7)

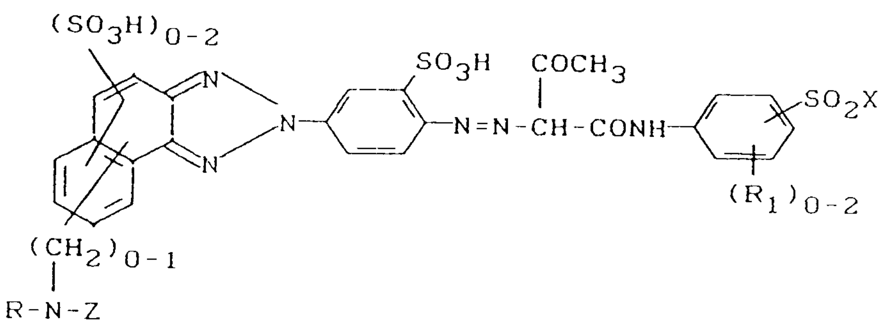

(8)

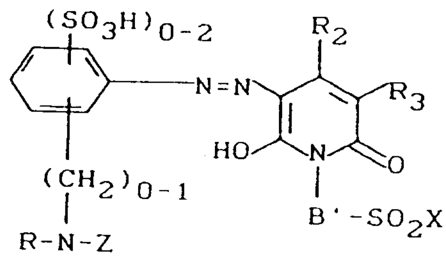

(9)

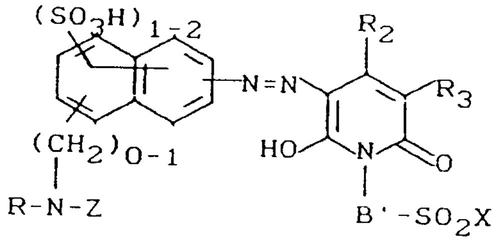

(10)

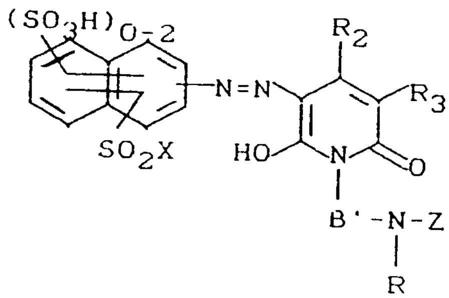

(11)

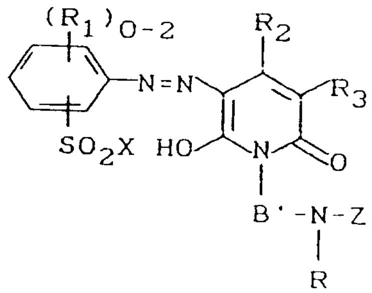

(12)

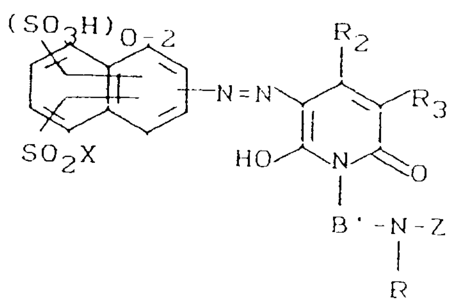

(13)

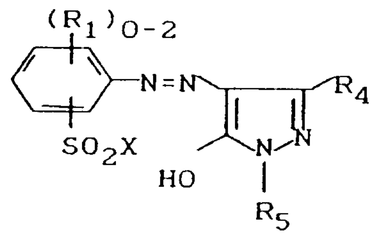

(14)

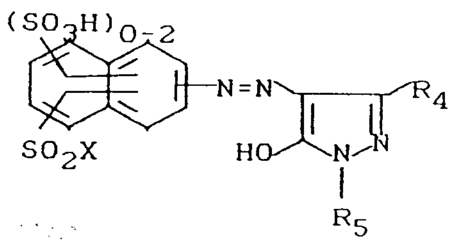

(15)

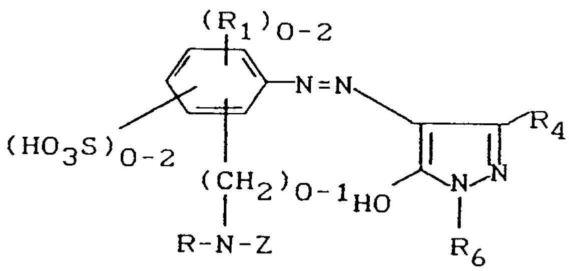

(16)

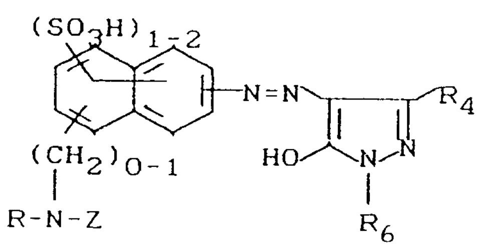

(17)

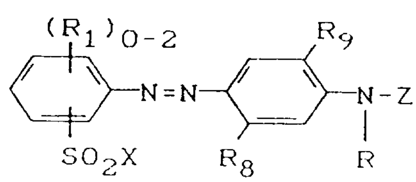

(18)

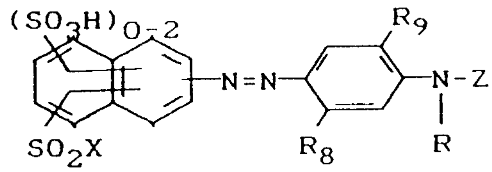

(19)

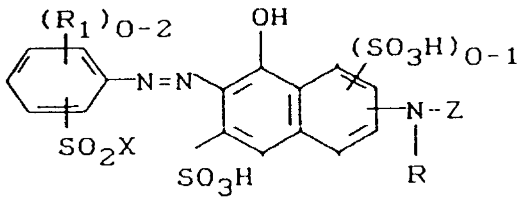

(20)

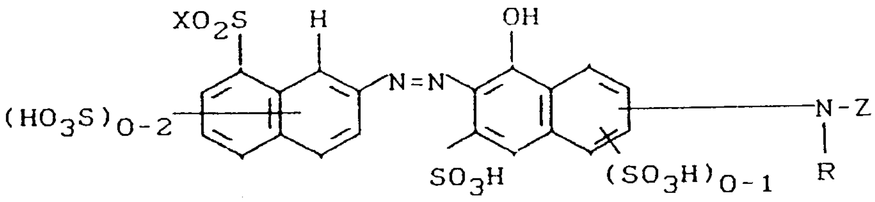

(21)

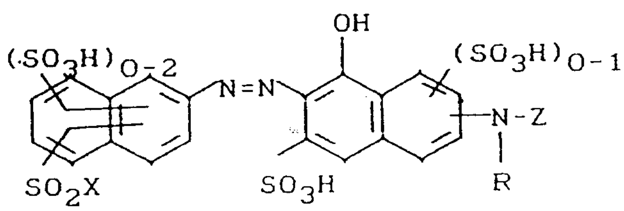

(22)

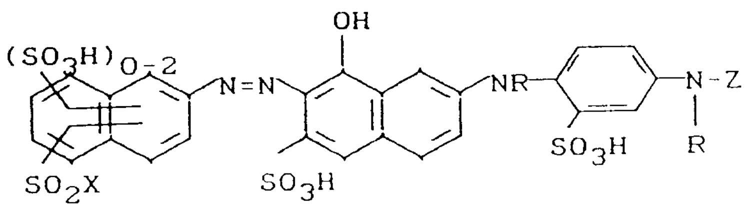

(23)

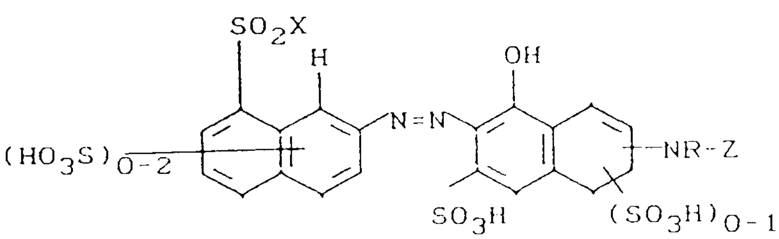

(24)

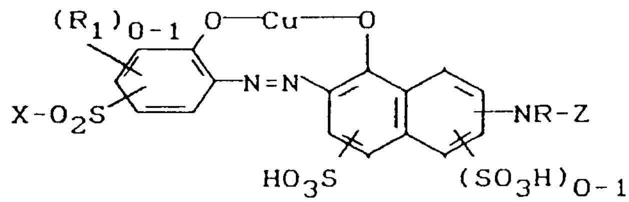

(25)

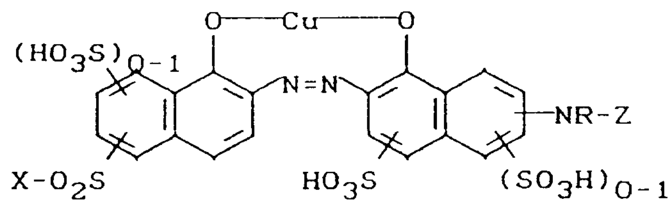

(26)

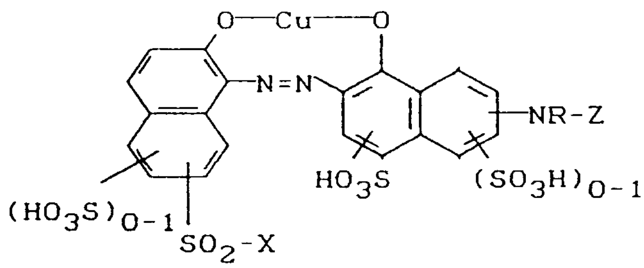

(27)

complexes de métal à 1:2 de colorants

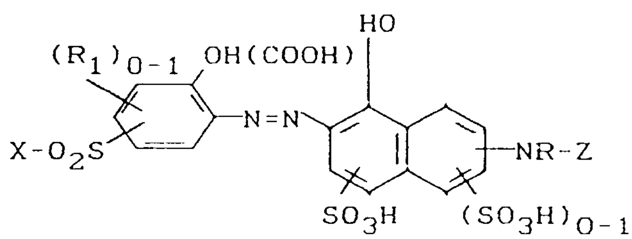

(28)

notamment complexes de Cr et de Co qui contiennent deux colorants (28) ou un colorant (28) et un autre colorant quelconque formant un complexe métallique, notamment un colorant azoïque ou colorant d'azométhine

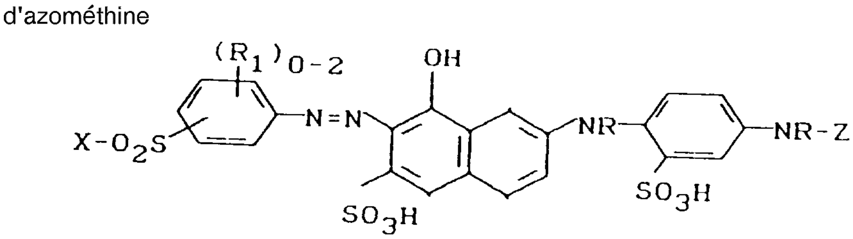

(29)

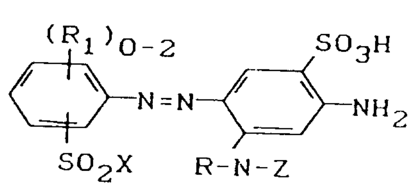

(30)

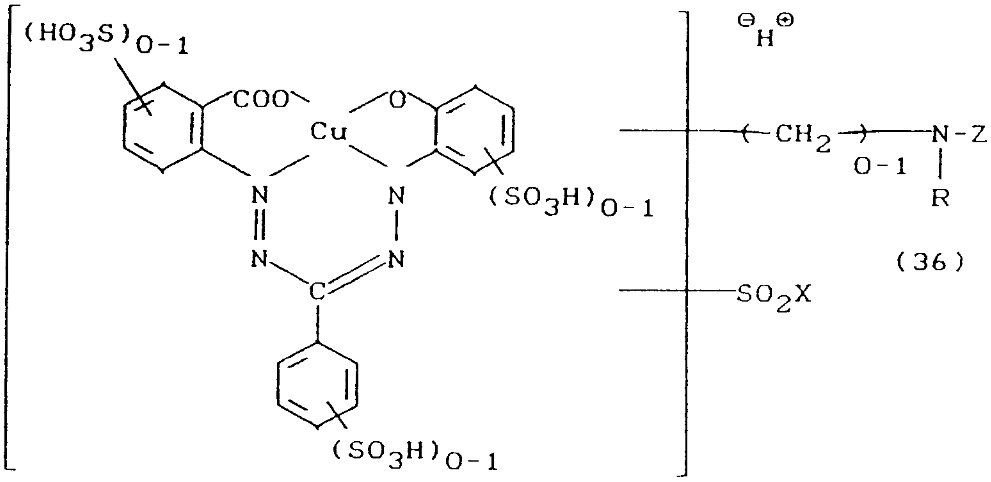

(36)

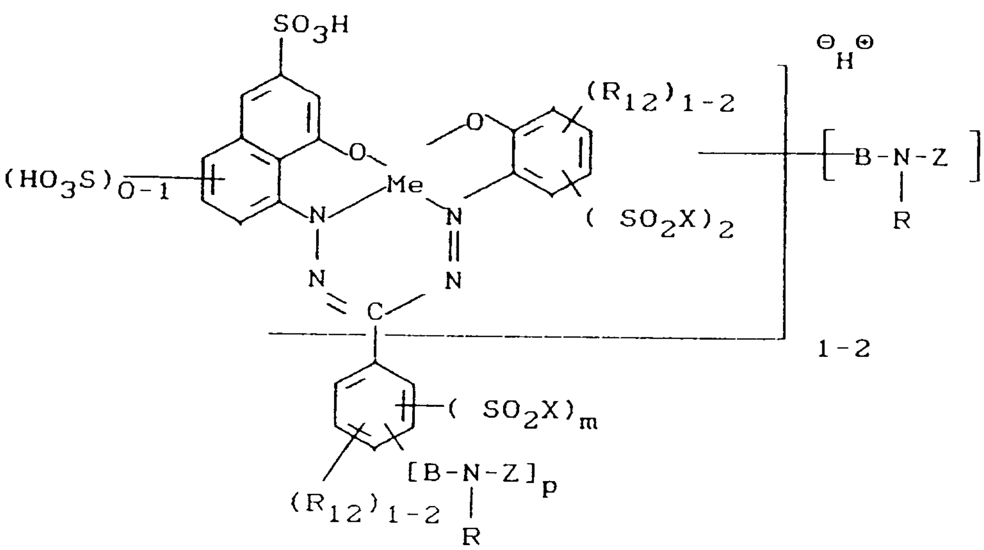

(37)

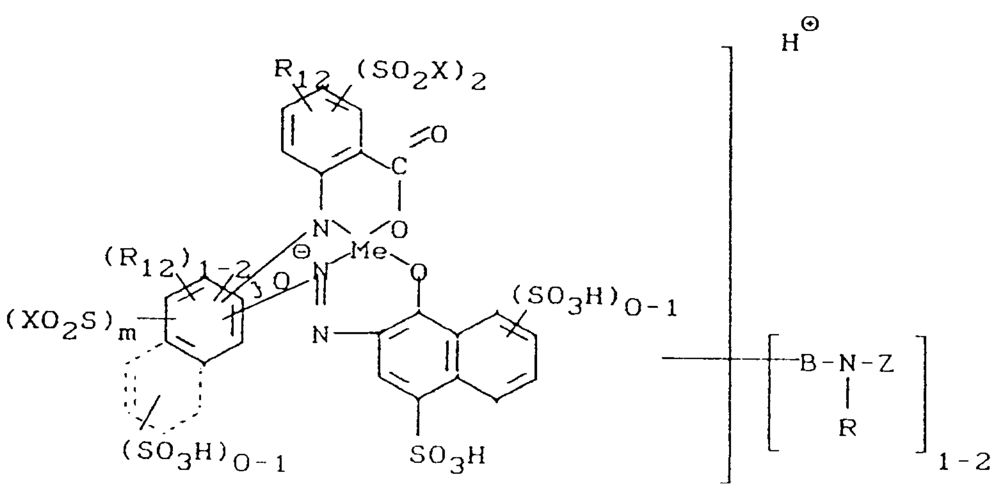

(38)

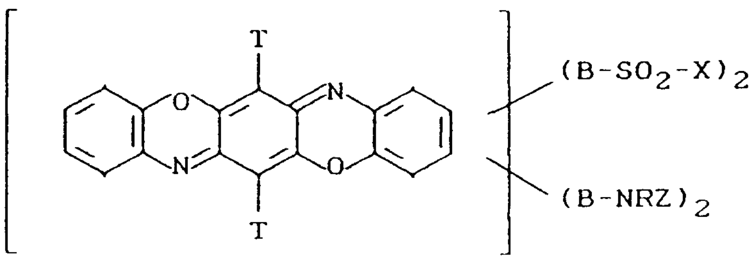

(39)

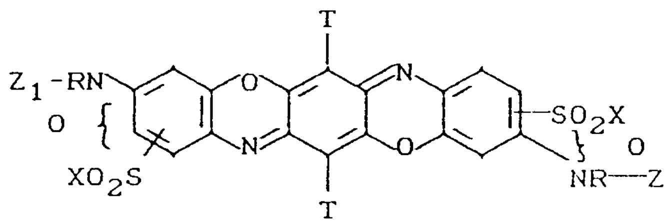

(40)

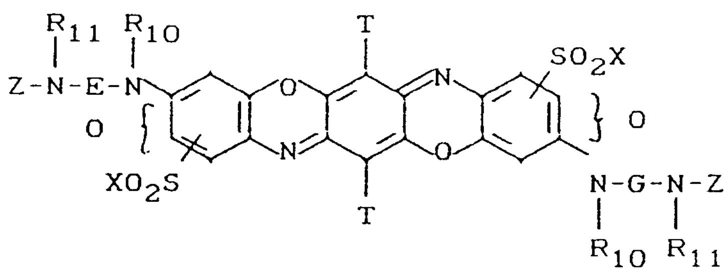

(41)

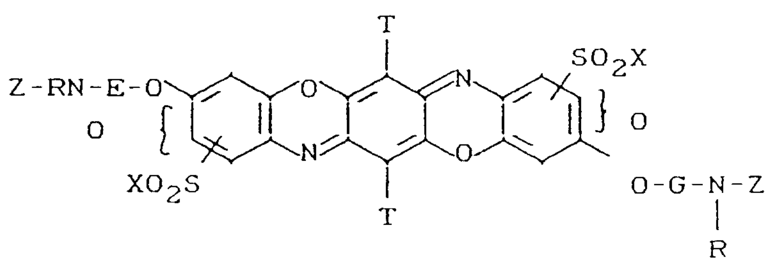

(42)

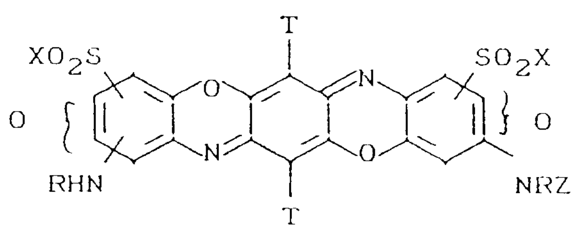

(43)

où

| | |
|---|---|
| $R_1$ | est un groupe alkyle en $C_1$ à $C_4$, alkoxy en $C_1$ à $C_4$, Cl, Br, $SO_3H$, COOH |
| $R_2$ | représente H, un groupe alkyle en $C_1$ à $C_4$, COOH, $CH_2SO_3H$ |
| $R_3$ | représente H, un groupe $SO_3H$, $CH_2SO_3H$, Cl, $CONH_2$, mono- et di-(alkyle en $C_1$ à $C_4$)amide d'acide carboxylique, alkylsulfonyle en $C_1$ à $C_4$ |
| $R_4$ | représente $CH_3$, COOH |
| $R_5$ | est un groupe |

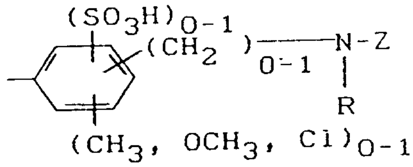

| | |
|---|---|
| $R_6$ | est un groupe |

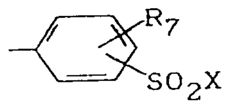

| | |
|---|---|
| $R_7$ | représente H, un groupe alkyle en $C_1$ à $C_4$, alkoxy en $C_1$ à $C_4$, Cl, Br, COOH, $SO_3H$ |
| $R_8$ | représente H, un groupe alkyle en $C_1$ à $C_4$, alkoxy en $C_1$ à $C_4$, acylamino, notamment (alkyle en $C_1$ à $C_4$)carbonylamino, alkylsulfonylamino en $C_1$ à $C_4$, aminocarbonylamino, phénylcarbonylamino éventuellement substitué, Cl, Br |
| $R_9$ | représente H, un groupe alkyle en $C_1$ à $C_4$, alkoxy en $C_1$ à $C_4$, OH, $SO_3H$ |
| $R_{10}$ | représente H, un groupe alkyle éventuellement substitué |
| $R_{11}$ | représente H, un groupe alkyle éventuellement substitué ou forme conjointement avec $R_{10}$ un groupe alkylène, de préférence $-CH_2-CH_2-$, |
| T | représente Cl, Br, un groupe alkoxy en $C_1$ à $C_4$, phénoxy éventuellement substitué |
| $R_{12}$ | représente H, un groupe alkyle en $C_1$ à $C_4$, alkoxy en $C_1$ à $C_4$, OH, un halogène, un groupe COOH, $NO_2$, $SO_3H$, sulfonamido, (alkyle en $C_1$ à $C_4$)carbonylamino, phénylcarbonylamino éventuellement substitué, alkylsulfonylamino en $C_1$ à $C_4$, phénylsulfonylamino éventuellement substitué |
| Me | est un atome de métal divalent, de préférence Fe, Cu, Zn, Co, Ni |
| l, m, n , p | ont la valeur 0 ou 1, avec l ≠ m, n ≠ p, l ≠ n et m ≠ p, |
| G | est un pont aliphatique, araliphatique ou aromatique et |
| B' | représente |

$-(CH_2)_{2-4}-$ , 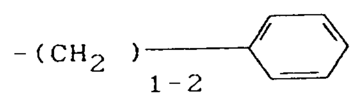 , 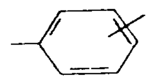

**3.** Colorants disazoïques secondaires non métalliques, de formule

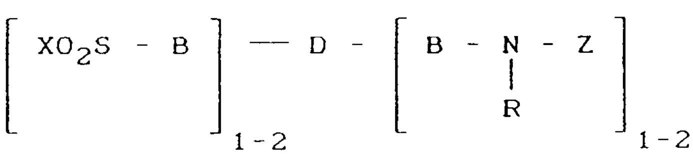 (1)

dans laquelle
X, Y, B, R et Z ont la définition indiquée dans la revendication 1, caractérisés en ce qu'ils répondent à l'une des formules (31) à (35) suivantes

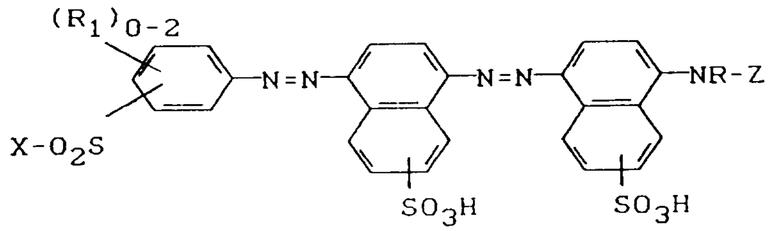

(31)

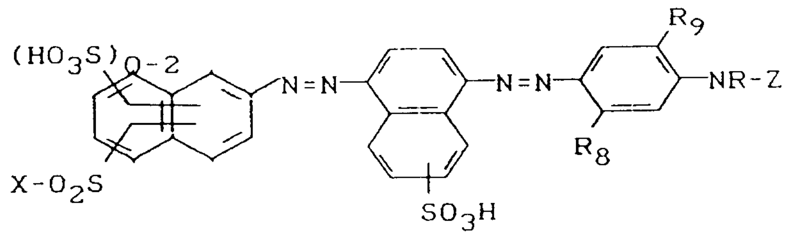

(32)

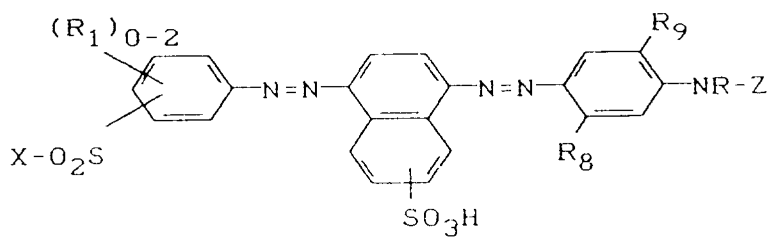

(33)

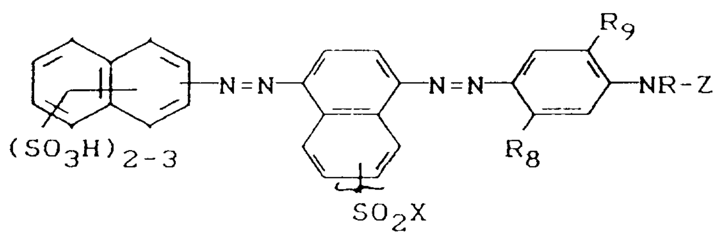

(34)

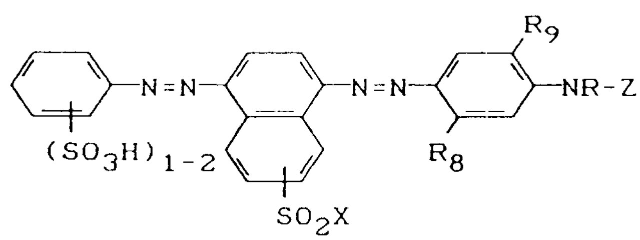

(35)

où

- $R_1$ est un groupe alkyle en $C_1$ à $C_4$, alkoxy en $C_1$ à $C_4$, Cl, Br, $SO_3H$, COOH
- $R_8$ représente H, un groupe alkyle en $C_1$ à $C_4$, alkoxy en $C_1$ à $C_4$, acylamino, notamment (alkyle en $C_1$ à $C_4$)carbonylamino, alkylsulfonylamino en $C_1$ à $C_4$, aminocarbonylamino, phénylcarbonylamlno éventuellement substitué, Cl, Br
- $R_9$ représente H, un groupe alkyle en $C_1$ à $C_4$, alkoxy en $C_1$ à $C_4$, OH, $SO_3H$.

**4.** Colorants suivant les revendications 1 à 3, dans lesquels

- X est un groupe $-CH_2CH_2OSO_3H$ ou $-CH = CH_2$,
- Z représente

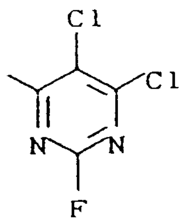 , 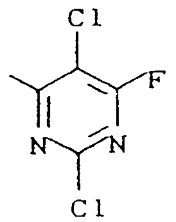 , 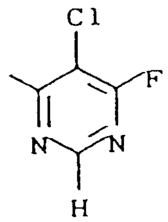

(a) (b)

ou un mélange de 40 à 96 moles % de (b) et de 60 à 4 moles % de (a).